# EUROPEAN PATENT APPLICATION

(11) **EP 4 844 517 A1**
(43) Date of publication of application: **25.11.2026**
(21) Application number: 25741647.9
(22) Date of filing: 18.01.2025
(51) Int. Cl.: G05D 1/43, G06V 20/58, B63C 11/52, E04H 4/16, B25J 11/00, G01C 21/20, G06V 20/56, G06T 17/05, G06V 10/75, G06V 10/40, G06T 7/50, G06T 7/73, G06T 7/246, G06T 7/33, G06T 7/62, G05D 1/249

(54) **VISUAL INFORMATION APPLICATION METHOD AND APPARATUS, AND POOL CLEANING ROBOT**

(30) Priority: 18.01.2024 CN 202410078128; 25.03.2024 CN 202410344782; 18.07.2024 CN 202410967347; 26.11.2024 CN 202411702309
(71) Applicant: Wybotics Co., Ltd, Tianjin 300462 (CN)
(72) Inventor: HUO, Feng, Tianjin 300462 (CN); CHE, Lixuan, Tianjin 300462 (CN); WANG, Xinyue, Tianjin 300462 (CN); GUO, Xiaojun, Tianjin 300462 (CN)
(74) Representative: advotec.
(86) International application number: PCT/CN2025/073160
(87) International publication number: WO 2025/153085

(57) **Abstract**

A visual information application method and apparatus, and a pool cleaning robot. The method comprises: 201, acquiring visual information collected by a pool cleaning robot; 202, controlling the pool cleaning robot on the basis of the visual information; or 203, processing the visual information on the basis of a preset mode.

## Description

### CROSS-REFERENCE TO RELATED APPLICATIONS

This disclosure claims priority to Chinese Patent Application No. 2024100781283, filed on January 18, 2024 and entitled "Control Method and Apparatus for Underwater Cleaning Robot, and Underwater Cleaning Robot"; Chinese Patent Application No. 2024103447824, filed on March 25, 2024 and entitled "Target Tracking Method and Apparatus for Underwater Cleaning Robot, and Underwater Cleaning Robot"; Chinese Patent Application No. 2024109673477, filed on July 18, 2024 and entitled "Mapping Method and Apparatus for Underwater Cleaning Robot, and Underwater Cleaning Robot"; and Chinese Patent Application No. 2024117023095, filed on November 26, 2024 and entitled "Control Method and Apparatus for Pool Cleaning Robot, and Pool Cleaning Robot," the entire contents of each of which are incorporated herein by reference.

### TECHNICAL FIELD

The disclosure relates to the field of robot technology, and in particular to a method and apparatus for utilizing visual information, and a pool cleaning robot.

### BACKGROUND

With the development of computer technology, robot technology has also developed rapidly. For example, a user uses a sweeping robot to clean a floor of a house, uses a window cleaning robot to clean a window of the house, and uses a pool cleaning robot to clean a pool.

### SUMMARY

Embodiments of the disclosure provide a method and apparatus for utilizing visual information, and a pool cleaning robot. The technical solutions are as follows.

In an aspect, a method for utilizing visual information is provided. The method includes:
obtaining visual information collected by a pool cleaning robot; and
controlling the pool cleaning robot based on the visual information, or processing the visual information in a preset manner.

In an aspect, an apparatus for utilizing visual information is provided. The apparatus includes:
a visual information obtaining module, configured to obtain visual information collected by a pool cleaning robot; and
a utilizing module, configured to control the pool cleaning robot based on the visual information, or process the visual information in a preset manner.

In an aspect, a pool cleaning robot is provided. The pool cleaning robot includes a robot controller, in which the robot controller includes one or more processors and one or more memories, the one or more memories store at least one computer program, and the at least one computer program is loaded and executed by the one or more processors to implement the method for utilizing visual information.

In an aspect, a computer-readable storage medium is provided. The computer-readable storage medium stores at least one computer program, and the at least one computer program is loaded and executed by a processor to implement the method for utilizing visual information.

In an aspect, a computer program product or a computer program is provided. The computer program product or the computer program includes program codes, in which the program codes are stored in a computer-readable storage medium, a processor of a robot controller reads the program codes from the computer-readable storage medium, and the processor executes the program codes, causing the robot controller to execute the method for utilizing visual information.

### BRIEF DESCRIPTION OF THE DRAWINGS

To explain the technical solutions in the embodiments of the disclosure more clearly, the drawings used in the embodiments are briefly introduced below. Obviously, the drawings described below illustrate only some embodiments of the disclosure. Those skilled in the art may obtain other drawings based on these drawings without creative effort.
FIG. 1 is a schematic diagram illustrating a pool cleaning robot in a pool provided in an embodiment of the disclosure.
FIG. 2 is a flowchart illustrating a method for utilizing visual information provided in an embodiment of the disclosure.
FIG. 3 is a flowchart illustrating another method for utilizing visual information provided in an embodiment of the disclosure.
FIG. 4 is a schematic diagram illustrating a step provided in an embodiment of the disclosure.
FIG. 5 is a schematic diagram illustrating another step provided in an embodiment of the disclosure.
FIG. 6 is a schematic diagram illustrating a cleaning path provided in an embodiment of the disclosure.
FIG. 7 is a schematic diagram illustrating another cleaning path provided in an embodiment of the disclosure.
FIG. 8 is a flowchart illustrating yet another method for utilizing visual information provided in an embodiment of the disclosure.
FIG. 9 is a schematic diagram illustrating a contour and a bounding rectangle provided in an embodiment of the disclosure.
FIG. 10 is a schematic diagram illustrating a first cleaning path provided in an embodiment of the disclosure.
FIG. 11 is a schematic diagram illustrating a second cleaning path provided in an embodiment of the disclosure.
FIG. 12 is a schematic diagram illustrating a third cleaning path provided in an embodiment of the disclosure.
FIG. 13 is a flowchart illustrating yet another method for utilizing visual information provided in an embodiment of the disclosure.
FIG. 14 is a flowchart illustrating an implementation of performing feature matching in a mapping process of a pool cleaning robot provided in an embodiment of the disclosure.
FIG. 15 is a schematic diagram illustrating a determination process of target collection position information provided in an embodiment of the disclosure.
FIG. 16 is a schematic diagram illustrating an implementation process of correcting a position drift by a pool cleaning robot provided in an embodiment of the disclosure.
FIG. 17 is a schematic diagram illustrating a determination process of a target weight ratio provided in an embodiment of the disclosure.
FIG. 18 is a flowchart illustrating yet another method for utilizing visual information provided in an embodiment of the disclosure.
FIG. 19 is a flowchart illustrating an implementation of obtaining actual motion information of a pool cleaning robot provided in an embodiment of the disclosure.
FIG. 20 is a schematic diagram illustrating an implementation process of trajectory association of a pool cleaning robot provided in an embodiment of the disclosure.
FIG. 21 is a schematic diagram illustrating a first intersection over union (IoU) between a detection region and a prediction region provided in an embodiment of the disclosure.
FIG. 22 is a schematic diagram illustrating an implementation process of target detection of a pool cleaning robot provided in an embodiment of the disclosure.
FIG. 23 is a schematic diagram illustrating sampling for a small target and a large target by a pool cleaning robot in the related art.
FIG. 24 is a flowchart illustrating yet another method for utilizing visual information provided in an embodiment of the disclosure.
FIG. 25 is a flowchart illustrating yet another method for utilizing visual information provided in an embodiment of the disclosure.
FIG. 26 is a block diagram illustrating an apparatus for utilizing visual information provided in an embodiment of the disclosure.
FIG. 27 is a block diagram illustrating another apparatus for utilizing visual information provided in an embodiment of the disclosure.
FIG. 28 is a block diagram illustrating yet another apparatus for utilizing visual information provided in an embodiment of the disclosure.
FIG. 29 is a block diagram illustrating yet another apparatus for utilizing visual information provided in an embodiment of the disclosure.
FIG. 30 is a block diagram illustrating yet another apparatus for utilizing visual information provided in an embodiment of the disclosure.
FIG. 31 is a block diagram illustrating a pool cleaning robot provided in an embodiment of the disclosure.

### DETAILED DESCRIPTION

In order to make the purpose, technical solutions and advantages of the disclosure clearer, the following further describes the embodiments of the disclosure in detail with reference to the accompanying figures.

In the disclosure, the terms such as "first" and "second" are used to distinguish identical or similar items that have substantially the same functions and effects. It should be understood that "first", "second", and "n-th" do not imply a logical or temporal dependency, nor do they limit the number or execution order.

First, the terms involved in the embodiments of the disclosure are introduced.

Pool cleaning robot: a robot for performing a pool cleaning task. For example, the pool cleaning robot is placed in a pool, and the pool cleaning robot may clean a pool bottom. In some embodiments, the pool cleaning robot also has a wall-climbing function, and is able to clean areas such as a pool wall and steps.

Computer vision: computer vision is a science that studies how to make a machine "see". Further, computer vision refers to using an image capture device and a computer to replace human eyes for machine vision such as target recognition, tracking and measurement, and further performing graphics processing, so that the computer is able to process an image more suitable for human observation or transmission to an instrument for detection. As a scientific discipline, computer vision studies related theories and technologies, attempting to establish an artificial intelligence system that is able to obtain "information" from an image or multi-dimensional data.

Target detection: target detection refers to a process in which one or more special targets (or one or more types of targets) are distinguished from other targets (or other types of targets). Target detection includes both identification of two very similar targets and identification of one type of target from other types of targets. In embodiments of the disclosure, target detection includes detecting a target to be cleaned and recognizing an obstacle.

Semantic segmentation: semantic segmentation is to classify each pixel point in an image, determine a category of each point, thus performing region division. In embodiments of the disclosure, semantic segmentation is used to segment a pool bottom, a pool wall and steps in a pool.

Visual detection: visual detection refers to using a machine to replace human eyes for measurement and judgment via a machine vision system. The machine vision system uses image processing technology and computer vision technology to perform various processing on an image captured by a robot, so as to realize the function of automatically detecting and recognizing a target object.

Target environment map: target environment map is a visual data structure that is used to describe and represent various features and information in an environment in a target space. The features may include terrain, landform, buildings, etc., and the information may include position, shape, size, color, etc.

Inertial measurement unit: inertial measurement unit is a device that measures the motion state of an object via the inertial principle, usually composed of a gyroscope and an accelerometer. The inertial measurement unit is able to perceive the acceleration and angular velocity of a robot in real time, thus calculating the posture and position change of the robot. The inertial measurement unit has a high update rate and dynamic performance, suitable for measurement in high-speed motion and complex environments.

Encoder: encoder is a device that calculates the motion displacement of an object by measuring the number of pulse signals, and is usually used with rotating components such as a motor. The encoder is able to provide accurate rotation angle and speed information for measuring mechanical motion.

Flow meter: flow meter is a device for measuring water flow velocity, commonly used in fields such as underwater robots and waterway monitoring. The flow meter is able to calculate the flow velocity by measuring the time or speed of water flow passing through a sensor, and has high precision and real-time performance.

Monocular visual odometry: based on monocular vision technology, monocular visual odometry estimates the motion of an object by continuously obtaining images and analyzing changes between the images. During the motion of the robot, a monocular camera continuously obtains current images at a high frequency, and visual odometry estimates the motion (movement and rotation) of the robot between two adjacent frames of the images.

After introducing the terms involved in the embodiments of the disclosure, the following describes an application scenario of the embodiments of the disclosure.

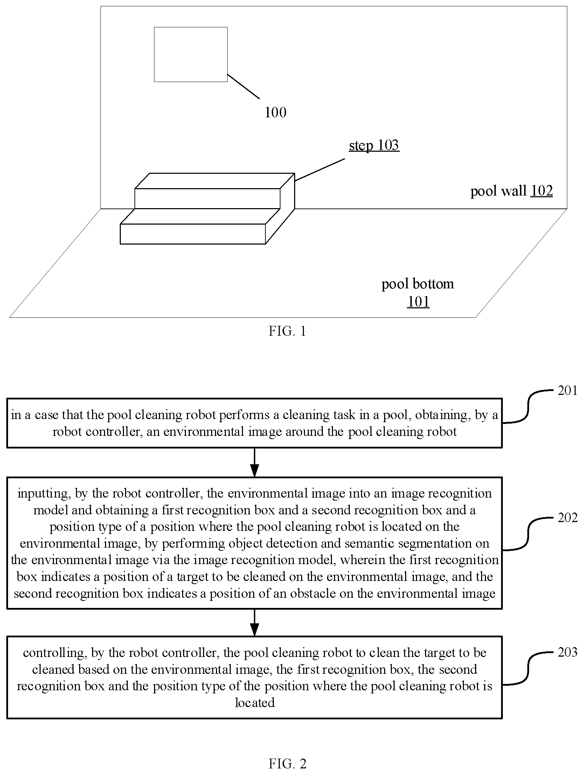

The technical solutions provided in the embodiments of the disclosure are able to be applied in a scenario of controlling a pool cleaning robot to clean a pool bottom of a pool. Referring to FIG. 1, a pool cleaning robot 100 is able to move on a pool bottom 101 of the pool, thus cleaning the pool bottom 101 of the pool. During the movement of the pool cleaning robot 100 on the pool bottom 101, a water pump of the pool cleaning robot 100 starts, draws liquid in the pool into a filter box of the pool cleaning robot via a water inlet at a bottom of the pool cleaning robot 100, filters the liquid via the filter box, leaves dirt in the liquid in the filter box, and the filtered liquid is discharged via a water outlet of the pool cleaning robot 100, thus cleaning the pool bottom 101. In embodiments of the disclosure, the pool cleaning robot 100 is also able to clean a pool wall 102 and a step 103 in the pool. The pool cleaning robot 100 is able to adhere to the pool wall 102 of the pool by using suction generated by the water pump, and to move on the pool wall 102 thus cleaning the pool wall 102. For the step 103 in the pool, the step may be regarded as combinations of a plurality of groups of pool bottoms and pool walls with smaller areas, and the step 103 may be cleaned in a corresponding manner. Certainly, in addition to cleaning a region to be cleaned of the pool via cooperation of the water pump and the filter box, the pool cleaning robot 100 is also able to clean the region to be cleaned of the pool via other types of cleaning units, for example, cleaning the region to be cleaned of the pool via a roller brush.

The following describes the technical solutions provided in the embodiments of the disclosure.

FIG. 2 is a flowchart illustrating a method for utilizing visual information provided in an embodiment of the disclosure. Referring to FIG. 2, taking a robot controller of a pool cleaning robot as an example execution subject, the method includes the following steps.

At 201, the robot controller obtains visual information collected by the pool cleaning robot.

The visual information is information collected by a visual sensor of the pool cleaning robot. For example, both an image and a point cloud belong to the visual information.

At 202, the robot controller controls the pool cleaning robot based on the visual information.

Controlling the pool cleaning robot refers to controlling the pool cleaning robot to clean garbage or a target to be cleaned.

At 203, the robot controller processes the visual information in a preset manner.

The preset manner is set by technical personnel based on an actual situation, which is not limited in the embodiments of the disclosure.

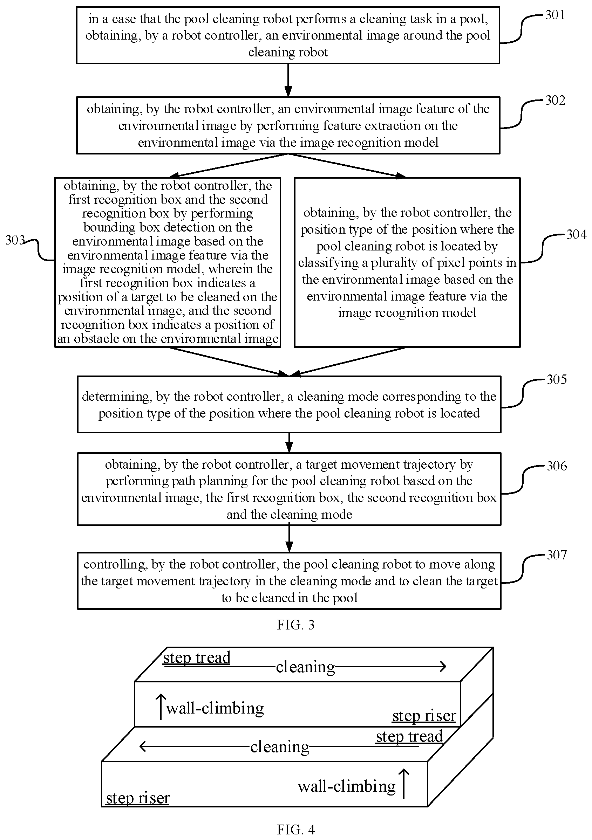

In the related art, when a pool cleaning robot is used to clean a pool, the pool is often cleaned by traversing based on a pre-set path. This cleaning manner is relatively simple, and a cleaning effect on the pool is poor. In view of this problem, the technical solutions provided in the embodiments of the disclosure are described in more detail below with reference to some examples. Referring to FIG. 3, the method includes the following steps.

At 301, in a case that the pool cleaning robot performs a cleaning task in a pool, the robot controller obtains an environmental image around the pool cleaning robot.

The cleaning task refers to a task of cleaning the pool. The cleaning task is initiated periodically by the robot controller or initiated manually by a user. For example, the user is able to set an execution cycle of the cleaning task for the pool cleaning robot, and the robot controller is able to initiate the cleaning task periodically based on the set execution cycle. Alternatively, the user uses a terminal for utilizing the visual information to send a cleaning task execution instruction to the pool cleaning robot, to control the pool cleaning robot to execute the cleaning task. Embodiments of the disclosure do not limit a manner of initiating the cleaning task. The robot controller is built in the pool cleaning robot and is configured to control the pool cleaning robot. In a case that the pool cleaning robot is located in the pool, the pool cleaning robot is able to move on a pool bottom, a pool wall and steps of the pool and execute a cleaning action. The pool cleaning robot includes an image capture device. The image capture device is configured to collect the environmental image around the pool cleaning robot. The environmental image is configured to reflect an environmental situation around the pool cleaning robot. In some embodiments, the image capture device is an RGB (red green blue) camera. A direction indicated by a central axis of the environmental image is a traveling direction of the pool cleaning robot. That is, in a case that a target is at the central axis of the environmental image, the pool cleaning robot is able to reach a position where the target is located by moving forward.

In some embodiments, in a case that the pool cleaning robot performs the cleaning task, the robot controller obtains, via the image capture device, the environmental image around the pool cleaning robot.

The number of the image capture devices may be one or more, which is not limited in the embodiments of the disclosure. In a case that there are a plurality of image capture devices, the environmental image is obtained by splicing environmental images collected by the plurality of image capture devices. It should be noted that, in a case that the pool cleaning robot performs the cleaning task, the robot controller continuously obtains the environmental image via the image capture device.

Taking one image capture device as an example, the image capture device is installed directly in front of the pool cleaning robot, and is able to collect the environmental image directly in front of the pool cleaning robot. The direction indicated by the central axis of the environmental image is directly in front of the pool cleaning robot. In a case that a target is on a left side of the central axis of the environmental image, it indicates that the target is at a left front of the pool cleaning robot.

Taking a plurality of image capture devices as an example, a target image capture device among the plurality of image capture devices is installed directly in front of the pool cleaning robot, and other image capture devices among the plurality of image capture devices are installed at equal intervals on two sides of the target image capture device. The robot controller obtains environmental images from the plurality of image capture devices, takes the environmental image collected by the target image capture device as a center, and splices, based on a relative positional relationship between the other image capture devices and the target image capture device, the environmental images collected by the other image capture devices to the environmental image collected by the target image capture device, to obtain the environmental image.

The robot controller obtains an environmental image feature of the environmental image by performing feature extraction on the environmental image via the image recognition model.

The image recognition model is a multi-task model, which is able to perform object detection on the input environmental image and is also able to perform semantic segmentation on the input image. The feature extraction is to map the environmental image to a higher dimension for subsequent processing.

In some embodiments, the robot controller inputs the environmental image into the image recognition model, and obtains the environmental image feature of the environmental image by performing convolution on the environmental image for a plurality of times via the image recognition model.

In the implementation, by performing convolution on the environmental image for a plurality of times, features of the environmental image at different depths are able to be obtained, and the environmental image feature is obtained by using the features at different depths, so that the environmental image feature has a strong representation capability.

In some embodiments, the robot controller inputs the environmental image into the image recognition model, and obtains a first convolutional image feature corresponding to each convolution by continuously performing convolution on the environmental image for a plurality of times via the image recognition model, in which sizes of the first convolutional image features corresponding to different convolutions are different. The robot controller obtains the environmental image feature of the environmental image by fusing the first convolutional image features corresponding to the convolutions via the image recognition model.

The following describes the method of fusing the first convolutional image features corresponding to the convolutions to obtain the environmental image feature in the above example.

In some embodiments, the robot controller obtains a second convolutional image feature corresponding to each first convolutional image feature by performing deconvolution on each first convolutional image feature via the image recognition model. The robot controller obtains a plurality of third convolutional image features by fusing each first convolutional image feature with the corresponding second convolutional image feature via the image recognition model. The robot controller obtains the environmental image feature of the environmental image by fusing the plurality of third convolutional image features via the image recognition model.

The following describes another implementation of the step 302.

In some embodiments, the robot controller inputs the environmental image into the image recognition model, and obtains the environmental image feature of the environmental image by performing full connection on the environmental image for a plurality of times via the image recognition model.

In the implementation, by performing full connection on the environmental image for a plurality of times, a deep-level environmental image feature is able to be extracted, and the environmental image feature has a strong representation capability.

In some embodiments, the robot controller inputs the environmental image into the image recognition model, and obtains a first full connection feature of the environmental image by performing a first full connection on the environmental image via the image recognition model. The robot controller obtains a first reference feature by performing pooling and normalization on the first full connection feature via the image recognition model. The robot controller obtains a second full connection feature of the environmental image by performing a second full connection on the first reference feature via the image recognition model. The robot controller obtains a second reference feature by performing pooling and normalization on the second full connection feature via the image recognition model, and so on, and determines a reference feature obtained from a last full connection as the environmental image feature of the environmental image.

The following describes yet another implementation of the step 302.

In some embodiments, the robot controller inputs the environmental image into the image recognition model, which encodes the environmental image based on an attention mechanism to obtain the environmental image feature of the environmental image.

In the implementation, the attention mechanism focuses on an important part of the environmental image, and the environmental image feature obtained after encoding is able to represent the environmental image more accurately.

In some embodiments, the robot controller inputs the environmental image into the image recognition model, and divides the environmental image into a plurality of image blocks via the image recognition model. The robot controller obtains an embedding feature of each image block by performing embedding encoding on each image block via the image recognition model. The robot controller obtains a query matrix, a key matrix and a value matrix of each image block by performing linear transformation on the embedding feature of each image block. The robot controller obtains, via the image recognition model, an attention weight of each image block to other image blocks based on the query matrix and the key matrix of every two image blocks among the plurality of image blocks. The robot controller obtains the environmental image feature of the environmental image by performing, via the image recognition model, weighted fusion on the value matrices of the image blocks using the attention weight.

It should be noted that, the robot controller is able to obtain the environmental image feature by performing feature extraction on the environmental image in any of the above manners, which is not limited in the embodiments of the disclosure.

At 303, the robot controller obtains the first recognition box and the second recognition box by performing bounding box detection on the environmental image based on the environmental image feature via the image recognition model, in which the first recognition box indicates a position of a target to be cleaned on the environmental image, and the second recognition box indicates a position of an obstacle on the environmental image.

The bounding box detection belongs to object detection, and a result of the bounding box detection is the first recognition box and the second recognition box. The first recognition box encloses the target to be cleaned, and the second recognition box encloses the obstacle. The target to be cleaned includes a plurality of types, such as stain, cigarette butt, debris, stone, sand, and broken branch. The type of the target to be cleaned is set and adjusted by technical personnel based on an actual situation, which is not limited in the embodiments of the disclosure. The obstacle also includes a plurality of types, such as a column protruding from a plane in the pool, a pipeline, a lighting device, and a landscape stone. The type of the obstacle is set and adjusted by the technical personnel based on an actual situation, which is not limited in the embodiments of the disclosure. Ideally, the first recognition box completely encloses the target to be cleaned, and the second recognition box completely encloses the obstacle. However, in a case that the first recognition box does not completely enclose the target to be cleaned, or the second recognition box does not completely enclose the obstacle, the technical solutions provided in the embodiments of the disclosure may also be implemented. The number of first recognition boxes and the number of second recognition boxes may each be one or more. For ease of understanding, the following description takes one first recognition box and one second recognition box as an example.

In some embodiments, the robot controller controls, via the image recognition model, a first candidate recognition box and a second candidate recognition box to slide on the environmental image, in which the first candidate recognition box is configured to recognize the target to be cleaned, and the second candidate recognition box is configured to recognize the obstacle. The robot controller determines, via the image recognition model, the first recognition box and the second recognition box based on a plurality of first sub-image features corresponding to a plurality of first image regions in the environmental image feature and a plurality of second sub-image features corresponding to a plurality of second image regions in the environmental image feature.

The first image region is an image region covered by the first candidate recognition box on the environmental image, and the second image region is an image region covered by the second candidate recognition box on the environmental image. In some embodiments, there are a plurality of first candidate recognition boxes and a plurality of second candidate recognition boxes, sizes of the plurality of first candidate recognition boxes are different, and sizes of the plurality of second candidate recognition boxes are different, so that the bounding box detection on the environmental image at different granularities is able to be realized, improving accuracy of the bounding box detection.

In the implementation, by using the first candidate recognition box and the second candidate recognition box to slide on the environmental image, different image regions on the environmental image are covered by the first candidate recognition box and the second candidate recognition box, and the image regions are classified to determine the first recognition box and the second recognition box, thus achieving high accuracy.

To more clearly illustrate the above implementations, the following describes the above implementations in several parts.

Part I: the robot controller controls, via the image recognition model, a first candidate recognition box and a second candidate recognition box to slide on the environmental image.

In some embodiments, in a case that there is one first candidate recognition box and one second candidate recognition box, the robot controller controls, via the image recognition model, the first candidate recognition box and the second candidate recognition box to slide on the environmental image with a preset step size, thus covering different image regions of the environmental image, and performs object detection on the environmental image with an image region as a granularity.

The preset step size is set by technical personnel based on an actual situation, which is not limited in the embodiments of the disclosure.

In some embodiments, in a case that there are a plurality of first candidate recognition boxes and a plurality of second candidate recognition boxes, the robot controller controls, via the image recognition model, a corresponding first candidate recognition box and a corresponding second candidate recognition box to slide on the environmental image with a preset step size corresponding to each first candidate recognition box and each second candidate recognition box, sizes of different first candidate recognition boxes are different, sizes of different second candidate recognition boxes are different, thus covering different image regions of the environmental image, and performs object detection on the environmental image with image regions of different sizes as granularities respectively.

Part II: the robot controller determines, via the image recognition model, the first recognition box and the second recognition box based on a plurality of first sub-image features corresponding to a plurality of first image regions in the environmental image feature and a plurality of second sub-image features corresponding to a plurality of second image regions in the environmental image feature.

To more clearly illustrate the above steps, the following respectively describes the methods for determining the first recognition box and the second recognition box.

In some embodiments, for any first image region among the plurality of first image regions, the robot controller determines whether the first image region includes a target to be cleaned by performing full connection and normalization on a first sub-image feature corresponding to the first image region via the image recognition model. In a case that the first image region includes a target to be cleaned, the robot controller determines a bounding box of the first image region as a first reference recognition box. The robot controller determines the first recognition box based on a plurality of first reference recognition boxes on the environmental image via the image recognition model.

In some embodiments, for any first image region among the plurality of first image regions, the robot controller obtains a first region classification value of the first image region by performing full connection and normalization on a first sub-image feature corresponding to the first image region via the image recognition model. In a case that the first region classification value is greater than or equal to a first classification value threshold, it is determined that the first image region includes a target to be cleaned. In a case that the first region classification value is less than the first classification value threshold, it is determined that the first image region does not include a target to be cleaned. In the case that the first image region includes a target to be cleaned, the robot controller determines a bounding box of the first image region as a first reference recognition box. In the case that the first image region does not include a target to be cleaned, the robot controller discards the first image region. The robot controller obtains the first recognition box and removes redundant first reference recognition boxes by performing non-maximum suppression on a plurality of first reference recognition boxes on the environmental image via the image recognition model, in which the methods for performing non-maximum suppression on the plurality of first reference recognition boxes described in the above example include non-maximum suppression (NMS), and extension methods of NMS, such as Soft-NMS, Softer-NMS and Fast-NMS, which is not limited in the embodiments of the disclosure. The first classification value threshold is set by technical personnel based on an actual situation, which is not limited in the embodiments of the disclosure. The first classification value threshold is configured to recognize a first recognition box including a target to be cleaned.

In some embodiments, for any second image region among the plurality of second image regions, the robot controller determines whether the second image region includes an obstacle by performing full connection and normalization on a second sub-image feature corresponding to the second image region via the image recognition model. In a case that the second image region includes an obstacle, the robot controller determines a bounding box of the second image region as a second reference recognition box. The robot controller determines the second recognition box based on a plurality of second reference recognition boxes on the environmental image via the image recognition model.

In some embodiments, for any second image region among the plurality of second image regions, the robot controller obtains a second region classification value of the second image region by performing full connection and normalization on a second sub-image feature corresponding to the second image region via the image recognition model. In a case that the second region classification value is greater than or equal to a second classification value threshold, it is determined that the second image region includes an obstacle. In a case that the second region classification value is less than the second classification value threshold, it is determined that the second image region does not include an obstacle. In the case that the second image region includes an obstacle, the robot controller determines a bounding box of the second image region as a second reference recognition box. In the case that the second image region does not include an obstacle, the robot controller discards the second image region. The robot controller obtains the second recognition box and removes redundant second reference recognition boxes by performing non-maximum suppression on a plurality of second reference recognition boxes on the environmental image via the image recognition model, in which the method for non-maximum suppression and the above implementation belong to the same inventive concept, and the implementation process is not repeated herein. The second classification value threshold is set by technical personnel based on an actual situation, which is not limited in the embodiments of the disclosure. The second classification value threshold is configured to recognize a second recognition box including an obstacle.

It should be noted that, the robot controller is able to execute the above step 303 and the following step 304 in parallel, or execute the above step 303 and the following step 304 sequentially, which is not limited in the embodiments of the disclosure. In the subsequent description, the robot controller executing the above step 303 and the following step 304 in parallel is taken as an example for illustration.

At 304, the robot controller obtains the position type of a position where the pool cleaning robot is located by classifying a plurality of pixel points in the environmental image based on the environmental image feature via the image recognition model.

The position types include a pool bottom, a pool wall and a step. The process of classifying the plurality of pixel points is also the process of semantic segmentation. In some embodiments, the step may further be subdivided into a step tread and a step riser, thus improving fineness of the semantic segmentation. In some embodiments, the environmental image feature is obtained by performing downsampling on the environmental image for a plurality of times by the robot controller. For example, the robot controller obtains the environmental image feature of the environmental image by continuously performing convolution on the environmental image for a plurality of times. The number of times of performing convolution on the environmental image is set by technical personnel based on an actual situation, which is not limited in the embodiments of the disclosure. A convolution target during a first convolution is the environmental image, and a first convolution feature map is obtained, in which a size of the first convolution feature map is smaller than a size of the environmental image. A convolution target during a second convolution is the first convolution feature map, and a second convolution feature map is obtained, in which a size of the second convolution feature map is smaller than a size of the first convolution feature map, and so on. A convolution feature map obtained from a last convolution is the environmental image feature.

In some embodiments, the robot controller obtains an upsampled feature map of the environmental image by performing upsampling on the environmental image feature for a plurality of times, in which a size of the upsampled feature map is the same as a size of the environmental image, the upsampled feature map includes a plurality of channels, the plurality of channels correspond to a plurality of candidate position types, and a pixel value of a pixel point in each channel represents a confidence level that a corresponding pixel point in the environmental image is at a candidate position type corresponding to the channel. The robot controller determines, based on the upsampled feature map, a position type corresponding to each pixel point in the environmental image. The robot controller determines a position type of a position where the pool cleaning robot is located based on the position types corresponding to the plurality of pixel points.

The plurality of candidate position types include a pool wall, a pool bottom, a step tread and a step riser. In addition, in other possible implementations, the plurality of candidate position types may further include other position types, such as a raised plane in the pool, and the embodiments of the disclosure do not limit this.

In the implementation, by classifying the pixel points in the environmental image, the position type corresponding to the pixel point is determined. The position type of the position where the pool cleaning robot is located is determined based on the position types corresponding to the pixel points, and the accuracy of the position type is high.

To more clearly illustrate the above implementations, the following describes the above implementations in several parts.

Part I: the robot controller obtains the upsampled feature map of the environmental image by performing upsampling on the environmental image feature for a plurality of times.

In some embodiments, the robot controller obtains the upsampled feature map of the environmental image by continuously performing upsampling on the environmental image feature for a plurality of times.

The number of times of performing upsampling on the environmental image is set by technical personnel based on an actual situation, which is not limited in the embodiments of the disclosure. An upsampling target during a first upsampling is the environmental image feature, and a first upsampled feature map is obtained, in which a size of the first upsampled feature map is larger than a size of the environmental image feature. An upsampling target during a second upsampling is the first upsampled feature map, and a second upsampled feature map is obtained, in which a size of the second upsampled feature map is larger than a size of the first upsampled feature map, and so on. An upsampled feature map obtained from a last upsampling is the upsampled feature map, and the size of the upsampled feature map is the same as the size of the environmental image. In some embodiments, a manner of upsampling includes deconvolution, interpolation and other upsampling methods, and the embodiments of the disclosure do not limit this.

Part II: the robot controller determines, based on the upsampled feature map, a position type corresponding to each pixel point in the environmental image.

In some embodiments, the robot controller determines, based on pixel values of pixel points in a plurality of channels of the upsampled feature map, a position type corresponding to each pixel point in the environmental image.

In some embodiments, for any pixel point among the plurality of pixel points in the environmental image, the robot controller determines a pixel value of the pixel point in each channel of the upsampled feature map. The robot controller determines a channel corresponding to a maximum pixel value as a target channel, and a candidate position type corresponding to the target channel is the position type corresponding to the pixel point. The maximum pixel value represents a maximum confidence level. For example, in a case that the candidate position type corresponding to the target channel is a pool bottom, the position type corresponding to the pixel point is the pool bottom.

Part III: the robot controller determines the position type of the position where the pool cleaning robot is located based on the position types corresponding to the plurality of pixel points.

In some embodiments, the robot controller determines, based on the position types corresponding to the plurality of pixel points, a position type of an area ahead of the pool cleaning robot in a traveling direction. The robot controller determines the position type of the area ahead of the pool cleaning robot in the traveling direction as the position type of the position where the pool cleaning robot is located.

In the implementation, the position type of the area ahead of the pool cleaning robot in the traveling direction is determined based on the position types of the plurality of pixel points in the environmental image, thus determining the position type of the position where the pool cleaning robot is located, and the efficiency is high.

In some embodiments, the robot controller obtains a plurality of position indication regions on the environmental image by performing clustering on the plurality of pixel points on the environmental image based on the position types corresponding to the plurality of pixel points, in which different position indication regions correspond to different position types, and a boundary between adjacent different position indication regions is a boundary between different position types. The robot controller determines, based on positions of the plurality of position indication regions on the environmental image, the position type of the area ahead of the pool cleaning robot in the traveling direction. The robot controller determines the position type of the area ahead of the pool cleaning robot in the traveling direction as the position type of the position where the pool cleaning robot is located.

To more clearly illustrate the above example, the following describes the method by which the robot controller determines the position type of the area ahead of the pool cleaning robot in the traveling direction based on the positions of the plurality of position indication regions on the environmental image in the above example.

In some embodiments, the robot controller determines a position type corresponding to a position indication region at a bottommost position of the environmental image among the plurality of position indication regions as the position type of the area ahead of the pool cleaning robot in the traveling direction.

For example, in a case that the position type corresponding to the position indication region at the bottommost position of the environmental image is a pool bottom, the robot controller determines the position type of the area ahead of the pool cleaning robot in the traveling direction as the pool bottom. In a case that the position type corresponding to the position indication region at the bottommost position of the environmental image is a pool wall, the robot controller determines the position type of the area ahead of the pool cleaning robot in the traveling direction as the pool wall. In a case that the position type corresponding to the position indication region at the bottommost position of the environmental image is a step, the robot controller determines the position type of the area ahead of the pool cleaning robot in the traveling direction as the step. In a case that the position type corresponding to the position indication region at the bottommost position of the environmental image includes a boundary between the pool bottom and the pool wall, the robot controller determines the position type of the area ahead of the pool cleaning robot in the traveling direction as the boundary between the pool bottom and the pool wall.

At 305, the robot controller determines a cleaning mode corresponding to the position type of the position where the pool cleaning robot is located.

In some embodiments, in a case that the position where the pool cleaning robot is located is a pool wall of the pool, the robot controller determines the cleaning mode of the pool cleaning robot as a roller cleaning mode.

In this case, a target to be cleaned existing on the pool wall is usually microorganisms, algae, scale, etc. attached to the pool wall. When cleaning the pool wall, pressure between a roller brush and the pool wall is increased, so as to enhance friction between the roller brush of the pool cleaning robot and the pool wall, thus enhancing a cleaning effect on the pool wall. The roller cleaning mode described in the above implementation refers to a cleaning mode of switching to the roller brush and increasing the pressure between the roller brush and the pool wall. Certainly, on this basis, the robot controller may also control other cleaning components of the pool cleaning robot to clean the pool wall, which is not limited in the embodiments of the disclosure.

In some embodiments, in a case that the position where the pool cleaning robot is located is a pool bottom of the pool, the robot controller determines the cleaning mode of the pool cleaning robot as a water pump suction mode.

In this case, a target to be cleaned existing on the pool bottom is usually sediment such as stones, fallen leaves and sand. During a cleaning process, a larger water flow is required, so that the target to be cleaned enters a filter box through the water flow as much as possible and remains in the filter box, thus achieving efficient cleaning of the pool bottom. The water pump suction mode in the above implementation refers to a mode of increasing power of a water pump, so as to increase the water flow, thus drawing the target to be cleaned into the filter box. Correspondingly, on this basis, the robot controller may also control other cleaning components of the pool cleaning robot to clean the pool bottom, which is not limited in the embodiments of the disclosure.

In some embodiments, in a case that the position where the pool cleaning robot is located is a boundary between the pool bottom and the pool wall of the pool, the robot controller determines the cleaning mode of the pool cleaning robot as an edge-following cleaning mode.

In this case, the edge-following cleaning mode refers to cleaning closely along the boundary. This is because sand and stones tend to accumulate on the boundary between the pool bottom and the pool wall, and adopting the edge-following cleaning mode is able to improve a cleaning effect on the boundary between the pool bottom and the pool wall, thus improving a cleaning effect on the pool.

In some embodiments, in a case that the position where the pool cleaning robot is located is on a step of the pool, the robot controller determines the cleaning mode of the pool cleaning robot as a basic cleaning mode or a deep cleaning mode, in which in the basic cleaning mode, a step tread is cleaned and a step riser is not cleaned, and in the deep cleaning mode, the step tread and the step riser are cleaned.

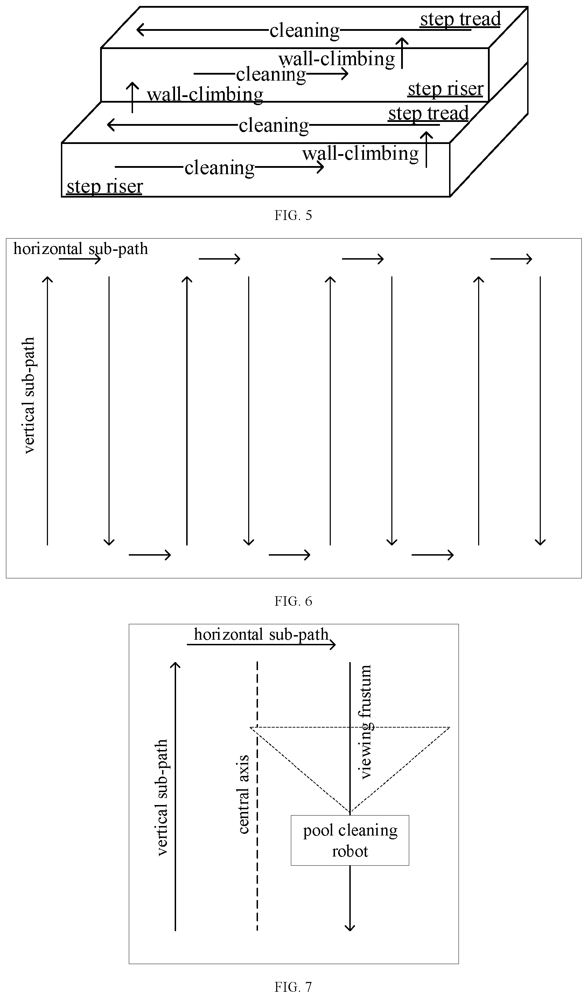

In this case, referring to FIG. 4, in the basic cleaning mode, the pool cleaning robot only cleans the step tread and does not clean the step riser. Referring to FIG. 5, in the deep cleaning mode, the pool cleaning robot cleans both the step tread and the step riser. In addition, a boundary between the step tread and the step riser is similar to the boundary between the pool bottom and the pool wall. The pool cleaning robot may also adopt the edge-following cleaning mode to clean the boundary between the step tread and the step riser, thus improving a cleaning effect on the step.

At 306, the robot controller obtains a target movement trajectory by performing path planning for the pool cleaning robot based on the environmental image, the first recognition box, the second recognition box and the cleaning mode.

In this case, cleaning the target to be cleaned includes moving to a position where the target to be cleaned is located and executing a cleaning action.

In some embodiments, the robot controller determines a preset cleaning trajectory corresponding to the cleaning mode. The robot controller determines a reference movement trajectory based on positions of the first recognition box and the second recognition box in the environmental image, an obstacle type of the obstacle in the second recognition box, and a size of the second recognition box. The robot controller obtains the target movement trajectory by combining the preset cleaning trajectory and the reference movement trajectory.

In this case, the preset cleaning trajectory corresponding to the cleaning mode is also referred to as a basic cleaning path corresponding to the cleaning mode, and is a cleaning path of the pool cleaning robot in the cleaning mode when no obstacle and no target to be cleaned exist.

In the implementation, the preset cleaning trajectory corresponding to the cleaning mode is determined, the reference movement trajectory is determined based on the positions of the first recognition box and the second recognition box in the environmental image, the obstacle type of the obstacle in the second recognition box, and the size of the second recognition box, and the target movement trajectory is determined based on the preset cleaning trajectory and the reference movement trajectory, thus realizing intelligent path planning for the pool cleaning robot. By using recognition boxes instead of further segmentation results of the recognition boxes for path planning, the computation amount is able to be greatly reduced while ensuring path accuracy.

To more clearly illustrate the above implementations, the following describes the above implementations in several parts.

Part I: the robot controller determines a preset cleaning trajectory corresponding to the cleaning mode.

In some embodiments, the robot controller obtains a preset cleaning trajectory corresponding to the cleaning mode by performing a query based on the cleaning mode.

The correspondence between the cleaning mode and the preset cleaning trajectory is set by technical personnel based on an actual situation, which is not limited in the embodiments of the disclosure. In some embodiments, the preset cleaning trajectory corresponding to the water pump suction mode is a zigzag path shown in FIG. 6. The zigzag path includes a plurality of horizontal sub-paths and a plurality of vertical sub-paths. Any horizontal sub-path among the plurality of horizontal sub-paths is perpendicular to any vertical sub-path among the plurality of vertical sub-paths. Any two horizontal sub-paths among the plurality of horizontal sub-paths are parallel to each other. Any two vertical sub-paths among the plurality of vertical sub-paths are parallel to each other. In order to facilitate distinguishing horizontal sub-paths and vertical sub-paths, a sub-path with a longer length is determined as a vertical sub-path, and a sub-path with a shorter length is determined as a horizontal sub-path. In some embodiments, referring to FIG. 7, the length of the horizontal sub-path is related to a viewing frustum of an image capture device of the pool cleaning robot, that is, in a case that the pool cleaning robot moves forward on a vertical sub-path, the viewing frustum of the image capture device is able to cover a central axis between the vertical sub-path where the pool cleaning robot is located and two adjacent vertical sub-paths, and a horizontal distance covered by the viewing frustum of the image capture device is larger than the length of the horizontal sub-path, so as to achieve comprehensive coverage of the pool, which is able to reduce a density of a cleaning path of the pool cleaning robot and improve cleaning efficiency.

In some embodiments, in a case that the image capture device is not used to clean the pool, the preset cleaning trajectory may also be a zigzag path. Compared with the zigzag path in FIG. 6, the length of the horizontal sub-path is associated with a width of the pool cleaning robot. In some embodiments, the length of the horizontal sub-path is smaller than the width of the pool cleaning robot, that is, a distance between two adjacent vertical sub-paths is smaller than the width of the pool cleaning robot, thus ensuring that during a process of the pool cleaning robot cleaning the pool according to the preset cleaning trajectory, when the pool cleaning robot travels on any two adjacent vertical sub-paths, there is an overlapping region, so as to ensure a cleaning effect. Certainly, in a case that the image capture device is used to clean the pool, the preset cleaning trajectory may be switched to the form shown in FIG. 6.

Part II: the robot controller determines the reference movement trajectory based on the positions of the first recognition box and the second recognition box in the environmental image, the obstacle type of the obstacle in the second recognition box, and the size of the second recognition box.

In some embodiments, the robot controller determines whether the pool cleaning robot needs to avoid the obstacle based on the obstacle type of the obstacle, the position of the second recognition box in the environmental image, and the size of the second recognition box. In a case that the pool cleaning robot needs to avoid the obstacle, the robot controller determines a first movement direction and a first movement distance of the pool cleaning robot based on a relative positional relationship of the first recognition box to a center point of the environmental image and a relative positional relationship of the second recognition box to the center point of the environmental image. The robot controller generates the reference movement trajectory based on the first movement direction and the first movement distance of the pool cleaning robot.

The obstacle type includes a column protruding from a plane in the pool, a pipeline, a lighting device, a landscape stone, etc. The obstacle type is obtained by classifying the second recognition box. The position of the second recognition box in the environmental image is able to reflect a relative positional relationship between the obstacle and the pool cleaning robot. The position of the second recognition box in the environmental image and the size of the second recognition box are able to reflect a size of the obstacle and a distance between the obstacle and the pool cleaning robot. The relative positional relationship of the first recognition box to the center point of the environmental image includes a distance and an angle between the first recognition box and the center point of the environmental image. Correspondingly, the relative positional relationship of the second recognition box to the center point of the environmental image includes a distance and an angle between the second recognition box and the center point of the environmental image.

Because an object appears larger when near and smaller when far in imaging, the distance between the pool cleaning robot and the obstacle and the size of the obstacle cannot be determined only via the size of the second recognition box, and a comprehensive judgment further requires the position of the second recognition box in the environmental image. For example, the closer the vertical coordinate of the center point of the second recognition box is to a lower edge of the environmental image, the closer the obstacle is to the pool cleaning robot.

To more clearly illustrate the above implementations, the following further describes the above implementations in several parts.
A. The robot controller determines whether the pool cleaning robot needs to avoid the obstacle based on the obstacle type of the obstacle, the position of the second recognition box in the environmental image, and the size of the second recognition box.

In some embodiments, the robot controller determines the size of the obstacle based on the position of the second recognition box in the environmental image and the size of the second recognition box. The robot controller determines whether the pool cleaning robot needs to avoid the obstacle based on the obstacle type and the size of the obstacle.

In some embodiments, the robot controller determines a distance between the obstacle and the pool cleaning robot based on the position of the second recognition box in the environmental image. The robot controller determines the size of the obstacle based on the distance between the obstacle and the pool cleaning robot and the size of the second recognition box. In a case that the obstacle type is a preset type and the size of the obstacle is less than or equal to a preset size, it is determined that the pool cleaning robot does not need to avoid the obstacle. In a case that the obstacle type is not the preset type or the size of the obstacle is greater than the preset size, it is determined that the pool cleaning robot needs to avoid the obstacle, in which the preset type and the preset size are set by technical personnel based on an actual situation, which is not limited in the embodiments of the disclosure.

B. In a case that the pool cleaning robot needs to avoid the obstacle, the robot controller determines a first movement direction and a first movement distance of the pool cleaning robot based on the relative positional relationship of the first recognition box to the center point of the environmental image and the relative positional relationship of the second recognition box to the center point of the environmental image.

In some embodiments, in a case that the pool cleaning robot needs to avoid the obstacle, the robot controller determines a relative positional relationship between the target to be cleaned and the obstacle and the pool cleaning robot based on the relative positional relationship of the first recognition box to the center point of the environmental image and the relative positional relationship of the second recognition box to the center point of the environmental image. The robot controller determines the first movement direction and the first movement distance of the pool cleaning robot by performing path planning based on the relative positional relationship between the target to be cleaned and the obstacle and the pool cleaning robot, in which a purpose of the path planning is to avoid the obstacle and reach a position where the target to be cleaned is located.

C. The robot controller generates the reference movement trajectory based on the first movement direction and the first movement distance of the pool cleaning robot.

In some embodiments, the robot controller obtains the reference movement trajectory by combining the first movement direction and the first movement distance of the pool cleaning robot in a sequential order.

The above is illustrated by taking a case that the pool cleaning robot needs to avoid the obstacle as an example. The following describes a case that the pool cleaning robot does not need to avoid the obstacle.

In some embodiments, in a case that the pool cleaning robot does not need to avoid the obstacle, the robot controller determines a second movement direction and a second movement distance of the pool cleaning robot based on the relative positional relationship between the first recognition box and the center point of the environmental image. The robot controller generates the reference movement trajectory based on the second movement direction and the second movement distance of the pool cleaning robot.

In a case that the pool cleaning robot does not need to avoid the obstacle, the reference movement trajectory is generated without considering the obstacle, and only the target to be cleaned needs to be considered.

Part III: the robot controller obtains the target movement trajectory by combining the preset cleaning trajectory and the reference movement trajectory.

In some embodiments, the robot controller obtains the target movement trajectory by splicing the preset cleaning trajectory and the reference movement trajectory.

The following describes another implementation of the step 306.

In some embodiments, the robot controller determines an obstacle clearance level of the pool cleaning robot, in which the obstacle clearance level is positively correlated with an obstacle clearance capability. In a case that the obstacle clearance level of the pool cleaning robot is less than or equal to a preset level, the robot controller obtains a contour line of the obstacle in the environmental image by performing segmentation on the obstacle in the second recognition box. The robot controller obtains the target movement trajectory by performing path planning for the pool cleaning robot based on the environmental image, the first recognition box, the contour line of the obstacle and the cleaning mode.

The obstacle clearance level and the preset level of the pool cleaning robot are set by technical personnel based on an actual situation, which is not limited in the embodiments of the disclosure. The obstacle clearance level of the pool cleaning robot is related to a hardware structure of the pool cleaning robot.

In the implementation, in a case that the obstacle clearance capability of the pool cleaning robot is relatively poor, the obstacle in the second recognition box is further segmented, so as to improve accuracy of obstacle representation and improve precision of the path planning.

Based on the above implementation, in a case that the obstacle clearance level of the pool cleaning robot is greater than the preset level, the robot controller obtains the target movement trajectory by performing path planning for the pool cleaning robot based on the environmental image, the first recognition box, the second recognition box and the cleaning mode.

That is, it is not necessary to further recognize the second recognition box, and obstacle avoidance is performed with the second recognition box as a granularity. That is, during the path planning, the second recognition box is avoided. For a specific implementation process, refer to the description in the previous implementation, and details are not repeated herein.

At 307, the robot controller controls the pool cleaning robot to move along the target movement trajectory in the cleaning mode and to clean the target to be cleaned in the pool.

In some embodiments, the robot controller controls the pool cleaning robot to start the cleaning mode, move along the preset cleaning trajectory in the target movement trajectory in the cleaning mode, and after moving to a designated location, switch to moving along the reference movement trajectory, to clean the target to be cleaned. In a case that the target to be cleaned is cleaned, the pool cleaning robot returns to and moves along the preset cleaning trajectory.

It should be noted that, during the movement of the pool cleaning robot, the above steps 301 to 307 are repeatedly executed, so as to realize dynamic path planning and improve the cleaning effect.

All the above optional technical solutions may be combined in any manner to form optional embodiments of the disclosure, and details are not repeated herein.

By adopting the technical solutions provided in the embodiments of the disclosure, in a case that the pool cleaning robot performs a cleaning task in the pool, the environmental image around the pool cleaning robot is obtained, in which the environmental image is able to reflect an environmental situation around the pool cleaning robot. The environmental image is input into the image recognition model, and the first recognition box and the second recognition box and the position type of the position where the pool cleaning robot is located on the environmental image are obtained by performing object detection and semantic segmentation on the environmental image via the image recognition model, in which the first recognition box indicates a position of a target to be cleaned on the environmental image, the second recognition box indicates a position of an obstacle on the environmental image, and the image recognition model is a multi-task model. The pool cleaning robot is controlled to clean the target to be cleaned based on the environmental image, the first recognition box, the second recognition box and the position type of the position where the pool cleaning robot is located. That is, overall planning is performed by using the target to be cleaned, the obstacle and the position type recognized by the image recognition model, so as to realize intelligent cleaning of the target to be cleaned by the pool cleaning robot in combination with a surrounding environment, thus improving a cleaning effect on the pool by using the pool cleaning robot.

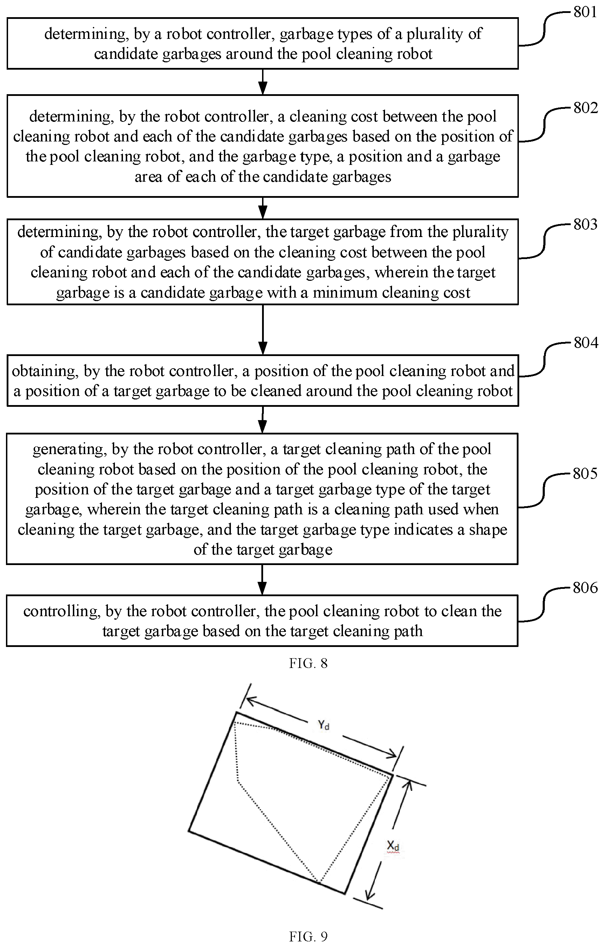

In view of the problem of the poor cleaning effect on the pool described above, another implementation provided in the embodiments of the disclosure is described in more detail below with reference to some examples. Referring to FIG. 8, the method includes the following steps.

At 801, the robot controller determines garbage types of a plurality of candidate garbages around the pool cleaning robot.

The robot controller is built in the pool cleaning robot and is configured to control the pool cleaning robot. In a case that the pool cleaning robot is located in the pool, the pool cleaning robot is able to move on a pool bottom, a pool wall and steps of the pool and execute a cleaning action. The pool cleaning robot includes a visual sensor. The visual sensor is configured to collect an environmental image around the pool cleaning robot and/or collect an environmental point cloud around the pool cleaning robot. The environmental image and the environmental point cloud are configured to reflect an environmental situation around the pool cleaning robot. The candidate garbage is garbage located around the pool cleaning robot and recognized by the robot controller. Garbage refers to an object that is able to be cleaned. For example, garbage includes small stone, cigarette butt, paper ball, branch, leaf, mud ball, etc., which is not limited in the embodiments of the disclosure. The garbage type of the candidate garbage is configured to represent a shape of the candidate garbage. That is, candidate garbages of different shapes are classified into different garbage types. In the embodiments of the disclosure, the shape of the garbage refers to a shape presented by a top view of the garbage, that is, a shape of the garbage when looking down at the garbage. In some embodiments, the garbage type includes a point type, a line segment type and an area type (also referred to as a rectangle type).

In some embodiments, the robot controller determines a contour of each of the candidate garbages. The robot controller determines a bounding rectangle of each of the candidate garbages based on the contour of each of the candidate garbages. The robot controller determines the garbage type of each of the candidate garbages based on size information of the bounding rectangle of each of the candidate garbages.

The contour of the candidate garbage may be regarded as a representation form of the shape of the candidate garbage. The contour is close to an actual shape of the candidate garbage, thus the contour is usually an irregular polygon. The bounding rectangle of the candidate garbage is determined based on the contour of the candidate garbage, thus the bounding rectangle is also able to reflect the shape of the candidate garbage, and the size information of the bounding rectangle is used to reflect the shape of the candidate garbage. In addition, compared with the contour, the bounding rectangle is more regular, which helps to classify the candidate garbages.

With the technical solutions provided in the embodiments of the disclosure, the bounding rectangle corresponding to the contour of each of the candidate garbages is determined, the garbage type of each of the candidate garbages is determined by using the size information of the bounding rectangle corresponding to each of the candidate garbages, and the difficulty of classifying each of the candidate garbages is relatively low, and the efficiency is relatively high.

To more clearly illustrate the above implementations, the following describes the above implementations in several parts.

Part I: the robot controller determines a contour of each of the candidate garbages.

In some embodiments, the robot controller obtains an environmental image around the pool cleaning robot. The robot controller obtains a bird's eye view (BEV) image corresponding to the environmental image by performing view transformation on the environmental image. The robot controller obtains the contour of each of the candidate garbages by performing object detection on the BEV image.

The environmental image is able to reflect an environmental situation of an environment where the pool cleaning robot is located. The environmental image is an image captured from a perspective of the pool cleaning robot. Performing the view transformation on the environmental image is to transform the environmental image from the perspective of the pool cleaning robot to a projection perspective, i.e., BEV (Bird's Eye View), so as to facilitate determining the contour of each of the candidate garbages.

To more clearly illustrate the above implementations, the following further describes the above implementations in several parts.
A. The robot controller obtains the environmental image around the pool cleaning robot.

In some embodiments, the robot controller controls the pool cleaning robot to rotate, and obtains a plurality of initial environmental images during the rotation. The robot controller obtains the environmental image by splicing the plurality of initial environmental images.

One initial environmental image corresponds to one rotation angle. Splicing the plurality of initial environmental images refers to splicing the plurality of initial environmental images in a chronological order of collection time, thus obtaining the environmental image reflecting a global environment around the pool cleaning robot.

In the implementation, by controlling the pool cleaning robot to rotate and obtaining the plurality of initial environmental images during the rotation and splicing the plurality of initial environmental images, the environmental image is obtained, in which the environmental image is able to relatively comprehensively reflect the environmental situation around the pool cleaning robot.

In some embodiments, the robot controller controls the pool cleaning robot to rotate. During the rotation of the pool cleaning robot, the robot controller obtains the plurality of initial environmental images by performing image collection via a visual sensor at intervals of a preset rotation angle. The robot controller obtains the environmental image by splicing the plurality of initial environmental images in the chronological order of the collection time.

B. The robot controller obtains the BEV image corresponding to the environmental image by performing view transformation on the environmental image.

In a possible implementation, the robot controller obtains a plurality of reference environmental images with generation times adjacent to a generation time of the environmental image. The robot controller obtains the BEV image corresponding to the environmental image by performing view transformation on the environmental image based on the plurality of reference environmental images and the environmental image.

The plurality of reference environmental images include both reference environmental images with generation times before the generation time of the environmental image and reference environmental images with generation times after the generation time of the environmental image.

In the implementation, by performing the view transformation on the environmental image by using the environmental image and the plurality of reference environmental images of the environmental image, the BEV image corresponding to the environmental image is obtained, in which a cost of obtaining the BEV image is relatively low.

In some embodiments, the robot controller obtains a plurality of reference environmental images with generation times adjacent to the generation time of the environmental image. The robot controller obtains an environmental image set by arranging the environmental image and the plurality of reference environmental images in a chronological order of the generation times. The robot controller inputs the environmental image set into a first view transformation model, and obtains an image set feature of the environmental image set by performing feature extraction on the environmental image set via the first view transformation model. The robot controller obtains a BEV feature of the environmental image set by encoding the image set feature based on an attention mechanism via the first view transformation model. The robot controller obtains the BEV image corresponding to the environmental image by performing multiple rounds of iterative decoding on the BEV feature via the first view transformation model.

The first view transformation model may adopt any type of BEV perception model based on an image sequence (the environmental image set) in the related art, which is not limited in the embodiments of the disclosure.

The following describes another implementation of obtaining the BEV image corresponding to the environmental image.

In some embodiments, the robot controller obtains depth information corresponding to the environmental image. The robot controller obtains the BEV image corresponding to the environmental image by performing view transformation on the environmental image based on the environmental image and the depth information.

The depth information includes a distance corresponding to each pixel point in the environmental image.

The depth information corresponding to the environmental image is obtained via a point cloud corresponding to the environmental image, or obtained synchronously when obtaining the environmental image (for example, the visual sensor is a depth camera), which is not limited in the embodiments of the disclosure.

In the implementation, the view transformation is performed on the environmental image by combining the environmental image and the depth information, and the obtained BEV image has relatively high accuracy.

In some embodiments, the robot controller inputs the environmental image into a second view transformation model, and obtains an environmental image feature of the environmental image by performing feature extraction on the environmental image via the second view transformation model. The robot controller obtains a depth image feature by splicing the depth information of the environmental image and the environmental image feature via the second view transformation model. The robot controller obtains a BEV feature of the environmental image by encoding the depth image feature based on an attention mechanism via the second view transformation model. The robot controller obtains the BEV image corresponding to the environmental image by performing multiple rounds of iterative decoding on the BEV feature via the second view transformation model.

The second view transformation model may adopt any type of BEV perception model based on an image sequence and depth information in the related art, which is not limited in the embodiments of the disclosure.

C. The robot controller obtains the contour of each of the candidate garbages by performing object detection on the BEV image.

The object detection is configured to find each of the candidate garbages from the BEV image, thus obtaining the contour of each of the candidate garbages.

In some embodiments, the robot controller obtains a BEV image feature of the BEV image by performing feature extraction on the BEV image. The robot controller obtains a plurality of candidate detection boxes by performing garbage detection based on the BEV image feature, in which one candidate detection box corresponds to one candidate garbage. The robot controller obtains the contour of each of the candidate garbages by performing contour recognition in the plurality of candidate detection boxes.

In some embodiments, the robot controller inputs the BEV image into a target detection model, and obtains a BEV image feature of the BEV image by performing a plurality of convolutions, a plurality of full connections, or encoding based on an attention mechanism on the BEV image via the target detection model. The robot controller controls, via the target detection model, a candidate recognition box to slide on the BEV image feature, in which the candidate recognition box is configured to recognize the candidate garbage. The robot controller determines, via the target detection model, the plurality of candidate detection boxes based on sub-image features corresponding to a plurality of candidate image regions in the BEV image feature, in which a candidate image region is a region covered by the candidate recognition box. The robot controller obtains the contour of each of the candidate garbages by performing boundary recognition in the plurality of candidate detection boxes.

The target detection model may be any type of target detection model in the related art, which is not limited in the embodiments of the disclosure.

Part II: the robot controller determines a bounding rectangle of each of the candidate garbages based on the contour of each of the candidate garbages.

In some embodiments, for any candidate garbage among the plurality of candidate garbages, the robot controller determines four vertices corresponding to the contour of the candidate garbage, in which the four vertices are outermost vertices of the contour of the candidate garbage. The robot controller obtains a bounding rectangle of the candidate garbage by connecting the four vertices sequentially.

For example, referring to FIG. 9, the contour (dashed line) and the bounding rectangle (solid line) of the candidate garbage are illustrated. Yd represents a length of the bounding rectangle, and X_{d} represents a width of the bounding rectangle.

Part III: the robot controller determines the garbage type of each of the candidate garbages based on size information of the bounding rectangle of each of the candidate garbages.

In some embodiments, the size information includes a length and a width. For any candidate garbage among the plurality of candidate garbages, in a case that both the length and the width of the bounding rectangle of the candidate garbage are less than or equal to a preset threshold, the robot controller determines the garbage type of the candidate garbage as a point type, in which the preset threshold is associated with a single cleaning width of the pool cleaning robot. In a case that the length of the bounding rectangle of the candidate garbage is less than or equal to the preset threshold and the width is greater than the preset threshold, or the width of the bounding rectangle of the candidate garbage is less than or equal to the preset threshold and the length is greater than the preset threshold, the robot controller determines the garbage type of the candidate garbage as a line segment type. In a case that both the length and the width of the bounding rectangle of the candidate garbage are greater than the preset threshold, the robot controller determines the garbage type of the candidate garbage as an area type.

The single cleaning width of the pool cleaning robot refers to a maximum effective cleaning width during a movement of the pool cleaning robot, that is, garbage within the single cleaning width of the pool cleaning robot is able to be effectively cleaned. Generally, the maximum effective cleaning width is slightly smaller than a width of a suction port of the pool cleaning robot, and the single cleaning width is determined by a structure of the pool cleaning robot, which is not limited in the embodiments of the disclosure. The preset threshold is smaller than the single cleaning width. Generally, the preset threshold is slightly smaller than the single cleaning width, and the preset threshold is set by technical personnel based on an actual situation, which is not limited in the embodiments of the disclosure. In a case that both the length and the width of the bounding rectangle of the candidate garbage are less than or equal to the preset threshold, it indicates that the pool cleaning robot is able to clean the candidate garbage by moving to a position where the candidate garbage is located, thus the candidate garbage may be regarded as a "point", and the candidate garbage is defined as the point type. In a case that the length of the bounding rectangle of the candidate garbage is less than or equal to the preset threshold and the width is greater than the preset threshold, or the width of the bounding rectangle of the candidate garbage is less than or equal to the preset threshold and the length is greater than the preset threshold, it indicates that the pool cleaning robot is able to clean the candidate garbage by performing one movement along a length direction or a width direction of the candidate garbage, thus the candidate garbage may be regarded as a "line segment", and the candidate garbage is defined as the line segment type. In a case that both the length and the width of the bounding rectangle of the candidate garbage are greater than the preset threshold, it indicates that the pool cleaning robot needs to perform multiple movements along the length direction or the width direction of the candidate garbage to clean the candidate garbage, thus the candidate garbage may be regarded as an "area", and the candidate garbage is defined as the area type.

In the implementation, by using a relationship between the length and the width of the bounding rectangle of the candidate garbage and the preset threshold to classify the candidate garbage, the efficiency of classification is relatively high.

The following describes another implementation of the above Part III.

In some embodiments, the size information includes an area. For any candidate garbage among the plurality of candidate garbages, in a case that the area of the bounding rectangle of the candidate garbage is less than or equal to a first area threshold, the robot controller determines the garbage type of the candidate garbage as the point type. In a case that the area of the bounding rectangle of the candidate garbage is greater than the first area threshold and less than or equal to a second area threshold, the robot controller determines the garbage type of the candidate garbage as the line segment type. In a case that the area of the bounding rectangle of the candidate garbage is greater than the second area threshold, the robot controller determines the garbage type of the candidate garbage as the area type.

The first area threshold and the second area threshold are set by technical personnel based on an actual situation, which is not limited in the embodiments of the disclosure.

In this implementation, by using a relationship between the area of the bounding rectangle of the candidate garbage and the first area threshold and the second area threshold to classify the candidate garbage, the efficiency of classification is relatively high.

At 802, the robot controller determines a cleaning cost between the pool cleaning robot and each of the candidate garbages based on the position of the pool cleaning robot, and the garbage type, a position and a garbage area of each of the candidate garbages.

The garbage area of the candidate garbage may refer to an area enclosed by the contour of the candidate garbage, or may refer to an area of the bounding rectangle of the candidate garbage, which is not limited in the embodiments of the disclosure. The cleaning cost is configured to represent a cost required for the pool cleaning robot to clean the corresponding candidate garbage. In the embodiments of the disclosure, the cleaning cost includes a distance cost and an area cost. The distance cost represents a cost corresponding to a distance to be moved for the pool cleaning robot to move to the position where the candidate garbage is located. The area cost represents a cost corresponding to a cleaning area when the pool cleaning robot cleans the candidate garbage. In the embodiments of the disclosure, the cleaning cost is used to select a target garbage to be cleaned.

In some embodiments, the robot controller determines a distance between the pool cleaning robot and each of the candidate garbages based on the position of the pool cleaning robot, and the garbage type and the position of each of the candidate garbages. The robot controller determines the cleaning cost between the pool cleaning robot and each of the candidate garbages based on the distance between the pool cleaning robot and each of the candidate garbages and the garbage area of each of the candidate garbages.

To more clearly illustrate the above implementations, the following first describes a method for determining the garbage area of the candidate garbage.

In some embodiments, the robot controller determines the area of the bounding rectangle of each of the candidate garbages as the garbage area of each of the candidate garbages; or the robot controller determines the area enclosed by the contour of each of the candidate garbages as the garbage area of each of the candidate garbages.

To more clearly illustrate the above implementations, the following describes the above implementations in several parts.

Part I: the robot controller determines a distance between the pool cleaning robot and each of the candidate garbages based on the position of the pool cleaning robot, and the garbage type and the position of each of the candidate garbages.

In some embodiments, for any candidate garbage among the plurality of candidate garbages, in a case that the garbage type of the candidate garbage is a point type, the robot controller determines a center position of a center point of the candidate garbage based on the position of the candidate garbage. The robot controller determines a distance between the position of the pool cleaning robot and the center position as the distance between the pool cleaning robot and the candidate garbage. In a case that the garbage type of the candidate garbage is a line segment type, the robot controller determines, based on the position of the candidate garbage, midpoint positions of two short side midpoints of the bounding rectangle of the candidate garbage. The robot controller determines the distance between the pool cleaning robot and the candidate garbage based on the position of the pool cleaning robot and the midpoint positions of the two short side midpoints. In a case that the garbage type of the candidate garbage is an area type, the robot controller determines, based on the position of the candidate garbage, vertex positions of four vertices of the bounding rectangle of the candidate garbage. The robot controller determines the distance between the pool cleaning robot and the candidate garbage based on the position of the pool cleaning robot and the vertex positions of the four vertices.

The position of the candidate garbage includes positions of at least three vertices of the bounding rectangle of the candidate garbage. A short side of the bounding rectangle refers to two sides with shorter lengths among four sides of the bounding rectangle, and correspondingly, a long side of the bounding rectangle refers to two sides with longer lengths among the four sides of the bounding rectangle.

To more clearly illustrate the above implementations, the following describes the above implementations in several parts.
A. In a case that the garbage type of the candidate garbage is a point type, the robot controller determines a center position of a center point of the candidate garbage based on the position of the candidate garbage.

In some embodiments, in a case that the garbage type of the candidate garbage is a point type, the robot controller determines a position of a geometric center of the bounding rectangle of the candidate garbage based on the positions of the at least three vertices of the bounding rectangle of the candidate garbage, and the robot controller determines the position of the geometric center as the center position of the center point of the candidate garbage.

B. The robot controller determines a distance between the position of the pool cleaning robot and the center position as the distance between the pool cleaning robot and the candidate garbage.

In some embodiments, the robot controller determines the distance between the position of the pool cleaning robot and the center position based on a first coordinate corresponding to the position of the pool cleaning robot and a second coordinate corresponding to the center position, thus obtaining the distance between the pool cleaning robot and the candidate garbage.

C. In a case that the garbage type of the candidate garbage is a line segment type, the robot controller determines, based on the position of the candidate garbage, midpoint positions of two short side midpoints of the bounding rectangle of the candidate garbage.

In some embodiments, in a case that the garbage type of the candidate garbage is a line segment type, the robot controller determines the midpoint positions of the two short side midpoints of the bounding rectangle of the candidate garbage based on the positions of the at least three vertices of the bounding rectangle of the candidate garbage.

D. The robot controller determines the distance between the pool cleaning robot and the candidate garbage based on the position of the pool cleaning robot and the midpoint positions of the two short side midpoints.

In some embodiments, the two short side midpoints include a first short side midpoint and a second short side midpoint. The robot controller determines a first short side reference distance between the position of the pool cleaning robot and a midpoint position of the first short side midpoint. The robot controller determines a second short side reference distance between the position of the pool cleaning robot and a midpoint position of the second short side midpoint. The robot controller determines a shorter one of the first short side reference distance and the second short side reference distance as the distance between the pool cleaning robot and the candidate garbage.

E. In a case that the garbage type of the candidate garbage is an area type, the robot controller determines, based on the position of the candidate garbage, vertex positions of four vertices of the bounding rectangle of the candidate garbage.

In some embodiments, in a case that the garbage type of the candidate garbage is an area type, the robot controller determines the vertex positions of the four vertices of the bounding rectangle of the candidate garbage based on the positions of the at least three vertices of the bounding rectangle of the candidate garbage.

F. The robot controller determines the distance between the pool cleaning robot and the candidate garbage based on the position of the pool cleaning robot and the vertex positions of the four vertices.

In some embodiments, the four vertices include a first vertex, a second vertex, a third vertex and a fourth vertex, the robot controller determines a first vertex reference distance between the position of the pool cleaning robot and a vertex position of the first vertex. The robot controller determines a second vertex reference distance between the position of the pool cleaning robot and a vertex position of the second vertex. The robot controller determines a third vertex reference distance between the position of the pool cleaning robot and a vertex position of the third vertex. The robot controller determines a fourth vertex reference distance between the position of the pool cleaning robot and a vertex position of the fourth vertex. The robot controller determines the shortest of the first vertex reference distance, the second vertex reference distance, the third vertex reference distance and the fourth vertex reference distance as the distance between the pool cleaning robot and the candidate garbage.

Part II: the robot controller determines the cleaning cost between the pool cleaning robot and each of the candidate garbages based on the distance between the pool cleaning robot and each of the candidate garbages and the garbage area of each of the candidate garbages.

In some embodiments, the robot controller obtains a distance cost between the pool cleaning robot and each of the candidate garbages by multiplying a distance cost weight with the distance between the pool cleaning robot and each of the candidate garbages. The robot controller obtains an area cost of each of the candidate garbages by dividing an area cost weight by the garbage area of each of the candidate garbages. The robot controller obtains the cleaning cost between the pool cleaning robot and each of the candidate garbages by adding the distance cost and the area cost corresponding to each of the candidate garbages.

The distance cost weight and the area cost weight are set by technical personnel based on an actual situation, which is not limited in the embodiments of the disclosure.

In some embodiments, the above implementation may be represented by the following formula (1).$cost = {ω}_{d} * dis + {ω}_{a} / area$ (1)

In the formula (1), cost is the cleaning cost, ω_{d} is the distance cost weight, dis is the distance between the pool cleaning robot and each of the candidate garbages, ωₐ is the area cost weight, area is the garbage area of each of the candidate garbages, ω_{d} * dis is the distance cost, and ωₐ / area is the area cost.

At 803, the robot controller determines the target garbage from the plurality of candidate garbages based on the cleaning cost between the pool cleaning robot and each of the candidate garbages, in which the target garbage is a candidate garbage with a minimum cleaning cost.

The target garbage is a garbage selected from the plurality of candidate garbages to be cleaned.

In some embodiments, the robot controller determines a candidate garbage with a minimum cleaning cost among the plurality of candidate garbages as the target garbage.

At 804, the robot controller obtains the position of the pool cleaning robot and the position of the target garbage to be cleaned around the pool cleaning robot.

The pool cleaning robot further includes a positioning component. The positioning component is configured to determine the position of the pool cleaning robot, thus realizing positioning of the pool cleaning robot. The robot controller is able to determine the position of the garbage around the pool cleaning robot by combining information collected by the positioning component and the visual sensor, thus realizing positioning of the garbage. At step 802, the position of the pool cleaning robot and the position of the candidate garbage are used to determine the cleaning cost, and the target garbage belongs to the plurality of candidate garbages, thus in step 804, the result in step 802 may be directly used.

To more clearly illustrate the technical solutions provided in the embodiments of the disclosure, the following describes a manner of determining the position of the pool cleaning robot and the position of the candidate garbage.

In some embodiments, the robot controller determines the position of the pool cleaning robot in the cleaning region via the positioning component. The robot controller determines the position of each of the candidate garbages in the cleaning region via the visual sensor and the position of the pool cleaning robot in the cleaning region.

The cleaning region refers to a region where the pool cleaning robot is located when performing a cleaning task. Generally, the cleaning region is a region where the pool to be cleaned is located. Before the pool cleaning robot performs the cleaning task in the cleaning region, the robot controller maps the cleaning region, thus obtaining a region map corresponding to the cleaning region. Correspondingly, the position of the pool cleaning robot in the cleaning region refers to a position of the pool cleaning robot in the region map, and the position of the candidate garbage in the cleaning region refers to a position of the candidate garbage in the region map. In the above implementation, the visual sensor is used to determine a relative position between the candidate garbage and the pool cleaning robot, and the relative position is combined with the position of the pool cleaning robot to obtain the position of the candidate garbage in the cleaning region. The position of the candidate garbage includes positions of at least three vertices of the bounding rectangle of the candidate garbage.

At 805, the robot controller generates a target cleaning path of the pool cleaning robot based on the position of the pool cleaning robot, the position of the target garbage and the target garbage type of the target garbage, in which the target cleaning path is a cleaning path used when cleaning the target garbage, and the target garbage type indicates a shape of the target garbage.

The target garbage type is configured to represent the shape of the target garbage. That is, in the embodiments of the disclosure, the garbage type is determined based on the shape of the garbage, and correspondingly, the target cleaning path generated by using the target garbage type is also associated with the shape of the garbage. In the embodiments of the disclosure, the target cleaning path includes two sections of cleaning paths. A first section of the cleaning path is a path along which the pool cleaning robot moves to the position where the target garbage is located, and a second section of the cleaning path is a path along which the pool cleaning robot cleans the target garbage. The target garbage type has a relatively large influence on the second section of the cleaning path. The position of the target garbage includes positions of at least three vertices of the bounding rectangle of the target garbage.

In some embodiments, the target cleaning path is a first cleaning path, a second cleaning path or a third cleaning path. In a case that the target garbage type is a point type, the robot controller determines a center position of a center point of the target garbage based on the position of the target garbage. The robot controller obtains the first cleaning path by performing path planning between the position of the pool cleaning robot and the center position. In a case that the target garbage type is a line segment type, the robot controller determines a line segment position of a line segment corresponding to the target garbage based on the position of the target garbage. The robot controller generates the second cleaning path based on the position of the pool cleaning robot and the line segment position. In a case that the target garbage type is an area type, the robot controller determines a region where the target garbage is located based on the position of the target garbage. The robot controller generates the third cleaning path based on the position of the pool cleaning robot and the region where the target garbage is located.

A purpose of the path planning is to obtain a shortest cleaning path on a premise of avoiding an obstacle. The robot controller may adopt any path planning method in the related art to obtain the cleaning path, which is not limited in the embodiments of the disclosure.

To more clearly illustrate the above implementations, the following describes the above implementations in several parts.
A. In a case that the target garbage type is a point type, the robot controller determines a center position of a center point of the target garbage based on the position of the target garbage.

In some embodiments, in a case that the target garbage type is a point type, the robot controller determines a position of a geometric center of the bounding rectangle of the target garbage based on positions of at least three vertices of the bounding rectangle of the target garbage, and the robot controller determines the position of the geometric center as the center position of the center point of the target garbage.

B. The robot controller obtains the first cleaning path by performing path planning between the position of the pool cleaning robot and the center position.

In some embodiments, the robot controller obtains a first reference cleaning path by performing path planning between the position of the pool cleaning robot and the center position. The robot controller obtains the first cleaning path by extending the first reference cleaning path by a preset length in its original direction.

The first cleaning path is a cleaning path passing through the center point of the target garbage.

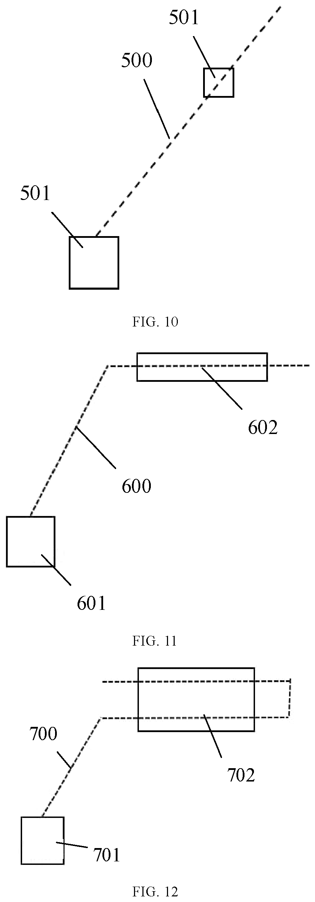

In some embodiments, referring to FIG. 10, a first cleaning path 500 is a path that starts from a pool cleaning robot 501 and passes through a center point of a target garbage 502 of a point type.

C. In a case that the target garbage type is a line segment type, the robot controller determines a line segment position of a line segment corresponding to the target garbage based on the position of the target garbage.

The line segment position includes midpoint positions of two short side midpoints of the bounding rectangle of the target garbage.

In some embodiments, in a case that the target garbage type is a line segment type, the robot controller determines the midpoint positions of the two short side midpoints of the bounding rectangle of the target garbage based on positions of at least three vertices of the bounding rectangle of the target garbage.

D. The robot controller generates the second cleaning path based on the position of the pool cleaning robot and the line segment position.

In some embodiments, the robot controller determines a starting point position of the line segment corresponding to the target garbage from the line segment position. The robot controller obtains a first initial cleaning path by performing path planning between the position of the pool cleaning robot and the starting point position. The robot controller obtains the second cleaning path by adding a second initial cleaning path of the line segment corresponding to the target garbage into the first initial cleaning path, in which the second initial cleaning path passes through a starting point and an ending point of the line segment corresponding to the target garbage.

The starting point position refers to a midpoint position of a short side midpoint, among the two short side midpoints, that is closer to the pool cleaning robot, and the closer short side midpoint is also referred to as a starting point. Correspondingly, an ending point position refers to a midpoint position of a short side midpoint, among the two short side midpoints, that is farther from the pool cleaning robot, and the farther short side midpoint is also referred to as an ending point.

In some embodiments, referring to FIG. 11, a second cleaning path 600 is a cleaning path that starts from a pool cleaning robot 601 and passes through a position where a target garbage 602 of a line segment type is located.

E. In a case that the target garbage type is an area type, the robot controller determines a region where the target garbage is located based on the position of the target garbage.

In some embodiments, in a case that the target garbage type is an area type, the robot controller determines the region where the target garbage is located based on positions of at least three vertices of the bounding rectangle of the target garbage.

F. The robot controller generates the third cleaning path based on the position of the pool cleaning robot and the region where the target garbage is located.

In some embodiments, the robot controller determines a vertex position of any vertex of the target garbage from the region where the target garbage is located. The robot controller obtains a third initial cleaning path by performing path planning between the position of the pool cleaning robot and the vertex position. The robot controller obtains a fourth initial cleaning path by performing path planning based on the region where the target garbage is located with the vertex position as a starting point, in which the fourth initial cleaning path covers the region where the target garbage is located. The robot controller obtains the third cleaning path by combining the third initial cleaning path and the fourth initial cleaning path.

The vertex of the target garbage refers to a vertex of the bounding rectangle of the target garbage.

In some embodiments, referring to FIG. 12, a third cleaning path 700 is a cleaning path that starts from a pool cleaning robot 701 and covers a region where a target garbage 702 of an area type is located.

At 806, the robot controller controls the pool cleaning robot to clean the target garbage based on the target cleaning path.

Controlling the pool cleaning robot to clean the target garbage based on the target cleaning path refers to controlling the pool cleaning robot to move based on the target cleaning path, thus cleaning the target garbage.

In some embodiments, the robot controller controls the pool cleaning robot to move according to the target cleaning path, and during the movement, turns on a water pump of the pool cleaning robot, and draws the target garbage from a suction port into a filter box via the water pump, thus cleaning the target garbage.

Optionally, after step 806, the following steps may also be executed.

In some embodiments, in a case that movement along the target cleaning path is completed, the robot controller determines whether a candidate garbage to be cleaned exists. In a case that the candidate garbage to be cleaned exists, the robot controller re-determines a target garbage from the candidate garbage to be cleaned and re-determines a target cleaning path. The robot controller controls the pool cleaning robot to clean the target garbage re-determined based on the target cleaning path re-determined.

Based on the above implementation, in a case that no candidate garbage to be cleaned exists, the robot controller obtains a target recharging path by performing path planning based on the position of the pool cleaning robot and a position of a base station. The robot controller controls the pool cleaning robot to dock with the base station based on the target recharging path.

All the above optional technical solutions may be combined in any manner to form optional embodiments of the disclosure, and details are not repeated herein.

By adopting the technical solutions provided in the embodiments of the disclosure, the position of the pool cleaning robot and the position of the target garbage to be cleaned are obtained. A target cleaning path for the target garbage is generated by using the position of the pool cleaning robot, the position of the target garbage and the target garbage type, in which a matching degree between the target cleaning path and the position of the target garbage and the target garbage type is relatively high. The pool cleaning robot is controlled to clean the target garbage based on the target cleaning path, thus the target garbage is able to be cleaned relatively thoroughly, achieving a relatively good cleaning effect.

With the development of computer technology, robot technology has also developed rapidly. For example, a user uses a sweeping robot to clean a floor of a house, uses a window cleaning robot to clean a window of the house, and uses a pool cleaning robot to clean a pool, etc.

In the related art, the positioning and mapping capabilities of a pool cleaning robot can easily fail in a weak-texture environment, such that the robot may be unable to meet cleaning requirements in such an environment and may have difficulty meeting the requirements of various user scenarios.

In some embodiments, the technical solutions provided in the embodiments of the disclosure may be executed solely by a robot controller of a pool cleaning robot, or may be executed by a terminal or a server connected to the pool cleaning robot via a network, which is not limited in the embodiments of the disclosure. The network may be a medium that provides a communication link between the pool cleaning robot and the terminal or the server, or may be the Internet including network devices and transmission media, which is not limited herein. The transmission medium may be a wired link, for example but not limited to, a coaxial cable, an optical fiber and a digital subscriber line (DSL), etc., or a wireless link, for example but not limited to, wireless fidelity (Wi-Fi), Bluetooth, and a mobile communication network, etc.

The above terminal may interact with the pool cleaning robot via the network, so as to receive a message from the pool cleaning robot or send a message to the pool cleaning robot. The terminal may be hardware, or may be software. When the terminal is hardware, the terminal may be various electronic devices, including but not limited to a smart watch, a smart phone, a tablet computer, a laptop computer and a desktop computer, etc. When the terminal is software, the terminal may be installed in the electronic devices listed above, and may be implemented as a plurality of software or software modules (for example, for providing distributed services), or may be implemented as a single software or software module, which is not specifically limited herein.

The above server may be a server that provides control services for various pool cleaning robots. It should be noted that, the server may be hardware, or may be software. When the server is hardware, the server may be implemented as a distributed server cluster composed of a plurality of servers, or may be implemented as a single server. When the server is software, the server may be implemented as a plurality of software or software modules (for example, for providing distributed services), or may be implemented as a single software or software module, which is not specifically limited herein. The server may be, but is not limited to, a hardware server, a virtual server, a cloud server, etc.

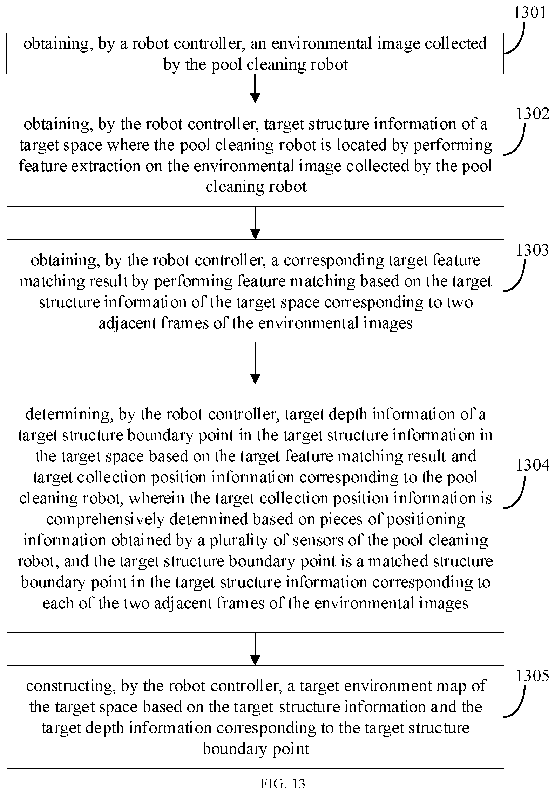

In view of the above problem, in combination with some examples, another implementation provided in the embodiments of the disclosure is described in more detail. Referring to FIG. 13, the method includes the following steps.

At 1301, the robot controller obtains an environmental image collected by the pool cleaning robot.

When moving in a target space, the pool cleaning robot is able to collect the environmental image within a visual range via a first sensor. The first sensor may include, but is not limited to, an image capture device such as a monocular camera and a binocular camera.

At 1302, the robot controller obtains target structure information of a target space where the pool cleaning robot is located by performing feature extraction on the environmental image collected by the pool cleaning robot.

The target structure information may include, but is not limited to, at least one of: target space constituent element information and target space auxiliary element information in the target space. The target space constituent element information may include, but is not limited to, structure boundary information of a constituent element corresponding to the target space. The constituent element may include, but is not limited to, at least one of: a bottom surface, a wall surface, a step tread, a step riser. The target space auxiliary element information may include, but is not limited to, structure boundary information of an auxiliary element corresponding to the target space. The auxiliary element may include, but is not limited to, at least one of the following auxiliary devices: a wall lamp, a floor lamp, a water inlet, a water outlet. The structure boundary information may include, but is not limited to, first position information corresponding to a structure boundary of a constituent element or an auxiliary element in the environmental image and second position information of a region enclosed by a contour of the structure boundary in the environmental image.

In some embodiments, an implementation process of obtaining the target structure information of the target space where the pool cleaning robot is located by performing feature extraction on the environmental image collected by the pool cleaning robot may include, but is not limited to: first extracting structure boundary information from the environmental image collected by the pool cleaning robot, in which the structure boundary information may include, but is not limited to, first position information corresponding to a structure boundary existing in the environmental image and second position information of a region enclosed by a contour of the structure boundary. For example, but not limited to, a segmentation model or a boundary extraction model or an edge recognition model may be used to perform segmentation and extraction on constituent elements of a target space region and common devices (auxiliary elements) in the target space, and recognize structure boundary coordinates at a pixel level (the first position information) of the devices in an image coordinate system corresponding to the environmental image and specific position information of an included region (the second position information). Then, the target structure information of the target space is determined based on the structure boundary information. For example, but not limited to, the target structure information of the target space is obtained by fusing the structure boundary information corresponding to each of a plurality of environmental images collected during the movement of the pool cleaning robot.

In some embodiments, the implementation process of obtaining the target structure information of the target space where the pool cleaning robot is located by performing feature extraction on the environmental image collected by the pool cleaning robot may also include, but is not limited to: performing segmentation and recognition respectively on target space constituent element information and target space auxiliary element information of the environmental image collected by the pool cleaning robot via a multi-task model; and obtaining the target structure information of the target space where the pool cleaning robot is located. The target space constituent element information may include, but is not limited to, structure boundary information of constituent elements constituting the target space, such as a pool bottom, a pool wall, a step tread, and a step riser. The target space auxiliary element information may include, but is not limited to, structure boundary information of auxiliary devices (auxiliary elements) installed in the target space, such as a wall lamp, a floor lamp, a water inlet, and a water outlet. The multi-task model may be, but is not limited to, obtained by training based on a plurality of sample environmental images with known space constituent element information and known space auxiliary element information.

At 1303, the robot controller obtains a corresponding target feature matching result by performing feature matching based on the target structure information of the target space corresponding to two adjacent frames of the environmental images.

In some embodiments, after the target structure information corresponding to the environmental image is obtained, feature matching may be, but is not limited to, performed on the target structure information of the target space corresponding to two adjacent frames of the environmental images, for example, but not limited to, performing similarity calculation, to obtain matched target structure boundary points of the two adjacent frames of the environmental images, that is, structure boundary points belonging to a same position on a same structure (a constituent element or an auxiliary element) in the two adjacent frames of the environmental images, or structure boundary points with a corresponding similarity greater than a threshold in the two adjacent frames of the environmental images. The similarity calculation may be, but is not limited to, performed based on features of a structure boundary point in the environmental image, such as a pixel, a color, a position, a slope or a curvature of a position on a corresponding boundary line.

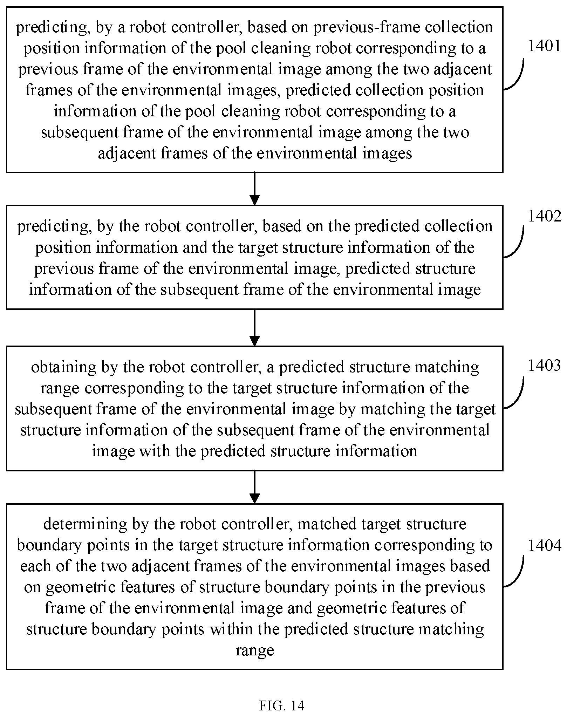

In some embodiments, as shown in FIG. 14, an implementation process of obtaining the corresponding target feature matching result by performing feature matching based on the target structure information of the target space corresponding to two adjacent frames of the environmental images in the above 1303 may include, but is not limited to, the following steps.

At 1401, the robot controller predicts, based on previous-frame collection position information of the pool cleaning robot corresponding to a previous frame of the environmental image among the two adjacent frames of the environmental images, predicted collection position information of the pool cleaning robot corresponding to a subsequent frame of the environmental image among the two adjacent frames of the environmental images.

The pool cleaning robot may, for example, use a built-in kinematic model of the pool cleaning robot to estimate a movement direction and a distance during an interval between the two adjacent frames of the environmental images based on a collection time interval corresponding to the two adjacent frames of the environmental images, a moving speed, a steering angle, etc., and then determining the predicted collection position information of the pool cleaning robot corresponding to the subsequent frame of the environmental image by combining the estimated movement direction and distance with the previous-frame collection position information of the pool cleaning robot corresponding to the previous frame of the environmental image.

At 1402, the robot controller predicts, based on the predicted collection position information and the target structure information of the previous frame of the environmental image, predicted structure information of the subsequent frame of the environmental image.

After obtaining the predicted collection position information of the pool cleaning robot corresponding to the subsequent frame of the environmental image, it is also possible to, but not limited to, perform translation and/or rotation transformation on the target structure information of the previous frame of the environmental image based on a difference between the previous-frame collection position information of the pool cleaning robot corresponding to the previous frame of the environmental image and the predicted collection position information of the pool cleaning robot corresponding to the subsequent frame of the environmental image, thus obtaining the corresponding predicted structure information of the subsequent frame of the environmental image, i.e., structure boundary information corresponding to structure boundaries of the constituent elements and/or the auxiliary elements in the previous frame of the environmental image in the subsequent frame of the environmental image.

At 1403, the robot controller obtains a predicted structure matching range corresponding to the target structure information of the subsequent frame of the environmental image by matching the target structure information of the subsequent frame of the environmental image with the predicted structure information.

After the target structure information actually extracted from the subsequent frame of the environmental image and the predicted structure information obtained by prediction are obtained, it is possible to, but not limited to, directly match the target structure information corresponding to the subsequent frame of the environmental image with the predicted structure information. For example, but not limited to, respectively matching structure boundary points corresponding to the target structure information and the predicted structure information (for example, but not limited to, performing similarity calculation), and screening out a set of matched (for example, but not limited to, with a similarity greater than a preset value) structure boundary points in the target structure information and the predicted structure information, thus obtaining the predicted structure matching range corresponding to the target structure information of the subsequent frame of the environmental image.

At 1404, the robot controller determines matched target structure boundary points in the target structure information corresponding to each of the two adjacent frames of the environmental images based on geometric features of structure boundary points in the previous frame of the environmental image and geometric features of structure boundary points within the predicted structure matching range.

The geometric features may include, but are not limited to, a slope, a curvature, etc. corresponding to the structure boundary point. After the predicted structure matching range corresponding to the subsequent frame of the environmental image is obtained, in order to ensure accuracy of feature matching, it is also possible to, but not limited to, directly calculate a difference or a similarity between the geometric features of the structure boundary points in the previous frame of the environmental image and the geometric features of the structure boundary points within the predicted structure matching range corresponding to the subsequent frame of the environmental image, and then determine the matched target structure boundary points in the target structure information corresponding to each of the two adjacent frames of the environmental images based on the difference or the similarity. The matched target structure boundary points may be, but are not limited to, structure boundary points with the difference less than a target value or the similarity greater than a threshold.

In the embodiments of the disclosure, by performing feature matching based on the target structure information of the target space corresponding to the two adjacent frames of the environmental images in the above manner, matched target structure boundary points in the two adjacent frames of the environmental images are able to be accurately found, thus ensuring continuity and accuracy of subsequent mapping.

Referring to FIG. 13, as shown in FIG. 13, after obtaining the corresponding target feature matching result by performing feature matching based on the target structure information of the target space corresponding to two adjacent frames of the environmental images at step 1303, the technical solution further includes the following steps.

At 1304, the robot controller determines target depth information of a target structure boundary point in the target structure information in the target space based on the target feature matching result and target collection position information corresponding to the pool cleaning robot, in which the target collection position information is comprehensively determined based on pieces of positioning information obtained by a plurality of sensors of the pool cleaning robot, and the target structure boundary point is a matched structure boundary point in the target structure information corresponding to each of the two adjacent frames of the environmental images.

The plurality of sensors may include, but are not limited to, a first sensor, a second sensor and an ultrasonic sensor. The first sensor is configured to collect the environmental image of the pool cleaning robot; the second sensor is configured to collect motion data of the pool cleaning robot. The second sensor may include, but is not limited to, at least one of: an inertial measurement unit, an encoder, or a flow meter. The ultrasonic sensor is configured to collect ultrasonic positioning data of the pool cleaning robot. The target collection position information is actual collection position information of the pool cleaning robot corresponding to a subsequent frame of the environmental image among the two adjacent frames of the environmental images corresponding to the target feature matching result. The target depth information may include, but is not limited to, position coordinates of the target structure boundary point in the three-dimensional target space.

Further, the target feature matching result includes matched target structure boundary points in the two adjacent frames of the environmental images. An implementation process of determining the target depth information of the target structure boundary point in the target structure information in the target space based on the target feature matching result and the target collection position information corresponding to the pool cleaning robot at step 1304 may include, but is not limited to: estimating the target depth information of the target structure boundary point in the target space based on positions of the target structure boundary point in the two adjacent frames of the environmental images and the target collection position information corresponding to the pool cleaning robot; for example, but not limited to, first determining relative position information between the target structure boundary point and the pool cleaning robot based on a difference between the positions of the target structure boundary point in the two adjacent frames of the environmental images, and then calculating the target depth information of the target structure boundary point in the target space based on the relative position information and the target collection position information corresponding to the pool cleaning robot, i.e., position coordinates of the pool cleaning robot in the target space when collecting the subsequent frame of the environmental image.

At 1305, the robot controller constructs a target environment map of the target space based on the target structure information and the target depth information corresponding to the target structure boundary point.

The target environment map corresponding to the target space may, for example, be directly constructed by using the target structure information corresponding to the environmental image collected and the target depth information corresponding to the target structure boundary point during a mapping process of the pool cleaning robot.

In some embodiments, when the pool cleaning robot needs to be used to map the target space, after receiving a corresponding mapping instruction, the pool cleaning robot may, but is not limited to, move along a target mapping path corresponding to the target space, and collect the environmental image within a preset visual range at a preset frequency during the movement. After completing the step of moving along the target mapping path, the pool cleaning robot may construct the target environment map of the target space based on pieces of target structure information corresponding to a plurality of environmental images on the target mapping path and pieces of the target depth information corresponding to the target structure boundary points matched in two adjacent frames of the environmental images among the plurality of environmental images.

In some embodiments, the pool cleaning robot may construct the target environment map of the target space after completing traversal of the target space according to the target mapping path, based on all the target mapping paths during the traversing process and the correspondingly obtained target structure information and the target depth information corresponding to the target structure boundary points, or may construct the target environment map of the target space in real time during the process of traversing the target space based on the target mapping path that changes in real time and the correspondingly obtained target structure information and the target depth information corresponding to the target structure boundary points, that is, constructing the target environment map for corresponding traversed positions in the target space while traversing the target space, which is not limited in the embodiments of the disclosure.

In some embodiments, after constructing the target environment map of the target space, the pool cleaning robot may also optimize the target environment map by using various optimization algorithms, for example, removing incorrectly matched features, adjusting a scale of the map, etc., so as to improve accuracy and quality of the target environment map.

In the embodiments of the disclosure, by comprehensively using a plurality of sensors to obtain the target collection position information corresponding to the pool cleaning robot, positioning accuracy of the pool cleaning robot in an environment with a large amount of weak textures underwater is ensured. In addition, by performing feature matching based on the target structure information of the target space corresponding to two adjacent frames of the environmental images, and estimating the target depth information of the matched structure boundary points in the two adjacent frames of the environmental images in the target space based on the target collection position information obtained by the plurality of sensors, so as to construct the target environment map of the target space based on the extracted target structure information and the corresponding target depth information, thus comprehensively using the plurality of sensors, feature extraction and feature matching, and depth estimation to realize perception and analysis of an internal structure of a swimming pool (the target space), improving a mapping capability and stability of the pool cleaning robot.

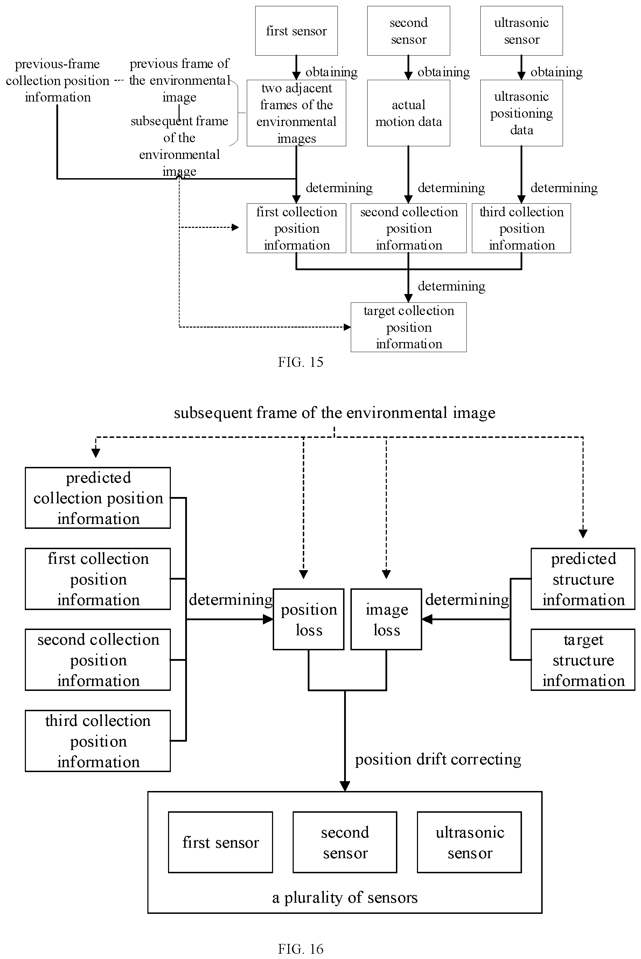

In some possible embodiments, as shown in FIG. 15, before determining the target depth information of the target structure boundary point in the target structure information in the target space based on the target feature matching result and the target collection position information corresponding to the pool cleaning robot at step 1304, the technical solution may also, but is not limited to, include: obtaining two adjacent frames of the environmental images via the first sensor, obtaining actual motion data of the pool cleaning robot via one or more of the second sensors (for example, but not limited to, an actually moved distance, direction, speed, etc.), and obtaining ultrasonic positioning data of the pool cleaning robot via the ultrasonic sensor;
determining, based on the two adjacent frames of the environmental images and previous-frame collection position information corresponding to a previous frame of the environmental image among the two adjacent frames of the environmental images, first collection position information corresponding to a subsequent frame of the environmental image among the two adjacent frames of the environmental images (for example, but not limited to, the first collection position information corresponding to the subsequent frame of the environmental image may be calculated according to position change information of a same structural element in the two adjacent frames of the environmental images and the previous-frame collection position information corresponding to the previous frame of the environmental image), determining second collection position information corresponding to the subsequent frame of the environmental image based on the actual motion data (for example, but not limited to, the second collection position information corresponding to the subsequent frame of the environmental image may be calculated based on a corresponding moved distance and direction between the two adjacent frames of the environmental images and the previous-frame collection position information corresponding to the previous frame of the environmental image), and determining third collection position information corresponding to the subsequent frame of the environmental image based on the ultrasonic positioning data (for example, but not limited to, position information indicated in the ultrasonic positioning data may be directly determined as the third collection position information corresponding to the subsequent frame of the environmental image); and determining the target collection position information corresponding to the subsequent frame of the environmental image based on the first collection position information, the second collection position information and the third collection position information, for example, but not limited to, obtaining the target collection position information corresponding to the subsequent frame of the environmental image by performing weighted fusion on the first collection position information, the second collection position information and the third collection position information according to a preset weight ratio.

In the embodiments of the disclosure, positioning of the pool cleaning robot may be comprehensively performed via a plurality of sensors such as a visual sensor (the first sensor), a motion sensor (the second sensor) and the ultrasonic sensor, thus realizing perception of a current environment while ensuring real-time accurate positioning of the pool cleaning robot in a weak texture environment.

In some embodiments, in order to further ensure the accuracy of real-time positioning of the pool cleaning robot and improve the positioning precision and positioning capability of the pool cleaning robot, as shown in FIG. 16, after determining the target collection position information corresponding to the subsequent frame of the environmental image based on the first collection position information, the second collection position information and the third collection position information, the technical solution further includes: determining a position loss corresponding to the subsequent frame of the environmental image based on the predicted collection position information, the first collection position information, the second collection position information and the third collection position information corresponding to the subsequent frame of the environmental image, for example, but not limited to, first calculating respective position differences between the predicted collection position information and each of the first collection position information, the second collection position information and the third collection position information, and then obtaining the position loss corresponding to the subsequent frame of the environmental image by performing weighted fusion on the respective position differences; determining an image loss corresponding to the subsequent frame of the environmental image based on the predicted structure information and the target structure information corresponding to the subsequent frame of the environmental image, for example, but not limited to, comprehensively calculating the image loss corresponding to the subsequent frame of the environmental image based on a position deviation value and a geometric feature deviation value between respective corresponding structure boundaries in the predicted structure information and the target structure information; and correcting position drifts of the plurality of sensors based on the position loss and the image loss corresponding to the subsequent frame of the environmental image, for example, but not limited to, adjusting internal parameters of the plurality of sensors, such as temperature drift, zero offset, etc., or adjusting positioning data collected by a sensor (for example, the ultrasonic sensor) itself, so as to minimize the position loss and the image loss corresponding to the subsequent frame of the environmental image. Thus, a positioning error of the pool cleaning robot is continuously corrected during a mapping process, and positioning precision of a next frame of the environmental image corresponding to the subsequent frame of the environmental image is improved.

In some embodiments, in order to eliminate interference of abnormal ultrasonic positioning data on accurate positioning of the pool cleaning robot, before determining the target collection position information corresponding to the subsequent frame of the environmental image based on the first collection position information, the second collection position information and the third collection position information, it is also possible to, but not limited to, judge whether the ultrasonic positioning data collected by the ultrasonic sensor satisfies a non-line-of-sight condition based on the subsequent frame of the environmental image. The non-line-of-sight condition indicates a situation where an occlusion exists in the subsequent frame of the environmental image and the ultrasonic positioning data exhibits an abnormal jump. The abnormal jump indicates a situation where a difference between the ultrasonic positioning data corresponding to the subsequent frame of the environmental image and the ultrasonic positioning data corresponding to a previous frame of the environmental image is greater than a preset ultrasonic positioning threshold, that is, a situation where an ultrasonic positioning jump amplitude is relatively large. In a case that the ultrasonic positioning data corresponding to the subsequent frame of the environmental image satisfies the non-line-of-sight condition, it indicates that the ultrasonic positioning data belongs to abnormal positioning data, and a relatively large positioning error may exist, then the ultrasonic positioning data is discarded, and the target collection position information corresponding to the subsequent frame of the environmental image is determined only based on the first collection position information and the second collection position information. In a case that the ultrasonic positioning data does not satisfy the non-line-of-sight condition, it indicates that the ultrasonic positioning data belongs to normal positioning data, and the positioning is relatively accurate, then the step of determining the target collection position information corresponding to the subsequent frame of the environmental image based on the first collection position information, the second collection position information and the third collection position information may be directly executed, thus only using relatively accurate ultrasonic positioning data to assist the pool cleaning robot in meeting a more accurate positioning requirement in a weak texture environment.

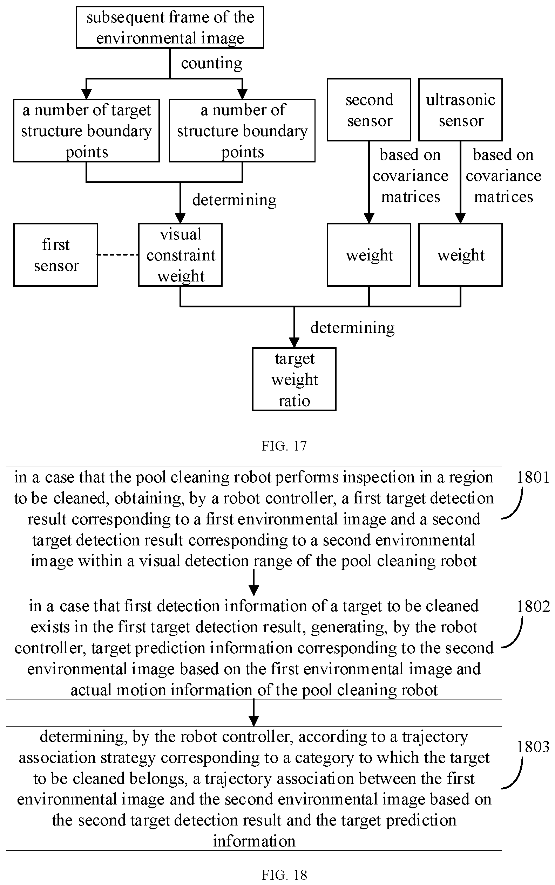

In some embodiments, in order to avoid an impact of a visual abnormal tracking situation of the pool cleaning robot on a positioning precision of the pool cleaning robot, as shown in FIG. 17, before determining the target collection position information corresponding to the subsequent frame of the environmental image based on the first collection position information, the second collection position information and the third collection position information, the method further includes the following.

A number of target structure boundary points satisfying a preset constraint condition in the subsequent frame of the environmental image, and a total number of structure boundary points in the target structure information corresponding to the subsequent frame of the environmental image are counted. The preset constraint condition is that matched target structure boundary points exist in at least two consecutive frames of the environmental image. The preset constraint condition may include, but is not limited to, a good constraint condition (i.e., matched target structure boundary points exist in more than two consecutive frames of the environmental images, that is, the same target structure boundary point is tracked in more than two consecutive frames of the environmental images) and a general constraint condition (i.e., matched target structure boundary points exist in only two consecutive frames of the environmental images, that is, the same target structure boundary point is tracked in only two consecutive frames of the environmental images). A higher ratio between the number of target structure boundary points satisfying the preset constraint condition and the total number of structure boundary points indicates a better tracking effect of the pool cleaning robot and higher precision of visual positioning based on the environmental image collected by the pool cleaning robot. Accordingly, a visual constraint weight corresponding to the first sensor may be determined based on the ratio. For example, but not limited to, different ratios correspond to different visual constraint weights, or when the ratio is greater than or equal to a first threshold (for example, but not limited to, 0.9, 0.8, etc.), the visual constraint weight is set as a first weight (for example, but not limited to, 1, 0.9, etc.), when the ratio is less than the first threshold and greater than a second threshold (for example, but not limited to, 0.6, 0.5, etc.), the visual constraint weight is set as a second weight (for example, but not limited to, 0.6, 0.5, etc.), and when the ratio is less than or equal to the second threshold, the visual constraint weight is set as a third weight (for example, but not limited to, 0, 0.2, etc.). Further, weights corresponding to the second sensor and the ultrasonic sensor may also be respectively determined based on covariance matrices corresponding to the second sensor and the ultrasonic sensor. Finally, a target weight ratio among the first sensor, the second sensor and the ultrasonic sensor may be determined based on the visual constraint weight corresponding to the first sensor, and the weights corresponding to the second sensor and the ultrasonic sensor. More accurate target collection position information corresponding to the subsequent frame of the environmental image is obtained by fusing the first collection position information obtained via the first sensor, the second collection position information obtained via the second sensor and the third collection position information obtained via the ultrasonic sensor based on the target weight ratio.

In the related art, with the rapid development of computer vision target detection technology in recent years, an effect of tracking by detection has also been significantly improved, and there are more and more real-world applications. Currently, most algorithms that realize multi-target tracking via computer vision target detection use a Kalman filter based on a constant velocity motion model assumption to predict a position of a currently detected target bounding box in a next frame, and directly match the predicted position with a detection result of the next frame, thus realizing data association.

In an application scenario with camera motion such as a pool cleaning robot, there are a plurality of types of targets to be cleaned by the pool cleaning robot, and it is also difficult to ensure that a motion of the pool cleaning robot is at a constant velocity. Thus, a result of predicting a bounding box of a target tracked by the pool cleaning robot using the Kalman filter based on the constant velocity motion model assumption is obviously not accurate enough, which easily affects the accuracy and efficiency of target tracking.

In view of the above problem, in combination with some examples, another implementation provided in the embodiments of the disclosure is described in more detail. Referring to FIG. 18, the method includes the following steps.

At 1801, in a case that the pool cleaning robot performs inspection in a region to be cleaned, the robot controller obtains a first target detection result corresponding to a first environmental image and a second target detection result corresponding to a second environmental image within a visual detection range of the pool cleaning robot.

A traveling unit is configured at a bottom of the pool cleaning robot, and the pool cleaning robot is able to be controlled to perform mobile inspection in the region to be cleaned by driving the traveling unit. The traveling unit includes a traveling wheel or a propeller. Driving the traveling unit means driving the traveling wheel to rotate or driving the propeller to generate thrust, thus driving the pool cleaning robot to move. When performing inspection in the region to be cleaned, the pool cleaning robot also obtains, via an image capture device, an environmental image within the visual detection range of the pool cleaning robot at a preset collection frequency. For example, but not limited to, the environmental image includes a first environmental image and a next frame image of the first environmental image, i.e., a second environmental image. A target detection algorithm or an image detection algorithm is used to perform target detection on the first environmental image and the second environmental image, so as to detect whether a target to be cleaned exists in the first environmental image and the second environmental image within the visual detection range of the pool cleaning robot and, when the target to be cleaned exists, to obtain detection information such as a corresponding position, an area, a detection region, and a category of the target to be cleaned, thereby obtaining the first target detection result corresponding to the first environmental image and the second target detection result corresponding to the second environmental image.

Optionally, after obtaining the first environmental image, the pool cleaning robot may first extract an environmental feature in the first environmental image. The environmental feature may include, but is not limited to, a shape, a size, a color, a texture, etc. Then, a classifier is used to distinguish the target to be cleaned from a background in the first environmental image based on the extracted environmental feature, so as to perform target detection on the first environmental image and obtain the first target detection result. The classifier may include, but is not limited to, a support vector machine, a convolutional neural network, etc.

In some embodiments, a manner of obtaining the second target detection result corresponding to the second environmental image is the same as that of obtaining the first target detection result corresponding to the first environmental image, and details are not repeated herein.

Optionally, in order to ensure accuracy of target detection, before performing target detection on the first environmental image and the second environmental image, the first environmental image and the second environmental image may first be preprocessed, for example, but not limited to, processing operations such as noise reduction, contrast enhancement, and color adjustment, so as to subsequently perform more accurate target detection based on the preprocessed first environmental image and second environmental image.

In some embodiments, the region to be cleaned may be a region corresponding to a swimming pool or a pool to be cleaned, or may be any underwater region pre-set by a user, which is not limited in the embodiments of the disclosure. The pool cleaning robot includes at least one image capture device. The visual detection range is determined based on a parameter, an installation position and a rotatable angle range of the at least one image capture device.

It should be noted that, in order to improve cleaning efficiency, a plurality of image capture devices may be installed on the pool cleaning robot. The plurality of image capture devices are able to work cooperatively, and expand the visual detection range of the pool cleaning robot by splicing the collected environmental images or fusing the environmental images. That is, the visual detection range may include a sum of a horizontal range and a vertical range that the plurality of image capture devices are able to detect. Further, the visual detection range may also be updated as working states of the image capture devices are updated. For example, during a cleaning process of the pool cleaning robot, in a case that one image capture device suddenly works abnormally or is damaged, the visual detection range of the pool cleaning robot also becomes smaller accordingly. Optionally, the visual detection range of the pool cleaning robot may further be a sum of detection ranges of the image capture device of the pool cleaning robot and other perception devices such as a lidar and an ultrasonic sensor. Environmental information obtained by the other perception devices is combined with the environmental image captured by the image capture device, so as to form more comprehensive environmental perception, thus realizing more efficient and accurate cleaning of the region to be cleaned.

At 1802, in a case that first detection information of a target to be cleaned exists in the first target detection result, the robot controller generates target prediction information corresponding to the second environmental image based on the first environmental image and actual motion information of the pool cleaning robot.

The target to be cleaned may include, but is not limited to, garbage, oil stain, stone, nut, leaf, sand pile, crushed stone pile, etc. In a case that the first detection information of the target to be cleaned exists in the first target detection result, it may be considered that the target to be cleaned exists in the first environmental image, and the target prediction information corresponding to the target to be cleaned in the second environmental image may be estimated based on the first environmental image corresponding to the target to be cleaned and the actual motion information of the pool cleaning robot, so as to subsequently realize trajectory association. The first detection information may include, but is not limited to, feature information such as a target category, a target position, a target detection region and a target detection area corresponding to the target detection region of the target to be cleaned existing in the first environmental image. The target detection region may be, but is not limited to, a minimum bounding rectangle region corresponding to the target to be cleaned in the first environmental image. The target position is configured to represent a relative position between the target to be cleaned in the first environmental image and the pool cleaning robot. The target prediction information may include, but is not limited to, a prediction region corresponding to the target to be cleaned in the first environmental image in the second environmental image, and a prediction area and a prediction position corresponding to the prediction region.

Further, an implementation process of generating the target prediction information corresponding to the second environmental image based on the first environmental image and the actual motion information of the pool cleaning robot at step 1802 may include: generating initial prediction information corresponding to the second environmental image based on the first environmental image via a Kalman filter or a variant of the Kalman filter, that is, predicting a region position where the target to be cleaned in the first environmental image is located in a next frame of the environmental image; and correcting the initial prediction information based on the actual motion information of the pool cleaning robot, so that a prediction process of the Kalman filter is more consistent with an actual motion condition corresponding to the pool cleaning robot, eliminating an influence of the Kalman filter based on the constant velocity motion model assumption on accuracy of the target prediction information, thus obtaining more accurate target prediction information corresponding to the second environmental image, and improving accuracy of subsequent trajectory association and a target tracking efficiency of the pool cleaning robot.

In some embodiments, the variant of the Kalman filter may include, but is not limited to, an extended Kalman filter, a quaternion-based Kalman filter, a state error Kalman filter, etc.

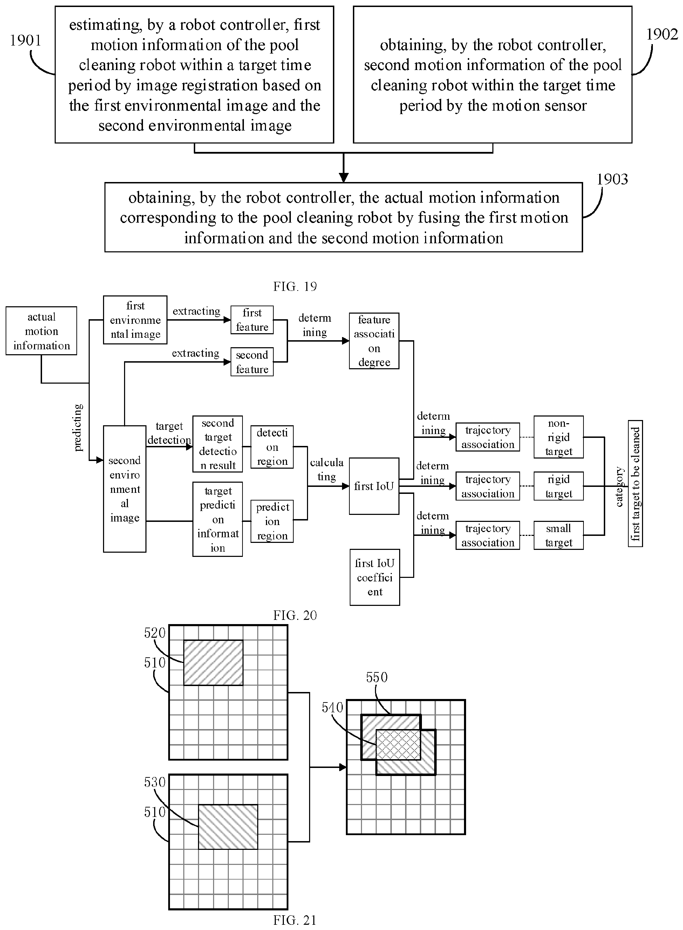

Optionally, in addition to the image capture device, the pool cleaning robot may further include, but is not limited to, a motion sensor. The motion sensor may include, but is not limited to, an inertial measurement unit, an encoder, a flow sensor, etc., and is configured to detect motion information of the pool cleaning robot. As shown in FIG. 19, before generating the target prediction information corresponding to the second environmental image based on the first environmental image and the actual motion information of the pool cleaning robot at step 1802, the method may further include, but is not limited to, the following steps.

At 1901, the robot controller estimates first motion information of the pool cleaning robot within a target time period by image registration based on the first environmental image and the second environmental image.

The target time period is a time period between a first collection time corresponding to the first environmental image and a second collection time corresponding to the second environmental image. After obtaining the first environmental image and the second environmental image, the pool cleaning robot may first extract a first feature in the first environmental image and a second feature in the second environmental image, then estimate a transformation matrix between the first environmental image and the second environmental image based on the corresponding first feature and second feature of corresponding points between the first environmental image and the second environmental image, including, for example, translation, rotation, and scaling, and finally estimate the first motion information of the pool cleaning robot within the corresponding target time period between the first environmental image and the second environmental image based on the transformation matrix. The transformation matrix may include, but is not limited to, a translation component and a rotation and scaling component. The translation component indicates a displacement of the pool cleaning robot between the first collection time and the second collection time, and the rotation and scaling component indicates information of a posture and a field of view change of the pool cleaning robot. The first motion information may include, but is not limited to, first posture information and first displacement information of the pool cleaning robot in an image coordinate system within the target time period.

At 1902, the robot controller obtains second motion information of the pool cleaning robot within the target time period by the motion sensor.

The second motion information may include, but is not limited to, second posture information and second displacement information of the pool cleaning robot in a world coordinate system within the target time period.

Optionally, when the motion sensor included in the pool cleaning robot is an inertial measurement unit, an angular velocity and an acceleration of the pool cleaning robot moving in the world coordinate system within the target time period may be first obtained via the inertial measurement unit, then the second posture information of the pool cleaning robot in the world coordinate system is obtained by integrating the angular velocity, a moving speed of the pool cleaning robot is obtained by integrating the acceleration, and the second displacement information of the pool cleaning robot in the world coordinate system is obtained by integrating the speed.

In some embodiments, the pool cleaning robot may include a plurality of motion sensors. In order to ensure accuracy of the second motion information, thus improving accuracy of the actual motion information of the pool cleaning robot, the second motion information may be, but is not limited to, obtained by performing weighted summation on a plurality of pieces of motion information obtained by the plurality of motion sensors of the pool cleaning robot.

At 1903, the robot controller obtains the actual motion information corresponding to the pool cleaning robot by fusing the first motion information and the second motion information.

After obtaining the first motion information and the second motion information, the second motion information may be first mapped to the image coordinate system, and then weighted and fused with the first motion information to obtain more accurate actual motion information corresponding to the pool cleaning robot.

In some embodiments, since the first posture information in the first motion information estimated via image registration is relatively accurate, and the second displacement information in the second motion information obtained via the motion sensor is relatively accurate, thus, in order to obtain more accurate actual motion information of the pool cleaning robot, when fusing the first motion information and the second motion information, a fusion weight of the first posture information in the first motion information may be set to be greater than a fusion weight of the second posture information in the second motion information, and a fusion weight of the first displacement information in the first motion information may be set to be less than a fusion weight of the second displacement information in the second motion information.

Optionally, in order to ensure efficiency of obtaining the actual motion information corresponding to the pool cleaning robot, the first motion information estimated via image registration at step 1901 or the second motion information obtained via the motion sensor at step 1902 may also be directly used as the actual motion information corresponding to the pool cleaning robot, to participate in generating the target prediction information corresponding to the second environmental image.

At 1803, the robot controller determines, according to a trajectory association strategy corresponding to a category to which the target to be cleaned belongs, a trajectory association between the first environmental image and the second environmental image based on the second target detection result and the target prediction information.

The trajectory association is used to judge whether a trajectory of the pool cleaning robot corresponding to each of the first environmental image and the second environmental image represents a motion cleaning trajectory of the pool cleaning robot tracking the same target to be cleaned. In a case that the target to be cleaned also exists in the second environmental image, it indicates that a certain target tracking association may exist between the second environmental image and the first environmental image, and the trajectory association between the first environmental image and the second environmental image may be determined based on the second target detection result and the target prediction information according to the trajectory association strategy corresponding to the category to which the target to be cleaned belongs. Different categories to which the target to be cleaned belongs correspond to different trajectory association strategies, thus a targeted trajectory association strategy may be adopted based on the category to which the target to be cleaned belongs, improving an operation efficiency and a target tracking efficiency of the pool cleaning robot, realizing targeted tracking and cleaning according to the category of the target to be cleaned, and further improving a cleaning effect and an inspection efficiency of the pool cleaning robot.

As shown in FIG. 20, the second target detection result includes a detection region corresponding to the target to be cleaned in the second environmental image. The target prediction information includes a prediction region corresponding to the target to be cleaned in the second environmental image. An implementation process of determining, according to the trajectory association strategy corresponding to the category to which the target to be cleaned belongs, the trajectory association between the first environmental image and the second environmental image based on the second target detection result and the target prediction information at step 1803 may include: calculating a first intersection over union (IoU) between the detection region and the prediction region, that is, a ratio of an intersection area to a union area of the detection region and the prediction region; and determining, according to the trajectory association strategy corresponding to the category to which the target to be cleaned belongs, the trajectory association between the first environmental image and the second environmental image based on the first IoU.

In some embodiments, as shown in FIG. 21, after obtaining the detection region 520 corresponding to the target to be cleaned in the second environmental image 510 and the prediction region 530, an intersection area corresponding to an intersection region 540 between the detection region 520 and the prediction region 530 is calculated to be 6, and a union area corresponding to a union region 550 of the detection region 520 and the prediction region 530 is calculated to be 18, thus the first IoU between the detection region 520 and the prediction region 530 is calculated to be 1/3.

Further, as shown in FIG. 20, in a case that the target to be cleaned belongs to a rigid target, in order to reduce a calculation amount of trajectory association and improve the operation efficiency and the target tracking efficiency of the pool cleaning robot, the trajectory association between the first environmental image and the second environmental image may be directly determined based on the first IoU between the detection region and the prediction region corresponding to the target to be cleaned in the second environmental image. For example, but not limited to, the value of the first IoU is directly determined as an association value corresponding to the trajectory association, or when the first IoU is greater than or equal to an association threshold, it is determined that the trajectory association exists between the first environmental image and the second environmental image. A trajectory of the detection region corresponding to the second environmental image is able to be associated with a cleaning trajectory of the pool cleaning robot corresponding to the first environmental image, that is, the trajectory between the first environmental image and the second environmental image is a trajectory generated by the pool cleaning robot tracking the same target to be cleaned. When the first IoU is less than the association threshold, it is determined that no trajectory association exists between the first environmental image and the second environmental image, and the trajectory of the detection region corresponding to the second environmental image is unable to be associated with the cleaning trajectory of the pool cleaning robot corresponding to the first environmental image, that is, the trajectory between the first environmental image and the second environmental image is a trajectory generated by the pool cleaning robot tracking different targets to be cleaned. The rigid target indicates a target to be cleaned that does not undergo non-rigid deformation, for example, but not limited to, a nut, a stone, etc.

In a case that the target to be cleaned is a non-rigid target, in order to ensure accuracy of trajectory association and avoid a problem of inaccurate tracking caused by non-rigid deformation of the target to be cleaned during a tracking process, a feature association degree of the target to be cleaned between the first environmental image and the second environmental image may be first determined based on a first feature corresponding to the target to be cleaned in the first environmental image and a second feature corresponding to the target to be cleaned in the second environmental image. Then, the trajectory association between the first environmental image and the second environmental image is determined based on the feature association degree and the first IoU. For example, but not limited to, the trajectory association is obtained by performing weighted summation on the feature association degree and the first IoU. The first feature is used to re-identify an identity of the target to be cleaned in the first environmental image, for example, but not limited to, an appearance feature of the target to be cleaned in the first environmental image. The second feature is used to re-identify an identity of the target to be cleaned in the second environmental image, for example, but not limited to, an appearance feature of the target to be cleaned in the second environmental image. The first feature and the second feature may be, but are not limited to, both extracted via a pre-trained target detection model. The non-rigid target indicates a target to be cleaned that undergoes non-rigid deformation, for example, but not limited to, a leaf, a garbage bag, etc.

As the network depth in the target detection model deepens, one pixel point in a high-level feature map mapped back to an original image represents a relatively large region. For example, for a convolutional network that has undergone 5 times of downsampling with a stride of 2, one 1*1 pixel point of its highest-level feature information mapped back to the original image represents a 32*32 region. For a small target, this 32*32 region may be much larger than a true scale of the relatively small target, that is, features on the high-level feature map are unable to accurately describe features of the small target. Thus, for the small target, regardless of whether the target undergoes rigid deformation, feature information of the target may not be used for trajectory association in the embodiments of the disclosure.

That is, in a case that the target to be cleaned is a small target, the trajectory association between the first environmental image and the second environmental image may be determined based on its first IoU and a first IoU coefficient corresponding to the first IoU, thus ensuring accuracy of trajectory association for the small target. The small target indicates a target to be cleaned with an imaging area in the first environmental image less than a preset value or a short side size less than a preset size. The first IoU coefficient is greater than or equal to 1.

Further, in order to avoid a problem that a small target originally having trajectory association is misjudged due to shaking of the image capture device or offset of the prediction region during a tracking movement process of the pool cleaning robot, and to improve a capability of the pool cleaning robot to track the small target to be cleaned underwater, the first IoU coefficient corresponding to the small target may be set to be greater than 1. For example, but not limited to, the first IoU coefficient may be directly determined based on a proportional relationship between a prediction area of the prediction region and a detection area of the detection region.

In some embodiments, the first IoU coefficient k may be: $k = max \left(\sqrt{\frac{{s}_{pred}}{{s}_{det}} ,}\sqrt{\frac{{s}_{det}}{{s}_{pred}}}\right) ;$
in which spred is a prediction area of the prediction region; and sdet is a detection area of the detection region.

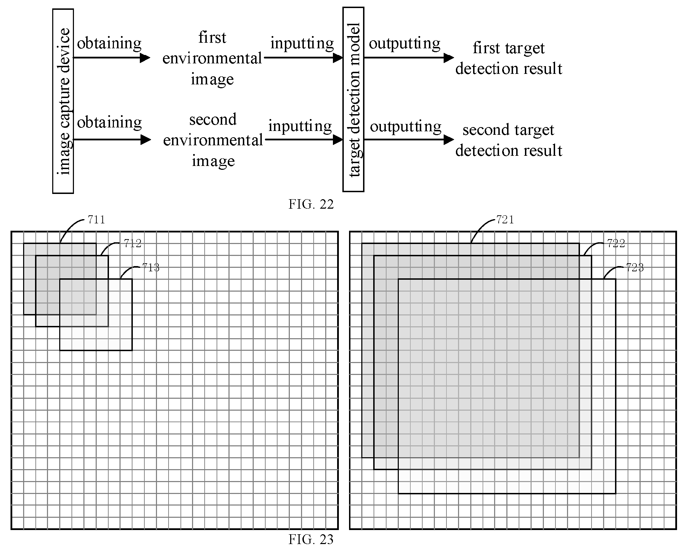

In some embodiments, as shown in FIG. 22, an implementation process of obtaining the first target detection result corresponding to the first environmental image and the second target detection result corresponding to the second environmental image within the visual detection range of the pool cleaning robot in the above 1801 may include: obtaining, by the image capture device, the first environmental image and the second environmental image within the visual detection range of the pool cleaning robot; inputting the first environmental image into a target detection model, and outputting the first target detection result corresponding to the first environmental image; and inputting the second environmental image into the target detection model, and outputting the second target detection result corresponding to the second environmental image. The target detection model is obtained by training based on a sample training set. The sample training set includes a plurality of target sample images with known sample cleaning targets corresponding to target true information.

Further, the target true information may include, but is not limited to, a category to which the sample cleaning target in the target sample image belongs, and a true position and a true area of a true region corresponding to the sample cleaning target. Before inputting the first environmental image into the target detection model and outputting the first target detection result corresponding to the first environmental image, the method further includes: obtaining the sample training set; generating a candidate region corresponding to the sample cleaning target based on the target sample image via an initial detection model; determining a target determination parameter corresponding to the target sample image based on a second IoU between the true region and the candidate region; and judging whether the target sample image is a positive target sample image based on the target determination parameter. In a case that the target sample image is a positive target sample image, it indicates that the candidate region generated by the initial detection model for the target sample image is close to the true region corresponding to the target sample image, and the detection accuracy is relatively high, then the target detection model is obtained by training the initial detection model based on the positive target sample images in the sample training set. The positive target sample image indicates a target sample image in the sample training set with a corresponding target determination parameter greater than a target determination threshold.

Currently, the division of positive and negative samples in most target detection models is determined by comparing an IoU between a candidate region generated by a network and a true region corresponding to a target with a pre-set threshold. This way of dividing positive and negative samples is not very friendly to small targets. For example, as shown in FIG. 23, an image space of 25*25 is illustrated. Each small square represents one pixel, the left part of the figure is a relatively small target with a scale of 6*6, and the right part of the figure is a relatively large target with a scale of 18*18. For the small target shown in the left part of FIG. 23, an intersection area of a true region 711 and a candidate region 712 is 25, and a union area is 47, thus a corresponding original IoU is 25/47 ≈ 0.53. When the candidate region 712 is shifted by two pixels to the right and downward, an intersection area of the true region 711 and a candidate region 713 is 9, and a union area is 63, and an IoU after shifting is 9/63 ≈ 0.14. For the relatively large target in the right part of FIG. 23, an initial IoU of a true region 721 and a candidate region 722 is 289/359 ≈ 0.81, and an IoU after shifting of the true region 721 and a candidate region 723 obtained by shifting the candidate region 722 by two pixels to the right and downward is 225/423 ≈ 0.53. Thus, when a slight jitter occurs in the position of the candidate region, an influence on the judgment of positive and negative samples for the small target is much greater than that for the relatively large sample. In a case that 0.5 is used as the target determination threshold for the positive and negative samples, in the above examples, when a slight shift occurs, the candidate region of the small target changes from an original positive sample to a negative sample, while the relatively large target still remains a positive sample. Thus, during a training process of the target detection model, in a case that the IoU between the candidate region and the true region is directly used as a judgment principle for the positive and negative samples, the target sample image corresponding to the small target is more likely to be judged as a negative sample, and features of the small target cannot be learned during the model training process, greatly affecting a detection effect of the target detection model on the relatively small target, and further causing the relatively small target to be more likely to be missed during a target detection process.

Based on the above, during the training process of the target detection model in the disclosure, when dividing the target sample image into the positive and negative samples, in a case that a true area of a true region of the sample cleaning target corresponding to the target sample image is less than a preset area, the sample cleaning target may be considered as the small target, and an IoU with an IoU coefficient is used as a basis for determining whether the target sample image corresponding to the small target is the positive target sample image, so as to enhance learning of features of the small target by the target detection model, thus improving a tracking effect of the pool cleaning robot on the small target.

In a case that the true area of the true region is less than the preset area, a second IoU coefficient corresponding to the second IoU may be first determined based on a ratio of a mean true area to the true area of the true region; and then, the target determination parameter corresponding to the target sample image is determined based on the second IoU and the second IoU coefficient corresponding to the second IoU. The mean true area indicates an average value of true areas of true regions of the sample cleaning targets corresponding to the target sample images in the sample training set. The second IoU coefficient is greater than 1.

In some embodiments, the second IoU coefficient may be, but is not limited to: $t = min \left(\sqrt{\frac{{s}_{mean}}{s}}\times IOU\left({b}_{i}^{gt}, {b}_{i}\right),m\times IOU\left({b}_{i}^{gt}, {b}_{i}\right)\right) ;$
in which t is the second IoU coefficient; *sₘₑₐₙ* is the mean true area; *s* is a true area of a true region *bᵢ^{gt}* of a sample cleaning target corresponding to an i-th target sample image in the sample training set; $IOU \left({b}_{i}^{gt}, {b}_{i}\right)$ is the second IoU between the true region ${b}_{i}^{gt}$ and the candidate region *bᵢ* corresponding to the i-th target sample image; and *m* is a second IoU coefficient threshold corresponding to the second IoU, for example, 2 or 3.

It may be understood from the above formula that, when the true area of the sample cleaning target is smaller, a weight coefficient of the corresponding second IoU is larger, thereby alleviating the effect of frame jitter on the small target during the division of the positive and negative samples, so that the target sample image corresponding to the small target is more likely to be divided as the positive target sample image for the training of the target detection model. At the same time, by using the second IoU coefficient threshold m to impose a constrained upper limit on an area influence factor, noise introduced into the network of the target detection model by features of an extremely small but highly inaccurate candidate region is limited, further improving a detection performance of the target detection model.

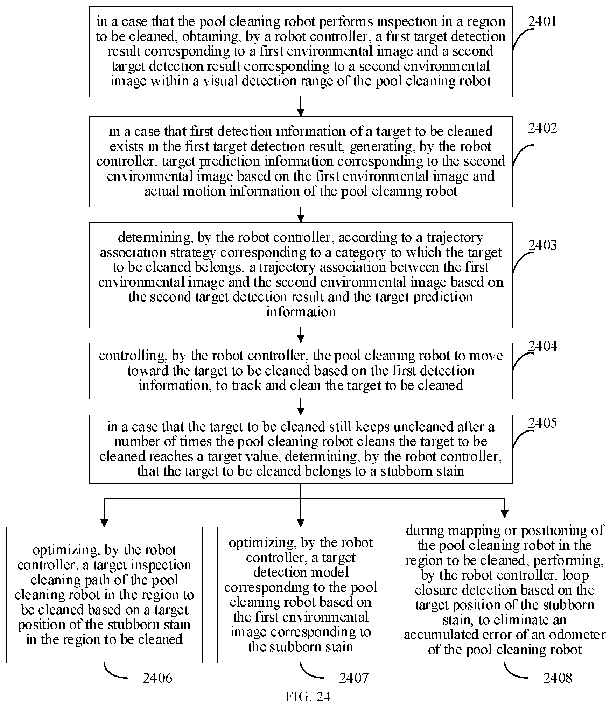

FIG. 24 is a flowchart illustrating another method provided in an embodiment of the disclosure. As shown in FIG. 24, the method includes the following steps.

At 2401, in a case that the pool cleaning robot performs inspection in a region to be cleaned, the robot controller obtains a first target detection result corresponding to a first environmental image and a second target detection result corresponding to a second environmental image within a visual detection range of the pool cleaning robot.

Step 2401 is the same as step 1801, and details are not repeated herein.

At 2402, in a case that first detection information of a target to be cleaned exists in the first target detection result, the robot controller generates target prediction information corresponding to the second environmental image based on the first environmental image and actual motion information of the pool cleaning robot.

Step 2402 is the same as step 1802, and details are not repeated herein.

At 2403, the robot controller determines, according to a trajectory association strategy corresponding to a category to which the target to be cleaned belongs, a trajectory association between the first environmental image and the second environmental image based on the second target detection result and the target prediction information.

Step 2403 is the same as step 1803, and details are not repeated herein.

Further, in a case that the first detection information of the target to be cleaned exists in the first target detection result, the method may further include the following steps.

At 2404, the robot controller controls the pool cleaning robot to move toward the target to be cleaned based on the first detection information, to track and clean the target to be cleaned.

The first detection information includes a relative position between the target to be cleaned and the pool cleaning robot. The relative position may be determined based on relative position information such as a coordinate, a direction and a size of the target to be cleaned in the first environmental image. In a case that the first detection information of the target to be cleaned exists in the first target detection result, it may be considered that the target to be cleaned exists in the first environmental image, and the pool cleaning robot may be controlled to move to a target position where the target to be cleaned is located based on the relative position, to track and clean the target to be cleaned.

Optionally, in a case that a plurality of targets to be cleaned exist in the first environmental image, cleaning priorities corresponding to the plurality of targets to be cleaned may be first determined based on feature information corresponding to each of the plurality of targets to be cleaned and a weight corresponding to the feature information. The feature information may include, but is not limited to, at least one of: a category, an area, a color of the target to be cleaned, a relative position between the target to be cleaned and the pool cleaning robot, etc. Then, the pool cleaning robot is controlled, based on the cleaning priorities corresponding to the plurality of targets to be cleaned, to sequentially move to target positions where the plurality of targets to be cleaned are located, to track and clean the plurality of targets to be cleaned.

Optionally, after the pool cleaning robot tracks and cleans the target to be cleaned, the method may further include the following steps.

In a case that the target to be cleaned remains uncleaned after the number of cleaning attempts by the pool cleaning robot reaches a target value, the robot controller determines that the target to be cleaned is a stubborn stain.

In a case that the target to be cleaned remains uncleaned after the number of cleaning attempts by the pool cleaning robot reaches the target value (for example, but not limited to, 3 times, 5 times, etc.), it indicates that the pool cleaning robot currently does not have the ability to clean the target to be cleaned, and it may be determined that the target to be cleaned belongs to a stubborn stain for the pool cleaning robot. The number of times the pool cleaning robot cleans the target to be cleaned may be, but is not limited to, determined based on a number of times the pool cleaning robot passes through the target position where the target to be cleaned is located.

Optionally, after determining that the target to be cleaned belongs to the stubborn stain, the method may further include, but is not limited to, one or more of the following steps.

At 2406, the robot controller optimizes a target inspection cleaning path of the pool cleaning robot in the region to be cleaned based on a target position of the stubborn stain in the region to be cleaned.

The target inspection cleaning path indicates an initial inspection cleaning path when the pool cleaning robot performs inspection in the region to be cleaned. After determining the stubborn stain existing in the region to be cleaned, the target inspection cleaning path of the pool cleaning robot in the region to be cleaned may be promptly optimized based on the target position of the stubborn stain in the region to be cleaned, so that when the pool cleaning robot performs inspection in the region to be cleaned next time, the pool cleaning robot is able to, based on the optimized target inspection cleaning path, bypass the target position where the stubborn stain is located in advance or directly skip (pass through) the target position where the stubborn stain is located, without stopping at the target position for cleaning, thus avoiding the pool cleaning robot performing ineffective cleaning on the stubborn stain in the region to be cleaned, and improving an inspection cleaning efficiency of the pool cleaning robot in the region to be cleaned.

At 2407, the robot controller optimizes a target detection model corresponding to the pool cleaning robot based on the first environmental image corresponding to the stubborn stain.

After determining that the target to be cleaned belongs to the stubborn stain, the target detection model corresponding to the pool cleaning robot may also be updated and optimized based on the first environmental image corresponding to the stubborn stain, so that the pool cleaning robot has an ability to detect the stubborn stain, further improving an inspection cleaning effect of the pool cleaning robot.

At 2408, during mapping or positioning of the pool cleaning robot in the region to be cleaned, the robot controller performs loop closure detection based on the target position of the stubborn stain, to eliminate an accumulated error of an odometer of the pool cleaning robot.

After determining the stubborn stain existing in the region to be cleaned, during mapping or positioning of the pool cleaning robot in the region to be cleaned, loop closure detection may further be performed based on the target position of the stubborn stain, to eliminate the accumulated error of the odometer of the pool cleaning robot. That is, when the pool cleaning robot moves to the target position where the stubborn stain is located again, the accumulated error of the odometer of the pool cleaning robot is cleared, thus ensuring consistency and closure of a map after mapping the region to be cleaned, and improving a mapping and positioning effect of the region to be cleaned.

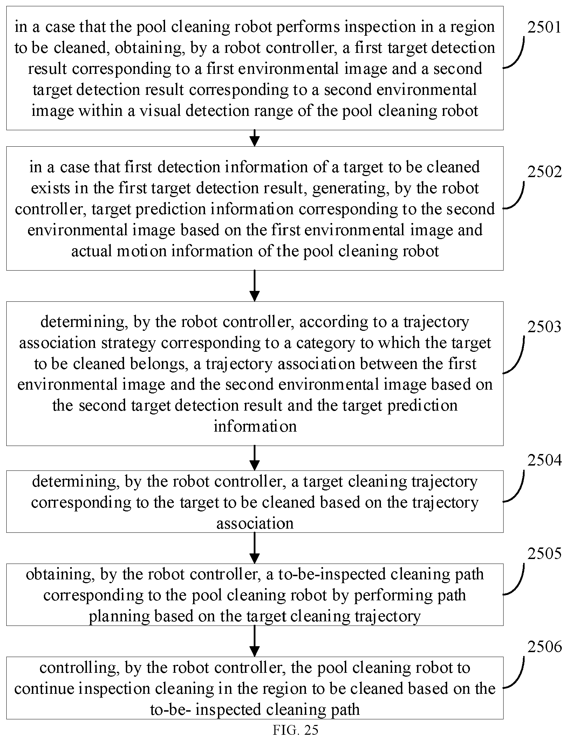

FIG. 25 is a flowchart illustrating another method provided in an embodiment of the disclosure. As shown in FIG. 25, the method includes the following steps.

At 2501, in a case that the pool cleaning robot performs inspection in a region to be cleaned, the robot controller obtains a first target detection result corresponding to a first environmental image and a second target detection result corresponding to a second environmental image within a visual detection range of the pool cleaning robot.

Step 2501 is the same as step 1801, and details are not repeated herein.

At 2502, in a case that first detection information of a target to be cleaned exists in the first target detection result, the robot controller generates target prediction information corresponding to the second environmental image based on the first environmental image and actual motion information of the pool cleaning robot.

Step 2502 is the same as step 1802, and details are not repeated herein.

At 2503, the robot controller determines, according to a trajectory association strategy corresponding to a category to which the target to be cleaned belongs, a trajectory association between the first environmental image and the second environmental image based on the second target detection result and the target prediction information.

Step 2503 is the same as step 1803, and details are not repeated herein.

At 2504, the robot controller determines a target cleaning trajectory corresponding to the target to be cleaned based on the trajectory association.

After determining the trajectory association between the first environmental image and the second environmental image, in a case that the trajectory association is greater than or equal to an association threshold, that is, it is determined that the trajectory association exists between the first environmental image and the second environmental image, trajectories of the pool cleaning robot corresponding to the first environmental image and the second environmental image may be connected together as the target cleaning trajectory corresponding to the target to be cleaned.

Optionally, in a case that the trajectory association is less than the association threshold, that is, it is determined that no trajectory association exists between the first environmental image and the second environmental image, a trajectory of the pool cleaning robot corresponding to the first environmental image may be used as the target cleaning trajectory corresponding to the target to be cleaned, that is, a target position corresponding to the target to be cleaned in the first environmental image is an ending point of its corresponding target cleaning trajectory, and a trajectory of the pool cleaning robot corresponding to the second environmental image is used as a new target cleaning trajectory or an inspection trajectory.

At 2505, the robot controller obtains a to-be-inspected cleaning path corresponding to the pool cleaning robot by performing path planning based on the target cleaning trajectory.

After determining the target cleaning trajectory corresponding to the target to be cleaned currently tracked by the pool cleaning robot in the first environmental image, the to-be-inspected cleaning path corresponding to the pool cleaning robot may be obtained by performing path planning on a subsequent path of the pool cleaning robot based on the target cleaning trajectory, thus avoiding the pool cleaning robot repeatedly inspecting the same position subsequently, and improving an inspection efficiency of the pool cleaning robot in the region to be cleaned.

Optionally, after determining the target cleaning trajectory corresponding to the target to be cleaned based on the trajectory association at step 2504, and before obtaining the to-be-inspected cleaning path corresponding to the pool cleaning robot by performing path planning based on the target cleaning trajectory at step 2505, in a case that a computing power of the robot controller of the pool cleaning robot is greater than a preset computing power, the target cleaning trajectory may be optimized via an interpolation algorithm, that is, a trajectory position of a missing intermediate frame is predicted based on trajectory positions of previous and subsequent frames in the target cleaning trajectory. The to-be-inspected cleaning path corresponding to the pool cleaning robot is obtained by performing path planning based on the optimized target cleaning trajectory and the inspected cleaning path of the pool cleaning robot, thus avoiding a problem that, because the pool cleaning robot assumes different postures or the target to be cleaned is blocked by other objects, there is no corresponding detection information in the environmental image for a certain frame or two frames in the target cleaning trajectory, causing interruption of the trajectory of the frame. This improves continuity of the target cleaning trajectory, and further ensures an inspection efficiency and an inspection effect of the pool cleaning robot in the region to be cleaned.

At 2506, the robot controller controls the pool cleaning robot to continue inspection cleaning in the region to be cleaned based on the to-be-inspected cleaning path.

After obtaining the to-be-inspected cleaning path corresponding to the pool cleaning robot, the pool cleaning robot may further be controlled to continue inspection cleaning in the region to be cleaned based on the to-be-inspected cleaning path, thus ensuring that the pool cleaning robot is able to efficiently complete inspection cleaning of the entire region to be cleaned.

In some embodiments, after determining, according to the trajectory association strategy corresponding to the category to which the target to be cleaned belongs, the trajectory association between the first environmental image and the second environmental image based on the second target detection result and the target prediction information, the method further includes the following.

In a case that the trajectory association is less than an association threshold and the target to be cleaned belongs to a designated category (for example, but not limited to, a small stone, a leaf, etc.), when trajectory associations between N frames of the environmental images corresponding to the designated category following the first environmental image and the first environmental image are all less than the association threshold, that is, N frames of trajectories corresponding to the designated category repeatedly appear but none of them are able to be associated with a previous trajectory, it may be considered that a new target to be cleaned of the same category corresponding to the designated category appears, for example, a new stone, leaf, or the like appears, and cleaning trajectories corresponding to the N frames of the environmental images may be initialized as new cleaning trajectories corresponding to the pool cleaning robot, in which N is a positive integer greater than 1, for example, but not limited to, 10, 8, etc. The target to be cleaned belonging to the designated category indicates a target to be cleaned that the pool cleaning robot is able to clean in one cleaning operation.

For a target to be cleaned of a non-designated category (for example, but not limited to, a small stone pile, a sand pile, etc.), the pool cleaning robot passes over and cleans a surface of the target to be cleaned during a cleaning process. Due to limitations of a width and an effective cleaning region of the pool cleaning robot itself, the pool cleaning robot may be unable to clean the entire target to be cleaned of the non-designated category such as the small stone pile or the sand pile in one cleaning operation. After cleaning, a situation where a large target to be cleaned of the non-designated category becomes a plurality of small targets to be cleaned may occur. For example, but not limited to, a large sand pile may become two or more small sand piles, a large stone pile may become two or more small stone piles, etc. For this situation, in a case that the trajectory association is less than the association threshold and the target to be cleaned belongs to the non-designated category, that is, when the second environmental image following the first environmental image of the pool cleaning robot is already unable to be trajectory-associated with the first environmental image, it may be considered that the pool cleaning robot has already cleaned the target to be cleaned in the first environmental image, and there is no need to perform trajectory association calculation between the environmental image after the second environmental image and the first environmental image. When a target to be cleaned appears in a third environmental image, for example, when a small target to be cleaned that has not been cleaned and corresponds to the target to be cleaned of the non-designated category in the first environmental image is subsequently detected, it may be regarded as a new target to be cleaned for target tracking and cleaning, that is, a new cleaning trajectory corresponding to the pool cleaning robot may be directly determined based on a cleaning position corresponding to the third environmental image, and the third environmental image is an environmental image collected following the first environmental image. The target to be cleaned belonging to the non-designated category indicates a target to be cleaned that the pool cleaning robot is unable to clean in one cleaning operation.

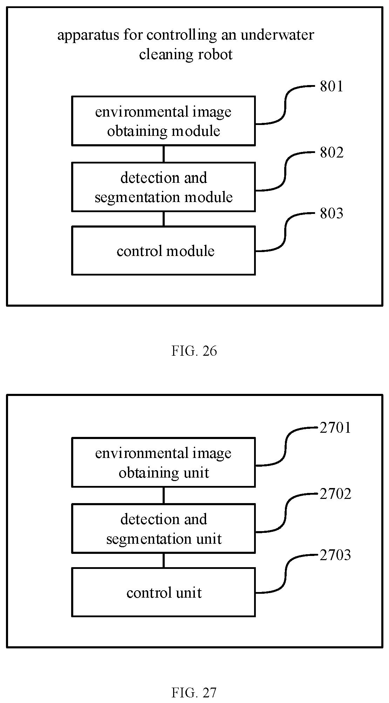

FIG. 26 is a block diagram illustrating an apparatus for utilizing visual information provided in an embodiment of the disclosure. Referring to FIG. 26, the apparatus includes: a visual information obtaining module 2601 and a utilizing module 2602.

The visual information obtaining module 2601 is configured to obtain visual information collected by a pool cleaning robot.

The utilizing module 2602 is configured to control the pool cleaning robot based on the visual information, or process the visual information in a preset manner.

Referring to FIG. 27, the visual information obtaining module 2601 includes an environmental image obtaining unit 2701, and the utilizing module 2602 includes a detection and segmentation unit 2702 and a control unit 2703.

The environmental image obtaining unit 2701 is configured to, in a case that the pool cleaning robot performs a cleaning task in a pool, obtain an environmental image around the pool cleaning robot.

The detection and segmentation unit 2702 is configured to input the environmental image into an image recognition model, and obtain a first recognition box and a second recognition box and a position type of a position where the pool cleaning robot is located on the environmental image, by performing object detection and semantic segmentation on the environmental image via the image recognition model, in which the first recognition box indicates a position of a target to be cleaned on the environmental image, and the second recognition box indicates a position of an obstacle on the environmental image.

The control unit 2703 is configured to control the pool cleaning robot to clean the target to be cleaned based on the environmental image, the first recognition box, the second recognition box and the position type of the position where the pool cleaning robot is located.

The detection and segmentation unit 2702 is configured to obtain an environmental image feature of the environmental image by performing feature extraction on the environmental image via the image recognition model; obtain the first recognition box and the second recognition box by performing bounding box detection on the environmental image based on the environmental image feature via the image recognition model; and obtain the position type of the position where the pool cleaning robot is located by classifying a plurality of pixel points in the environmental image based on the environmental image feature via the image recognition model.

The detection and segmentation unit 2702 is configured to control a first candidate recognition box and a second candidate recognition box to slide on the environmental image, in which the first candidate recognition box is configured to recognize the target to be cleaned, and the second candidate recognition box is configured to recognize the obstacle; and determine the first recognition box and the second recognition box based on a plurality of first sub-image features corresponding to a plurality of first image regions in the environmental image feature and a plurality of second sub-image features corresponding to a plurality of second image regions in the environmental image feature; in which the first image region is an image region covered by the first candidate recognition box on the environmental image, and the second image region is an image region covered by the second candidate recognition box on the environmental image.

The detection and segmentation unit 2702 is configured to: for any first image region among the plurality of first image regions, perform full connection and normalization on a first sub-image feature corresponding to the first image region, and determine whether the first image region includes the target to be cleaned; in a case that the first image region includes the target to be cleaned, determine a bounding box of the first image region as a first reference recognition box; and determine the first recognition box based on a plurality of first reference recognition boxes on the environmental image; and for any second image region among the plurality of second image regions, perform full connection and normalization on a second sub-image feature corresponding to the second image region, and determine whether the second image region includes the obstacle; in a case that the second image region includes the obstacle, determine a bounding box of the second image region as a second reference recognition box; and determine the second recognition box based on a plurality of second reference recognition boxes on the environmental image.

The detection and segmentation unit 2702 is configured to obtain an upsampled feature map of the environmental image by upsampling the environmental image feature for a plurality of times, in which a size of the upsampled feature map is the same as a size of the environmental image, the upsampled feature map includes a plurality of channels, the plurality of channels correspond to a plurality of candidate position types, and a pixel value of a pixel point in each of the channels represents a confidence level that a corresponding pixel point in the environmental image is at a candidate position type corresponding to the channel; determine, based on the upsampled feature map, a position type corresponding to each pixel point in the environmental image; and determine the position type of the position where the pool cleaning robot is located based on the position types corresponding to the plurality of pixel points.

The detection and segmentation unit 2702 is configured to determine, based on the position types corresponding to the plurality of pixel points, a position type of an area ahead of the pool cleaning robot in a traveling direction; and determine the position type of the area ahead of the pool cleaning robot in the traveling direction as the position type of the position where the pool cleaning robot is located.

The control unit 2703 is configured to determine a cleaning mode corresponding to the position type of the position where the pool cleaning robot is located; obtain a target movement trajectory by performing path planning for the pool cleaning robot based on the environmental image, the first recognition box, the second recognition box and the cleaning mode; and control the pool cleaning robot to move along the target movement trajectory in the cleaning mode and to clean the target to be cleaned in the pool.

The control unit 2703 is configured to determine a preset cleaning trajectory corresponding to the cleaning mode; determine a reference movement trajectory based on positions of the first recognition box and the second recognition box in the environmental image, an obstacle type of the obstacle in the second recognition box, and a size of the second recognition box; and obtain the target movement trajectory by combining the preset cleaning trajectory and the reference movement trajectory.

The control unit 2703 is configured to determine whether the pool cleaning robot needs to avoid the obstacle based on the obstacle type of the obstacle, the position of the second recognition box in the environmental image, and the size of the second recognition box; in a case that the pool cleaning robot needs to avoid the obstacle, determine a first movement direction and a first movement distance of the pool cleaning robot based on a relative positional relationship of the first recognition box to a center point of the environmental image and a relative positional relationship of the second recognition box to the center point of the environmental image; and generate the reference movement trajectory based on the first movement direction and the first movement distance of the pool cleaning robot.

The control unit 2703 is further configured to: in a case that the pool cleaning robot does not need to avoid the obstacle, determine a second movement direction and a second movement distance of the pool cleaning robot based on the relative positional relationship between the first recognition box and the center point of the environmental image; and generate the reference movement trajectory based on the second movement direction and the second movement distance of the pool cleaning robot.

The control unit 2703 is further configured to determine an obstacle clearance level of the pool cleaning robot, in which the obstacle clearance level is positively correlated with an obstacle clearance capability.

The control unit 2703 is configured to, in a case that the obstacle clearance level of the pool cleaning robot is less than or equal to a preset level, obtain a contour line of the obstacle in the environmental image by performing segmentation on the obstacle in the second recognition box; and obtain the target movement trajectory by performing path planning for the pool cleaning robot based on the environmental image, the first recognition box, the contour line of the obstacle and the cleaning mode.

The control unit 2703 is configured to: in a case that the position where the pool cleaning robot is located is a pool wall of the pool, determine the cleaning mode of the pool cleaning robot as a roller cleaning mode; in a case that the position where the pool cleaning robot is located is a pool bottom of the pool, determine the cleaning mode of the pool cleaning robot as a water pump suction mode; in a case that the position where the pool cleaning robot is located is a boundary between the pool bottom and the pool wall of the pool, determine the cleaning mode of the pool cleaning robot as an edge-following cleaning mode; in a case that the position where the pool cleaning robot is located is on a step of the pool, determine the cleaning mode of the pool cleaning robot as a basic cleaning mode or a deep cleaning mode, in which in the basic cleaning mode, a step tread is cleaned and a step riser is not cleaned, and in the deep cleaning mode, the step tread and the step riser are cleaned.

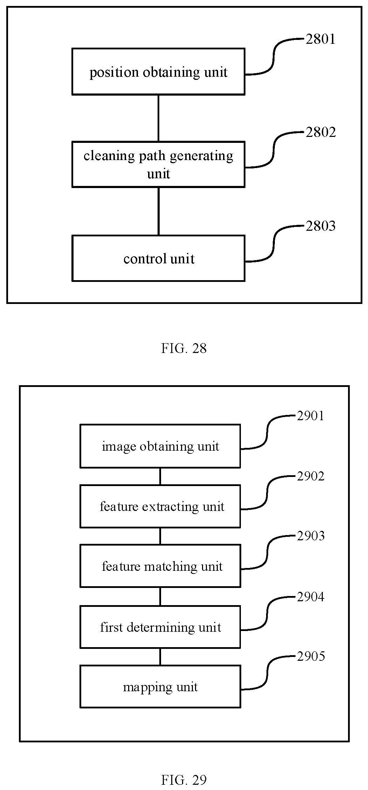

Referring to FIG. 28, the visual information obtaining module 2601 includes a position obtaining unit 2801, and the utilizing module 2602 includes a cleaning path generating unit 2802 and a control unit 2803.

The position obtaining unit 2801 is configured to obtain a position of the pool cleaning robot and a position of a target garbage to be cleaned around the pool cleaning robot.

The cleaning path generating unit 2802 is configured to generate a target cleaning path of the pool cleaning robot based on the position of the pool cleaning robot, the position of the target garbage and a target garbage type of the target garbage, in which the target cleaning path is a cleaning path used when cleaning the target garbage, and the target garbage type indicates a shape of the target garbage.

The control unit 2803 is configured to control the pool cleaning robot to clean the target garbage based on the target cleaning path.

In a possible implementation, the target cleaning path is a first cleaning path, a second cleaning path or a third cleaning path, and the cleaning path generating unit 2802 is configured to: in a case that the target garbage type is a point type, determine a center position of a center point of the target garbage based on the position of the target garbage; obtain the first cleaning path by performing path planning between the position of the pool cleaning robot and the center position; in a case that the target garbage type is a line segment type, determine a line segment position of a line segment corresponding to the target garbage based on the position of the target garbage; generate the second cleaning path based on the position of the pool cleaning robot and the line segment position; in a case that the target garbage type is an area type, determine a region where the target garbage is located based on the position of the target garbage; and generate the third cleaning path based on the position of the pool cleaning robot and the region where the target garbage is located.

In a possible implementation, the cleaning path generating unit 2802 is configured to: determine a starting point position of the line segment corresponding to the target garbage from the line segment position; obtain a first initial cleaning path by performing path planning between the position of the pool cleaning robot and the starting point position; and obtain the second cleaning path by adding a second initial cleaning path of the line segment corresponding to the target garbage into the first initial cleaning path, in which the second initial cleaning path passes through a starting point and an ending point of the line segment corresponding to the target garbage.

In a possible implementation, the cleaning path generating unit 2802 is configured to: determine a vertex position of any vertex of the target garbage from the region where the target garbage is located; obtain a third initial cleaning path by performing path planning between the position of the pool cleaning robot and the vertex position; obtain a fourth initial cleaning path by performing path planning based on the region where the target garbage is located with the vertex position as a starting point, in which the fourth initial cleaning path covers the region where the target garbage is located; and obtain the third cleaning path by combining the third initial cleaning path and the fourth initial cleaning path.

In a possible implementation, the utilizing module 2602 further includes a target garbage determining unit, configured to: determine garbage types of a plurality of candidate garbages around the pool cleaning robot; determine a cleaning cost between the pool cleaning robot and each of the candidate garbages based on the position of the pool cleaning robot, and the garbage type, a position and a garbage area of each of the candidate garbages; and determine the target garbage from the plurality of candidate garbages based on the cleaning cost between the pool cleaning robot and each of the candidate garbages, in which the target garbage is a candidate garbage with a minimum cleaning cost.

In a possible implementation, the target garbage determining unit is configured to: determine a contour of each of the candidate garbages; determine a bounding rectangle of each of the candidate garbages based on the contour of each of the candidate garbages; and determine the garbage type of each of the candidate garbages based on size information of the bounding rectangle of each of the candidate garbages.

In a possible implementation, the target garbage determining unit is configured to: obtain an environmental image around the pool cleaning robot; obtain a BEV image corresponding to the environmental image by performing view transformation on the environmental image; and obtain the contour of each of the candidate garbages by performing object detection on the BEV image.

In a possible implementation, the target garbage determining unit is configured to: control the pool cleaning robot to rotate, and obtain a plurality of initial environmental images during the rotation; and obtain the environmental image around the pool cleaning robot by splicing the plurality of initial environmental images.

In a possible implementation, the size information includes a length and a width, and the target garbage determining unit is configured to: for any candidate garbage among the plurality of candidate garbages, in a case that both the length and the width of the bounding rectangle of the candidate garbage are less than or equal to a preset threshold, determine the garbage type of the candidate garbage as a point type, in which the preset threshold is associated with a single cleaning width of the pool cleaning robot; in a case that the length of the bounding rectangle of the candidate garbage is less than or equal to the preset threshold and the width is greater than the preset threshold, or the width of the bounding rectangle of the candidate garbage is less than or equal to the preset threshold and the length is greater than the preset threshold, determine the garbage type of the candidate garbage as a line segment type; and in a case that both the length and the width of the bounding rectangle of the candidate garbage are greater than the preset threshold, determine the garbage type of the candidate garbage as an area type.

In a possible implementation, the target garbage determining unit is further configured to determine an area of the bounding rectangle of each of the candidate garbages as the garbage area of each of the candidate garbages; or determine an area enclosed by the contour of each of the candidate garbages as the garbage area of each of the candidate garbages.

In a possible implementation, the target garbage determining unit is configured to determine a distance between the pool cleaning robot and each of the candidate garbages based on the position of the pool cleaning robot, and the garbage type and the position of each of the candidate garbages; and determine the cleaning cost between the pool cleaning robot and each of the candidate garbages based on the distance between the pool cleaning robot and each of the candidate garbages and the garbage area of each of the candidate garbages.

In a possible implementation, the target garbage determining unit is configured to: for any candidate garbage among the plurality of candidate garbages, in a case that the garbage type of the candidate garbage is a point type, determine a center position of a center point of the candidate garbage based on the position of the candidate garbage; determine a distance between the position of the pool cleaning robot and the center position as the distance between the pool cleaning robot and the candidate garbage; in a case that the garbage type of the candidate garbage is a line segment type, determine, based on the position of the candidate garbage, midpoint positions of two short side midpoints of the bounding rectangle of the candidate garbage; determine the distance between the pool cleaning robot and the candidate garbage based on the position of the pool cleaning robot and the midpoint positions of the two short side midpoints; in a case that the garbage type of the candidate garbage is an area type, determine, based on the position of the candidate garbage, vertex positions of four vertices of the bounding rectangle of the candidate garbage; and determine the distance between the pool cleaning robot and the candidate garbage based on the position of the pool cleaning robot and the vertex positions of the four vertices.

In a possible implementation, the two short side midpoints include a first short side midpoint and a second short side midpoint, and the target garbage determining unit is configured to determine a first short side reference distance between the position of the pool cleaning robot and a midpoint position of the first short side midpoint; determine a second short side reference distance between the position of the pool cleaning robot and a midpoint position of the second short side midpoint; and determine a shorter one of the first short side reference distance and the second short side reference distance as the distance between the pool cleaning robot and the candidate garbage.

In a possible implementation, the four vertices include a first vertex, a second vertex, a third vertex and a fourth vertex, and the target garbage determining unit is configured to determine a first vertex reference distance between the position of the pool cleaning robot and a vertex position of the first vertex; determine a second vertex reference distance between the position of the pool cleaning robot and a vertex position of the second vertex; determine a third vertex reference distance between the position of the pool cleaning robot and a vertex position of the third vertex; determine a fourth vertex reference distance between the position of the pool cleaning robot and a vertex position of the fourth vertex; and determine the shortest of the first vertex reference distance, the second vertex reference distance, the third vertex reference distance and the fourth vertex reference distance as the distance between the pool cleaning robot and the candidate garbage.

In a possible implementation, the target garbage determining unit is configured to obtain a distance cost between the pool cleaning robot and each of the candidate garbages by multiplying a distance cost weight with the distance between the pool cleaning robot and each of the candidate garbages; obtain an area cost of each of the candidate garbages by dividing an area cost weight by the garbage area of each of the candidate garbages; and obtain the cleaning cost between the pool cleaning robot and each of the candidate garbages by adding the distance cost and the area cost corresponding to each of the candidate garbages.

In a possible implementation, the control unit 2803 is further configured to: in a case that movement along the target cleaning path is completed, determine whether a candidate garbage to be cleaned exists; in a case that the candidate garbage to be cleaned exists, re-determine a target garbage from the candidate garbage to be cleaned and re-determine a target cleaning path; and control the pool cleaning robot to clean the target garbage re-determined based on the target cleaning path re-determined.

In a possible implementation, the control unit 2803 is further configured to: in a case that no candidate garbage to be cleaned exists, obtain a target recharging path by performing path planning based on the position of the pool cleaning robot and a position of a base station; and control the pool cleaning robot to dock with the base station based on the target recharging path.

Referring to FIG. 29, the visual information obtaining module 2601 includes an image obtaining unit 2901, and the utilizing module 2602 includes a feature extracting unit 2902, a feature matching unit 2903, a first determining unit 2904 and a mapping unit 2905.

The image obtaining unit 2901 is configured to obtain an environmental image collected by the pool cleaning robot.

The feature extracting unit 2902 is configured to obtain target structure information of a target space where the pool cleaning robot is located by performing feature extraction on the environmental image collected by the pool cleaning robot.

The feature matching unit 2903 is configured to obtain a corresponding target feature matching result by performing feature matching based on the target structure information of the target space corresponding to two adjacent frames of the environmental images.

The first determining unit 2904 is configured to determine target depth information of a target structure boundary point in the target structure information in the target space based on the target feature matching result and target collection position information corresponding to the pool cleaning robot, in which the target collection position information is comprehensively determined based on pieces of positioning information obtained by a plurality of sensors of the pool cleaning robot; and the target structure boundary point is a matched structure boundary point in the target structure information corresponding to each of the two adjacent frames of the environmental images.

The mapping unit 2905 is configured to construct a target environment map of the target space based on the target structure information and the target depth information corresponding to the target structure boundary point.

In a possible implementation, the feature extracting unit 2902 includes:
an extracting unit, configured to extract structure boundary information of the environmental image collected by the pool cleaning robot, in which the structure boundary information includes first position information corresponding to a structure boundary existing in the environmental image and second position information of a region enclosed by a contour of the structure boundary; and
a first determining unit, configured to determine the target structure information of the target space based on the structure boundary information.

In a possible implementation, the feature extracting unit 2902 is configured to:
perform segmentation and recognition respectively on target space constituent element information and target space auxiliary element information of the environmental image collected by the pool cleaning robot via a multi-task model; and obtain the target structure information of the target space where the pool cleaning robot is located.

In a possible implementation, the feature matching unit 2903 includes:
a collection position predicting unit, configured to predict, based on previous-frame collection position information of the pool cleaning robot corresponding to a previous frame of the environmental image among the two adjacent frames of the environmental images, predicted collection position information of the pool cleaning robot corresponding to a subsequent frame of the environmental image among the two adjacent frames of the environmental images;
a structure information predicting unit, configured to predict, based on the predicted collection position information and the target structure information of the previous frame of the environmental image, predicted structure information of the subsequent frame of the environmental image;
a structure information matching unit, configured to obtain a predicted structure matching range corresponding to the target structure information of the subsequent frame of the environmental image by matching the target structure information of the subsequent frame of the environmental image with the predicted structure information; and
a second determining unit, configured to determine matched target structure boundary points in the target structure information corresponding to each of the two adjacent frames of the environmental images based on geometric features of structure boundary points in the previous frame of the environmental image and geometric features of structure boundary points within the predicted structure matching range.

In a possible implementation, the plurality of sensors include a first sensor, a second sensor and an ultrasonic sensor, the first sensor is configured to collect the environmental image of the pool cleaning robot; the second sensor is configured to collect motion data of the pool cleaning robot; the second sensor includes at least one of: an inertial measurement unit, an encoder, or a flow meter; the ultrasonic sensor is configured to collect ultrasonic positioning data of the pool cleaning robot.

The utilizing module 2602 further includes:
an obtaining unit, configured to obtain two adjacent frames of the environmental images via the first sensor, obtain actual motion data of the pool cleaning robot via one or more of the second sensors, and obtain the ultrasonic positioning data of the pool cleaning robot via the ultrasonic sensor;
a second determining unit, configured to determine, based on the two adjacent frames of the environmental images and previous-frame collection position information corresponding to a previous frame of the environmental image among the two adjacent frames of the environmental images, first collection position information corresponding to a subsequent frame of the environmental image among the two adjacent frames of the environmental images, determine second collection position information corresponding to the subsequent frame of the environmental image based on the actual motion data, and determine third collection position information corresponding to the subsequent frame of the environmental image based on the ultrasonic positioning data; and
a third determining unit, configured to determine the target collection position information corresponding to the subsequent frame of the environmental image based on the first collection position information, the second collection position information and the third collection position information.

In a possible implementation, the utilizing module 2602 further includes:
a fourth determining unit, configured to determine a position loss corresponding to the subsequent frame of the environmental image based on the predicted collection position information, the first collection position information, the second collection position information and the third collection position information corresponding to the subsequent frame of the environmental image;
a fifth determining unit, configured to determine an image loss corresponding to the subsequent frame of the environmental image based on the predicted structure information and the target structure information corresponding to the subsequent frame of the environmental image; and
a correcting unit, configured to correct position drifts of the plurality of sensors based on the position loss and the image loss corresponding to the subsequent frame of the environmental image.

In a possible implementation, the utilizing module 2602 further includes:
a judging unit, configured to judge whether the ultrasonic positioning data satisfies a non-line-of-sight condition based on the subsequent frame of the environmental image, in which the non-line-of-sight condition indicates a situation where an occlusion exists in the subsequent frame of the environmental image and the ultrasonic positioning data exhibits an abnormal jump;
a sixth determining unit, configured to, in a case that the ultrasonic positioning data satisfies the non-line-of-sight condition, determine the target collection position information corresponding to the subsequent frame of the environmental image based on the first collection position information and the second collection position information; and
the third determining unit is configured to, in a case that the ultrasonic positioning data does not satisfy the non-line-of-sight condition, execute the step of determining the target collection position information corresponding to the subsequent frame of the environmental image based on the first collection position information, the second collection position information and the third collection position information.

In a possible implementation, the utilizing module 2602 further includes:
a counting unit, configured to count a number of target structure boundary points satisfying a preset constraint condition in the subsequent frame of the environmental image, and a total number of structure boundary points in the target structure information corresponding to the subsequent frame of the environmental image, in which the preset constraint condition is that matched target structure boundary points exist in at least two consecutive frames of the environmental image;
a seventh determining unit, configured to determine a visual constraint weight corresponding to the first sensor based on a ratio between the number of the target structure boundary points satisfying the preset constraint condition and the total number of the structure boundary points;
an eighth determining unit, configured to determine weights corresponding to the second sensor and the ultrasonic sensor respectively based on covariance matrices corresponding to the second sensor and the ultrasonic sensor;
a ninth determining unit, configured to determine a target weight ratio among the first sensor, the second sensor and the ultrasonic sensor based on the visual constraint weight corresponding to the first sensor, and the weights corresponding to the second sensor and the ultrasonic sensor; and
the third determining unit is configured to:
   obtain the target collection position information corresponding to the subsequent frame of the environmental image by fusing the first collection position information, the second collection position information and the third collection position information based on the target weight ratio.

In a possible implementation, the target feature matching result includes matched target structure boundary points in the two adjacent frames of the environmental images; and
the first determining unit 2904 is configured to:
estimate the target depth information of the target structure boundary point in the target space based on positions of the target structure boundary point in the two adjacent frames of the environmental images and the target collection position information corresponding to the pool cleaning robot.

In a possible implementation, the utilizing module 2602 further includes:
a moving unit, configured to move along a target mapping path; and
an image collecting unit, configured to collect the environmental image within a preset visual range at a preset frequency during the movement.

The mapping unit 2905 is configured to:
after completing the step of moving along the target mapping path, construct the target environment map of the target space based on pieces of target structure information corresponding to a plurality of environmental images on the target mapping path and pieces of the target depth information corresponding to the target structure boundary points in the plurality of environmental images.

In a possible implementation, the target structure information includes target space constituent element information and target space auxiliary element information in the target space; the target space constituent element information includes structure boundary information of constituent elements corresponding to the target space, the constituent elements include at least one of: a bottom surface, a wall surface, a step tread, or a step riser; the target space auxiliary element information includes structure boundary information of an auxiliary element corresponding to the target space, the auxiliary element includes at least one of the following auxiliary devices: a wall lamp, a floor lamp, a water inlet, or a water outlet.

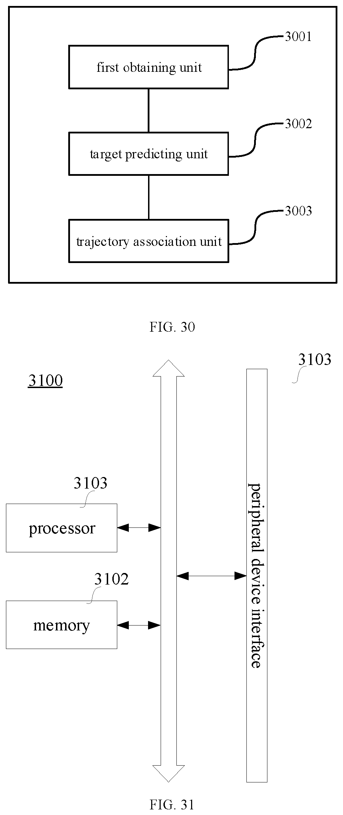

Referring to FIG. 30, the visual information obtaining module 2601 includes a first obtaining unit 3001, and the utilizing module 2602 includes a target predicting unit 3002 and a trajectory association unit 3003.

The first obtaining unit 3001 is configured to, in a case that the pool cleaning robot performs inspection in a region to be cleaned, obtain a first target detection result corresponding to a first environmental image and a second target detection result corresponding to a second environmental image within a visual detection range of the pool cleaning robot, in which the second environmental image is a next frame image of the first environmental image.

The target predicting unit 3002 is configured to, in a case that first detection information of a target to be cleaned exists in the first target detection result, generate target prediction information corresponding to the second environmental image based on the first environmental image and actual motion information of the pool cleaning robot.

The trajectory association unit 3003 is configured to determine, according to a trajectory association strategy corresponding to a category to which the target to be cleaned belongs, a trajectory association between the first environmental image and the second environmental image based on the second target detection result and the target prediction information.

In a possible implementation, the pool cleaning robot includes a motion sensor;
the utilizing module 2602 further includes:
an image registration estimation unit, configured to estimate first motion information of the pool cleaning robot within a target time period by image registration based on the first environmental image and the second environmental image, in which the target time period is a time period between a first collection time corresponding to the first environmental image and a second collection time corresponding to the second environmental image;
a second obtaining unit, configured to obtain second motion information of the pool cleaning robot within the target time period via the motion sensor; and
a fusion unit, configured to obtain the actual motion information corresponding to the pool cleaning robot by fusing the first motion information and the second motion information.

In a possible implementation, the target predicting unit 3002 includes:
a Kalman filtering unit, configured to generate initial prediction information corresponding to the second environmental image based on the first environmental image via a Kalman filter or a variant of the Kalman filter; and
a correcting unit, configured to obtain the target prediction information corresponding to the second environmental image by correcting the initial prediction information based on the actual motion information of the pool cleaning robot.

In a possible implementation, the second target detection result includes a detection region corresponding to the target to be cleaned in the second environmental image; the target prediction information includes a prediction region corresponding to the target to be cleaned in the second environmental image;
the trajectory association unit 3003 includes:
a calculating unit, configured to calculate a first IoU between the detection region and the prediction region;
a first determining unit, configured to, in a case that the target to be cleaned is a rigid target, determine the trajectory association between the first environmental image and the second environmental image based on the first IoU;
a second determining unit, configured to, in a case that the target to be cleaned is a non-rigid target, determine a feature association degree of the target to be cleaned between the first environmental image and the second environmental image based on a first feature corresponding to the target to be cleaned in the first environmental image and a second feature corresponding to the target to be cleaned in the second environmental image, and determine the trajectory association between the first environmental image and the second environmental image based on the feature association degree and the first IoU;
a third determining unit, configured to, in a case that the target to be cleaned is a small target, determine the trajectory association between the first environmental image and the second environmental image based on the first IoU and a first IoU coefficient corresponding to the first IoU, in which the small target indicates a target to be cleaned with an imaging area in the first environmental image less than a preset value or a short side size less than a preset size, and the first IoU coefficient is greater than or equal to 1.

In a possible implementation, the utilizing module 2602 further includes:
a first determining unit, configured to, in a case that the target to be cleaned is the small target, determine the first IoU coefficient corresponding to the first IoU based on a proportional relationship between a prediction area of the prediction region and a detection area of the detection region.

In a possible implementation, the pool cleaning robot includes an image capture device;
the first obtaining unit 3001 includes:
an obtaining unit, configured to obtain, via the image capture device, the first environmental image and the second environmental image within the visual detection range of the pool cleaning robot;
a first target detection unit, configured to input the first environmental image into a target detection model, and output the first target detection result corresponding to the first environmental image, in which the target detection model is obtained by training based on a sample training set; the sample training set includes a plurality of target sample images for known sample cleaning targets corresponding to target true information; and
a second target detection unit, configured to input the second environmental image into the target detection model, and output the second target detection result corresponding to the second environmental image.

In a possible implementation, the target true information includes a category to which the sample cleaning target in the target sample image belongs, and a true position and a true area of a true region corresponding to the sample cleaning target;
the utilizing module 2602 further includes:
a third obtaining unit, configured to obtain the sample training set;
a candidate region generating unit, configured to generate a candidate region corresponding to the sample cleaning target based on the target sample image via an initial detection model;
a second determining unit, configured to determine a target determination parameter corresponding to the target sample image based on a second IoU between the true region and the candidate region;
a judging unit, configured to judge whether the target sample image is a positive target sample image based on the target determination parameter, in which the positive target sample image indicates a target sample image in the sample training set with the target determination parameter greater than a target determination threshold; and
a training unit, configured to, in a case that the target sample image is the positive target sample image, obtain the target detection model by training the initial detection model based on the positive target sample images in the sample training set.

In a possible implementation, the second determining unit includes:
a fourth determining unit, configured to, in a case that the true area of the true region is less than a preset area, determine a second IoU coefficient corresponding to the second IoU based on a ratio of a mean true area to the true area of the true region, in which the mean true area indicates an average value of true areas of true regions of the sample cleaning targets corresponding to the target sample images in the sample training set; the second IoU coefficient is greater than 1; and
a fifth determining unit, configured to determine the target determination parameter corresponding to the target sample image based on the second IoU and the second IoU coefficient corresponding to the second IoU.

In a possible implementation, the second IoU coefficient is: $t = min \left(\sqrt{\frac{{s}_{mean}}{s}}\times IOU\left({b}_{i}^{gt}, {b}_{i}\right),m\times IOU\left({b}_{i}^{gt}, {b}_{i}\right)\right) ;$
in which t is the second IoU coefficient; *sₘₑₐₙ* is the mean true area; *s* is a true area of a true region *bᵢ^{gt}* of a sample cleaning target corresponding to an i-th target sample image in the sample training set; $IOU \left({b}_{i}^{gt}, {b}_{i}\right)$ is the second IoU between the true region ${b}_{i}^{gt}$ and the candidate region *bᵢ* corresponding to the i-th target sample image; and *m* is a second IoU coefficient threshold corresponding to the second IoU.

In a possible implementation, in a case that the first detection information of the target to be cleaned exists in the first target detection result, the utilizing module 2602 further includes:
a first control unit, configured to control the pool cleaning robot to move toward the target to be cleaned based on the first detection information, to track and clean the target to be cleaned.

In a possible implementation, the utilizing module 2602 further includes:
a third determining unit, configured to, in a case that the target to be cleaned remains uncleaned after the number of cleaning attempts by the pool cleaning robot reaches a target value, determine that the target to be cleaned is a stubborn stain;
a path optimizing unit, configured to optimize a target inspection cleaning path of the pool cleaning robot in the region to be cleaned based on a target position of the stubborn stain in the region to be cleaned; and/or
a model optimizing unit, configured to optimize a target detection model corresponding to the pool cleaning robot based on the first environmental image corresponding to the stubborn stain; and/or
an odometer optimizing unit, configured to, during mapping or positioning of the pool cleaning robot in the region to be cleaned, perform loop closure detection based on the target position of the stubborn stain, to eliminate an accumulated error of an odometer of the pool cleaning robot.

In a possible implementation, the utilizing module 2602 further includes:
a fourth determining unit, configured to determine a target cleaning trajectory corresponding to the target to be cleaned based on the trajectory association;
a path planning unit, configured to obtain a to-be-inspected cleaning path corresponding to the pool cleaning robot by performing path planning based on the target cleaning trajectory; and
a second control unit, configured to control the pool cleaning robot to continue inspection cleaning in the region to be cleaned based on the to-be-inspected cleaning path.

In a possible implementation, the utilizing module 2602 further includes:
a trajectory optimizing unit, configured to, in a case that a computing power of the pool cleaning robot is greater than a preset computing power, optimize the target cleaning trajectory via an interpolation algorithm; and
the path planning unit is specifically configured to:
obtain the to-be-inspected cleaning path corresponding to the pool cleaning robot by performing path planning based on the optimized target cleaning trajectory and the inspected cleaning path of the pool cleaning robot.

In a possible implementation, the utilizing module 2602 further includes:
a first trajectory initializing unit, configured to, in a case that the trajectory association is less than an association threshold and the target to be cleaned belongs to a designated category, when trajectory associations between N frames of the environmental images corresponding to the designated category following the first environmental image and the first environmental image are all less than the association threshold, initialize cleaning trajectories corresponding to the N frames of the environmental images as new cleaning trajectories corresponding to the pool cleaning robot, in which N is a positive integer greater than 1;
a second trajectory initializing unit, configured to, in a case that the trajectory association is less than the association threshold and the target to be cleaned belongs to a non-designated category, when a target to be cleaned appears in a third environmental image, determine a new cleaning trajectory corresponding to the pool cleaning robot based on a cleaning position corresponding to the third environmental image, in which the third environmental image is an environmental image collected following the first environmental image; and the target to be cleaned belonging to the designated category indicates a target to be cleaned that is able to be cleaned by the pool cleaning robot in one cleaning operation.

It should be noted that: when the apparatus for utilizing visual information provided in the above embodiments utilizes visual information, only the division of the above functional modules is taken as an example for illustration. In practical applications, the above function allocation may be completed by different functional modules as needed, that is, the internal structure of the robot controller is divided into different functional modules, so as to complete all or part of the functions described above. In addition, the apparatus for utilizing visual information and the method for utilizing visual information provided in the above embodiments belong to the same inventive concept, and the specific implementation process may be referred to the method embodiments, and details are not repeated herein.

An embodiment of the disclosure further provides a pool cleaning robot. FIG. 31 is a block diagram illustrating a pool cleaning robot provided in an embodiment of the disclosure. Generally, the pool cleaning robot includes a robot controller 3100, and the robot controller includes one or more processors 3101 and one or more memories 3102.

The processor 3101 may include one or more processing cores, such as a 4-core processor, an 8-core processor, etc. The processor 3101 may be implemented in at least one hardware form of digital signal processing (DSP), field-programmable gate array (FPGA), or programmable logic array (PLA). The processor 3101 may also include a main processor and a coprocessor. The main processor is a processor for processing data in an awake state, also referred to as a central processing unit (CPU). The coprocessor is a low-power processor for processing data in a standby state. In some embodiments, the processor 3101 may be integrated with a graphics processing unit (GPU), and the GPU is responsible for rendering and drawing content to be displayed on a display screen. In some embodiments, the processor 3101 may further include an artificial intelligence (AI) processor, and the AI processor is configured to process computing operations related to machine learning.

The memory 3102 may include one or more computer-readable storage media, and the computer-readable storage medium may be non-transitory. The memory 3102 may further include a highspeed random access memory and a non-volatile memory, such as one or more disk storage devices and flash memory storage devices. In some embodiments, the non-transitory computer-readable storage medium in the memory 3102 is configured to store at least one computer program, and the at least one computer program is configured to be executed by the processor 3101 to implement the method for utilizing visual information provided in the method embodiments of the disclosure.

In some embodiments, the robot controller 3100 may optionally further include: a peripheral device interface 3103 and at least one peripheral device. The processor 3101, the memory 3102 and the peripheral device interface 3103 may be connected via a bus or a signal line. Each peripheral device may be connected to the peripheral device interface 3103 via a bus, a signal line or a circuit board.

A person skilled in the art may understand that the structure shown in FIG. 31 does not constitute a limitation on the robot controller 3100, and the robot controller may include more or fewer components than illustrated, or combine some components, or adopt a different component arrangement.

In an exemplary embodiment, a computer-readable storage medium is further provided, for example, a memory including a computer program, and the computer program may be executed by a processor to complete the method for utilizing visual information in the above embodiments. For example, the computer-readable storage medium may be a read-only memory (ROM), a random access memory (RAM), a compact disc read-only memory (CD-ROM), a magnetic tape, a floppy disk, an optical data storage device, etc.

In an exemplary embodiment, a computer program product or a computer program is further provided. The computer program product or the computer program includes program codes, the program codes are stored in a computer-readable storage medium, a processor of a robot controller reads the program codes from the computer-readable storage medium, and the processor executes the program codes, causing the robot controller to execute the method for utilizing visual information described above.

In some embodiments, the computer program involved in the embodiments of the disclosure may be deployed to be executed on one robot controller, or on multiple robot controllers located at one location, or on multiple robot controllers distributed at multiple locations and interconnected via a communication network, and the plurality of robot controllers distributed at a plurality of locations and interconnected via the communication network may constitute a blockchain system.

A person of ordinary skill in the art may understand that all or part of the steps of the above embodiments may be implemented by hardware, or by a program instructing related hardware. The program may be stored in a computer-readable storage medium. The storage medium mentioned above may be a read-only memory, a magnetic disk or an optical disk, etc.

The above are only optional embodiments of the disclosure and are not intended to limit the disclosure. Any modifications, equivalent substitutions, improvements, etc. made within the spirit and principles of the disclosure shall be included within the protection scope of the disclosure.

## Claims

1. A method for utilizing visual information, comprising:
obtaining visual information collected by a pool cleaning robot; and
controlling the pool cleaning robot based on the visual information, or processing the visual information in a preset manner.

2. The method according to claim 1, wherein obtaining the visual information collected by the pool cleaning robot comprises:
in a case that the pool cleaning robot performs a cleaning task in a pool, obtaining an environmental image around the pool cleaning robot; and
wherein controlling the pool cleaning robot based on the visual information comprises:
inputting the environmental image into an image recognition model and obtaining a first recognition box and a second recognition box and a position type of a position where the pool cleaning robot is located on the environmental image, by performing object detection and semantic segmentation on the environmental image via the image recognition model, wherein the first recognition box indicates a position of a target to be cleaned on the environmental image, and the second recognition box indicates a position of an obstacle on the environmental image; and
controlling the pool cleaning robot to clean the target to be cleaned based on the environmental image, the first recognition box, the second recognition box and the position type of the position where the pool cleaning robot is located.

3. The method according to claim 2, wherein obtaining the first recognition box and the second recognition box and the position type of the position where the pool cleaning robot is located on the environmental image, by performing the object detection and the semantic segmentation on the environmental image via the image recognition model comprises:
obtaining an environmental image feature of the environmental image by performing feature extraction on the environmental image via the image recognition model;
obtaining the first recognition box and the second recognition box by performing bounding box detection on the environmental image based on the environmental image feature via the image recognition model; and
obtaining the position type of the position where the pool cleaning robot is located by classifying a plurality of pixel points in the environmental image based on the environmental image feature via the image recognition model.

4. The method according to claim 3, wherein obtaining the first recognition box and the second recognition box by performing the bounding box detection on the environmental image based on the environmental image feature comprises:
controlling a first candidate recognition box and a second candidate recognition box to slide on the environmental image, wherein the first candidate recognition box is configured to recognize the target to be cleaned, and the second candidate recognition box is configured to recognize the obstacle; and
determining the first recognition box and the second recognition box based on a plurality of first sub-image features corresponding to a plurality of first image regions in the environmental image feature and a plurality of second sub-image features corresponding to a plurality of second image regions in the environmental image feature;
wherein the first image region is an image region covered by the first candidate recognition box on the environmental image, and the second image region is an image region covered by the second candidate recognition box on the environmental image.

5. The method according to claim 4, wherein determining the first recognition box and the second recognition box based on the plurality of first sub-image features corresponding to the plurality of first image regions in the environmental image feature and the plurality of second sub-image features corresponding to the plurality of second image regions in the environmental image feature comprises:
for any first image region among the plurality of first image regions, performing full connection and normalization on the first sub-image feature corresponding to the first image region, and determining whether the first image region comprises the target to be cleaned; in a case that the first image region comprises the target to be cleaned, determining a bounding box of the first image region as a first reference recognition box; and determining the first recognition box based on the plurality of first reference recognition boxes on the environmental image; and
for any second image region among the plurality of second image regions, performing full connection and normalization on the second sub-image feature corresponding to the second image region, and determining whether the second image region comprises the obstacle; in a case that the second image region comprises the obstacle, determining a bounding box of the second image region as a second reference recognition box; and determining the second recognition box based on the plurality of second reference recognition boxes on the environmental image.

6. The method according to claim 3, wherein obtaining the position type of the position where the pool cleaning robot is located by classifying the plurality of pixel points in the environmental image based on the environmental image feature comprises:
obtaining an upsampled feature map of the environmental image by upsampling the environmental image feature for a plurality of times, wherein a size of the upsampled feature map is the same as a size of the environmental image, the upsampled feature map comprises a plurality of channels, the plurality of channels correspond to a plurality of candidate position types, and a pixel value of a pixel point in each of the channels represents a confidence level that a corresponding pixel point in the environmental image is at a candidate position corresponding to the channel;
determining, based on the upsampled feature map, a position type corresponding to each pixel point in the environmental image; and
determining the position type of the position where the pool cleaning robot is located based on the position types corresponding to the plurality of pixel points.

7. The method according to claim 6, wherein determining the position type of the position where the pool cleaning robot is located based on the position types corresponding to the plurality of pixel points comprises:
determining, based on the position types corresponding to the plurality of pixel points, a position type of an area ahead of the pool cleaning robot in a traveling direction; and
determining the position type of the area ahead of the pool cleaning robot in the traveling direction as the position type of the position where the pool cleaning robot is located.

8. The method according to claim 2, wherein controlling the pool cleaning robot to clean the target to be cleaned based on the environmental image, the first recognition box, the second recognition box and the position type of the position where the pool cleaning robot is located comprises:
determining a cleaning mode corresponding to the position type of the position where the pool cleaning robot is located;
obtaining a target movement trajectory by performing path planning for the pool cleaning robot based on the environmental image, the first recognition box, the second recognition box and the cleaning mode; and
controlling the pool cleaning robot to move along the target movement trajectory in the cleaning mode and to clean the target to be cleaned in the pool.

9. The method according to claim 8, wherein obtaining the target movement trajectory by performing the path planning for the pool cleaning robot based on the environmental image, the first recognition box, the second recognition box and the cleaning mode comprises:
determining a preset cleaning trajectory corresponding to the cleaning mode;
determining a reference movement trajectory based on positions of the first recognition box and the second recognition box in the environmental image, an obstacle type of the obstacle in the second recognition box, and a size of the second recognition box; and
obtaining the target movement trajectory by combining the preset cleaning trajectory and the reference movement trajectory.

10. The method according to claim 9, wherein determining the reference movement trajectory based on the positions of the first recognition box and the second recognition box in the environmental image, the obstacle type of the obstacle in the second recognition box, and the size of the second recognition box comprises:
determining whether the pool cleaning robot needs to avoid the obstacle based on the obstacle type of the obstacle, the position of the second recognition box in the environmental image, and the size of the second recognition box;
in a case that the pool cleaning robot needs to avoid the obstacle, determining a first movement direction and a first movement distance of the pool cleaning robot based on a relative positional relationship of the first recognition box to a center point of the environmental image and a relative positional relationship of the second recognition box to the center point of the environmental image; and
generating the reference movement trajectory based on the first movement direction and the first movement distance of the pool cleaning robot.

11. The method according to claim 10, further comprising:
in a case that the pool cleaning robot does not need to avoid the obstacle, determining a second movement direction and a second movement distance of the pool cleaning robot based on the relative positional relationship between the first recognition box and the center point of the environmental image; and
generating the reference movement trajectory based on the second movement direction and the second movement distance of the pool cleaning robot.

12. The method according to claim 8, wherein before obtaining the target movement trajectory by performing the path planning for the pool cleaning robot based on the environmental image, the first recognition box, the second recognition box and the cleaning mode, the method further comprises:
determining an obstacle clearance level of the pool cleaning robot, wherein the obstacle clearance level is positively correlated with an obstacle clearance capability; and
wherein obtaining the target movement trajectory by performing the path planning for the pool cleaning robot based on the environmental image, the first recognition box, the second recognition box and the cleaning mode comprises:
in a case that the obstacle clearance level of the pool cleaning robot is less than or equal to a preset level, obtaining a contour line of the obstacle in the environmental image by performing segmentation on the obstacle in the second recognition box; and
obtaining the target movement trajectory by performing the path planning for the pool cleaning robot based on the environmental image, the first recognition box, the contour line of the obstacle and the cleaning mode.

13. The method according to claim 8, wherein determining the cleaning mode corresponding to the position type of the position where the pool cleaning robot is located comprises:
in a case that the position where the pool cleaning robot is located is a pool wall of the pool, determining the cleaning mode of the pool cleaning robot as a roller cleaning mode;
in a case that the position where the pool cleaning robot is located is a pool bottom of the pool, determining the cleaning mode of the pool cleaning robot as a water pump suction mode;
in a case that the position where the pool cleaning robot is located is a boundary between the pool bottom and the pool wall of the pool, determining the cleaning mode of the pool cleaning robot as an edge-following cleaning mode;
in a case that the position where the pool cleaning robot is located is on a step of the pool, determining the cleaning mode of the pool cleaning robot as a basic cleaning mode or a deep cleaning mode, wherein in the basic cleaning mode, a step tread is cleaned and a step riser is not cleaned, and in the deep cleaning mode, the step tread and the step riser are cleaned.

14. The method according to claim 1, wherein obtaining the visual information collected by the pool cleaning robot comprises:
obtaining a position of the pool cleaning robot and a position of a target garbage to be cleaned around the pool cleaning robot; and
wherein controlling the pool cleaning robot based on the visual information comprises:
generating a target cleaning path of the pool cleaning robot based on the position of the pool cleaning robot, the position of the target garbage and a target garbage type of the target garbage, wherein the target cleaning path is a cleaning path used when cleaning the target garbage, and the target garbage type indicates a shape of the target garbage; and
controlling the pool cleaning robot to clean the target garbage based on the target cleaning path.

15. The method according to claim 14, wherein the target cleaning path is a first cleaning path, a second cleaning path or a third cleaning path, and generating the target cleaning path of the pool cleaning robot based on the position of the pool cleaning robot, the position of the target garbage and the target garbage type of the target garbage comprises:
in a case that the target garbage type is a point type, determining a center position of a center point of the target garbage based on the position of the target garbage; and obtaining the first cleaning path by performing path planning between the position of the pool cleaning robot and the center position;
in a case that the target garbage type is a line segment type, determining a line segment position of a line segment corresponding to the target garbage based on the position of the target garbage; and generating the second cleaning path based on the position of the pool cleaning robot and the line segment position; and
in a case that the target garbage type is an area type, determining a region where the target garbage is located based on the position of the target garbage; and generating the third cleaning path based on the position of the pool cleaning robot and the region where the target garbage is located.

16. The method according to claim 15, wherein generating the second cleaning path based on the position of the pool cleaning robot and the line segment position comprises:
determining a starting point position of the line segment corresponding to the target garbage from the line segment position;
obtaining a first initial cleaning path by performing path planning between the position of the pool cleaning robot and the starting point position; and
obtaining the second cleaning path by adding a second initial cleaning path of the line segment corresponding to the target garbage into the first initial cleaning path, wherein the second initial cleaning path passes through a starting point and an ending point of the line segment corresponding to the target garbage.

17. The method according to claim 15, wherein generating the third cleaning path based on the position of the pool cleaning robot and the region where the target garbage is located comprises:
determining a vertex position of any vertex of the target garbage from the region where the target garbage is located;
obtaining a third initial cleaning path by performing path planning between the position of the pool cleaning robot and the vertex position;
obtaining a fourth initial cleaning path by performing path planning based on the region where the target garbage is located with the vertex position as a starting point, wherein the fourth initial cleaning path covers the region where the target garbage is located; and
obtaining the third cleaning path by combining the third initial cleaning path and the fourth initial cleaning path.

18. The method according to claim 14, wherein before obtaining the position of the pool cleaning robot and the position of the target garbage to be cleaned around the pool cleaning robot, the method further comprises:
determining garbage types of a plurality of candidate garbages around the pool cleaning robot;
determining a cleaning cost between the pool cleaning robot and each of the candidate garbages based on the position of the pool cleaning robot, and the garbage type, a position and a garbage area of each of the candidate garbages; and
determining the target garbage from the plurality of candidate garbages based on the cleaning cost between the pool cleaning robot and each of the candidate garbages, wherein the target garbage is a candidate garbage with a minimum cleaning cost.

19. The method according to claim 18, wherein determining the garbage types of the plurality of candidate garbages around the pool cleaning robot comprises:
determining a contour of each of the candidate garbages;
determining a bounding rectangle of each of the candidate garbages based on the contour of each of the candidate garbages; and
determining the garbage type of each of the candidate garbages based on size information of the bounding rectangle of each of the candidate garbages.

20. The method according to claim 19, wherein obtaining the contour of each of the candidate garbages comprises:
obtaining an environmental image around the pool cleaning robot;
obtaining a bird's eye view (BEV) image corresponding to the environmental image by performing view transformation on the environmental image; and
obtaining the contour of each of the candidate garbages by performing object detection on the BEV image.

21. The method according to claim 20, wherein obtaining the environmental image around the pool cleaning robot comprises:
controlling the pool cleaning robot to rotate, and obtaining a plurality of initial environmental images during the rotation; and
obtaining the environmental image around the pool cleaning robot by splicing the plurality of initial environmental images.

22. The method according to claim 19, wherein the size information comprises a length and a width, and determining the garbage type of each of the candidate garbages based on the size information of the bounding rectangle of each of the candidate garbages comprises:
for any candidate garbage among the plurality of candidate garbages,
in a case that both the length and the width of the bounding rectangle of the candidate garbage are less than or equal to a preset threshold, determining the garbage type of the candidate garbage as a point type, wherein the preset threshold is associated with a single cleaning width of the pool cleaning robot;
in a case that the length of the bounding rectangle of the candidate garbage is less than or equal to the preset threshold and the width is greater than the preset threshold, or the width of the bounding rectangle of the candidate garbage is less than or equal to the preset threshold and the length is greater than the preset threshold, determining the garbage type of the candidate garbage as a line segment type; and
in a case that both the length and the width of the bounding rectangle of the candidate garbage are greater than the preset threshold, determining the garbage type of the candidate garbage as an area type.

23. The method according to claim 19, wherein a method for obtaining the garbage area of each of the candidate garbages comprises:
determining an area of the bounding rectangle of each of the candidate garbages as the garbage area of each of the candidate garbages; or
determining an area enclosed by the contour of each of the candidate garbages as the garbage area of each of the candidate garbages.

24. The method according to claim 18, wherein determining the cleaning cost between the pool cleaning robot and each of the candidate garbages based on the position of the pool cleaning robot, and the garbage type, the position and the garbage area of each of the candidate garbages comprises:
determining a distance between the pool cleaning robot and each of the candidate garbages based on the position of the pool cleaning robot, and the garbage type and the position of each of the candidate garbages; and
determining the cleaning cost between the pool cleaning robot and each of the candidate garbages based on the distance between the pool cleaning robot and each of the candidate garbages and the garbage area of each of the candidate garbages.

25. The method according to claim 24, wherein determining the distance between the pool cleaning robot and each of the candidate garbages based on the position of the pool cleaning robot, and the garbage type and the position of each of the candidate garbages comprises:
for any candidate garbage among the plurality of candidate garbages,
in a case that the garbage type of the candidate garbage is a point type, determining a center position of a center point of the candidate garbage based on the position of the candidate garbage; and determining a distance between the position of the pool cleaning robot and the center position as the distance between the pool cleaning robot and the candidate garbage;
in a case that the garbage type of the candidate garbage is a line segment type, determining, based on the position of the candidate garbage, midpoint positions of two short side midpoints of the bounding rectangle of the candidate garbage; and determining the distance between the pool cleaning robot and the candidate garbage based on the position of the pool cleaning robot and the midpoint positions of the two short side midpoints; and
in a case that the garbage type of the candidate garbage is an area type, determining, based on the position of the candidate garbage, vertex positions of four vertices of the bounding rectangle of the candidate garbage; and determining the distance between the pool cleaning robot and the candidate garbage based on the position of the pool cleaning robot and the vertex positions of the four vertices.

26. The method according to claim 25, wherein the two short side midpoints comprise a first short side midpoint and a second short side midpoint, and determining the distance between the pool cleaning robot and the candidate garbage based on the position of the pool cleaning robot and the midpoint positions of the two short side midpoints comprises:
determining a first short side reference distance between the position of the pool cleaning robot and a midpoint position of the first short side midpoint;
determining a second short side reference distance between the position of the pool cleaning robot and a midpoint position of the second short side midpoint; and
determining a shorter one of the first short side reference distance and the second short side reference distance as the distance between the pool cleaning robot and the candidate garbage.

27. The method according to claim 25, wherein the four vertices comprise a first vertex, a second vertex, a third vertex and a fourth vertex, and determining the distance between the pool cleaning robot and the candidate garbage based on the position of the pool cleaning robot and the vertex positions of the four vertices comprises:
determining a first vertex reference distance between the position of the pool cleaning robot and a vertex position of the first vertex;
determining a second vertex reference distance between the position of the pool cleaning robot and a vertex position of the second vertex;
determining a third vertex reference distance between the position of the pool cleaning robot and a vertex position of the third vertex;
determining a fourth vertex reference distance between the position of the pool cleaning robot and a vertex position of the fourth vertex; and
determining the shortest of the first vertex reference distance, the second vertex reference distance, the third vertex reference distance and the fourth vertex reference distance as the distance between the pool cleaning robot and the candidate garbage.

28. The method according to claim 24, wherein determining the cleaning cost between the pool cleaning robot and each of the candidate garbages based on the distance between the pool cleaning robot and each of the candidate garbages and the garbage area of each of the candidate garbages comprises:
obtaining a distance cost between the pool cleaning robot and each of the candidate garbages by multiplying a distance cost weight with the distance between the pool cleaning robot and each of the candidate garbages;
obtaining an area cost of each of the candidate garbages by dividing an area cost weight by the garbage area of each of the candidate garbages; and
obtaining the cleaning cost between the pool cleaning robot and each of the candidate garbages by adding the distance cost and the area cost corresponding to each of the candidate garbages.

29. The method according to claim 14, wherein after controlling the pool cleaning robot to clean the target garbage based on the target cleaning path, the method further comprises:
in a case that movement along the target cleaning path is completed, determining whether a candidate garbage to be cleaned exists;
in a case that the candidate garbage to be cleaned exists, re-determining a target garbage from the candidate garbage to be cleaned and re-determining a target cleaning path; and
controlling the pool cleaning robot to clean the target garbage re-determined based on the target cleaning path re-determined.

30. The method according to claim 29, further comprising:
in a case that no candidate garbage to be cleaned exists, obtaining a target recharging path by performing path planning based on the position of the pool cleaning robot and a position of a base station; and
controlling the pool cleaning robot to dock with the base station based on the target recharging path.

31. The method according to claim 1, wherein obtaining the visual information collected by the pool cleaning robot comprises:
obtaining an environmental image collected by the pool cleaning robot; and
wherein processing the visual information in the preset manner comprises:
obtaining target structure information of a target space where the pool cleaning robot is located by performing feature extraction on the environmental image collected by the pool cleaning robot;
obtaining a corresponding target feature matching result by performing feature matching based on the target structure information of the target space corresponding to two adjacent frames of the environmental images;
determining target depth information of a target structure boundary point in the target structure information in the target space based on the target feature matching result and target collection position information corresponding to the pool cleaning robot, wherein the target collection position information is comprehensively determined based on pieces of positioning information obtained by a plurality of sensors of the pool cleaning robot; and the target structure boundary point is a matched structure boundary point in the target structure information corresponding to each of the two adjacent frames of the environmental images; and
constructing a target environment map of the target space based on the target structure information and the target depth information corresponding to the target structure boundary point.

32. The method according to claim 31, wherein obtaining the target structure information of the target space where the pool cleaning robot is located by performing feature extraction on the environmental image collected by the pool cleaning robot comprises:
extracting structure boundary information of the environmental image collected by the pool cleaning robot, wherein the structure boundary information comprises first position information corresponding to a structure boundary existing in the environmental image and second position information of a region enclosed by a contour of the structure boundary; and
determining the target structure information of the target space based on the structure boundary information.

33. The method according to claim 31, wherein obtaining the target structure information of the target space where the pool cleaning robot is located by performing feature extraction on the environmental image collected by the pool cleaning robot comprises:
performing segmentation and recognition respectively on target space constituent element information and target space auxiliary element information of the environmental image collected by the pool cleaning robot via a multi-task model; and obtaining the target structure information of the target space where the pool cleaning robot is located.

34. The method according to claim 31, wherein obtaining the corresponding target feature matching result by performing feature matching based on the target structure information of the target space corresponding to the two adjacent frames of the environmental images comprises:
predicting, based on previous-frame collection position information of the pool cleaning robot corresponding to a previous frame of the environmental image among the two adjacent frames of the environmental images, predicted collection position information of the pool cleaning robot corresponding to a subsequent frame of the environmental image among the two adjacent frames of the environmental images;
predicting, based on the predicted collection position information and the target structure information of the previous frame of the environmental image, predicted structure information of the subsequent frame of the environmental image;
obtaining a predicted structure matching range corresponding to the target structure information of the subsequent frame of the environmental image by matching the target structure information of the subsequent frame of the environmental image with the predicted structure information; and
determining matched target structure boundary points in the target structure information corresponding to each of the two adjacent frames of the environmental images based on geometric features of structure boundary points in the previous frame of the environmental image and geometric features of structure boundary points within the predicted structure matching range.

35. The method according to claim 31, wherein the plurality of sensors comprise a first sensor, a second sensor and an ultrasonic sensor, the first sensor is configured to collect the environmental image of the pool cleaning robot, the second sensor is configured to collect motion data of the pool cleaning robot; the second sensor comprises at least one of: an inertial measurement unit, an encoder, or a flow meter; the ultrasonic sensor is configured to collect ultrasonic positioning data of the pool cleaning robot;
before determining the target depth information of the target structure boundary point in the target structure information in the target space based on the target feature matching result and the target collection position information corresponding to the pool cleaning robot, the method further comprises:
obtaining two adjacent frames of the environmental images by the first sensor, obtaining actual motion data of the pool cleaning robot by one or more of the second sensors, and obtaining the ultrasonic positioning data of the pool cleaning robot by the ultrasonic sensor;
determining, based on the two adjacent frames of the environmental images and previous-frame collection position information corresponding to a previous frame of the environmental image among the two adjacent frames of the environmental images, first collection position information corresponding to a subsequent frame of the environmental image among the two adjacent frames of the environmental images, determining second collection position information corresponding to the subsequent frame of the environmental image based on the actual motion data, and determining third collection position information corresponding to the subsequent frame of the environmental image based on the ultrasonic positioning data; and
determining the target collection position information corresponding to the subsequent frame of the environmental image based on the first collection position information, the second collection position information and the third collection position information.

36. The method according to claim 35, wherein after determining the target collection position information corresponding to the subsequent frame of the environmental image based on the first collection position information, the second collection position information and the third collection position information, the method further comprises:
determining a position loss corresponding to the subsequent frame of the environmental image based on the predicted collection position information, the first collection position information, the second collection position information and the third collection position information corresponding to the subsequent frame of the environmental image;
determining an image loss corresponding to the subsequent frame of the environmental image based on the predicted structure information and the target structure information corresponding to the subsequent frame of the environmental image; and
correcting position drifts of the plurality of sensors based on the position loss and the image loss corresponding to the subsequent frame of the environmental image.

37. The method according to claim 35, wherein before determining the target collection position information corresponding to the subsequent frame of the environmental image based on the first collection position information, the second collection position information and the third collection position information, the method further comprises:
judging whether the ultrasonic positioning data satisfies a non-line-of-sight condition based on the subsequent frame of the environmental image, wherein the non-line-of-sight condition indicates a situation where an occlusion exists in the subsequent frame of the environmental image and the ultrasonic positioning data exhibits an abnormal jump;
in a case that the ultrasonic positioning data satisfies the non-line-of-sight condition, determining the target collection position information corresponding to the subsequent frame of the environmental image based on the first collection position information and the second collection position information; and
in a case that the ultrasonic positioning data does not satisfy the non-line-of-sight condition, executing the step of determining the target collection position information corresponding to the subsequent frame of the environmental image based on the first collection position information, the second collection position information and the third collection position information.

38. The method according to claim 35, wherein before determining the target collection position information corresponding to the subsequent frame of the environmental image based on the first collection position information, the second collection position information and the third collection position information, the method further comprises:
counting a number of target structure boundary points satisfying a preset constraint condition in the subsequent frame of the environmental image, and a total number of structure boundary points in the target structure information corresponding to the subsequent frame of the environmental image, wherein the preset constraint condition is that matched target structure boundary points exist in at least two consecutive frames of the environmental image;
determining a visual constraint weight corresponding to the first sensor based on a ratio between the number of the target structure boundary points satisfying the preset constraint condition and the total number of the structure boundary points;
determining weights corresponding to the second sensor and the ultrasonic sensor respectively based on covariance matrices corresponding to the second sensor and the ultrasonic sensor;
determining a target weight ratio among the first sensor, the second sensor and the ultrasonic sensor based on the visual constraint weight corresponding to the first sensor, and the weights corresponding to the second sensor and the ultrasonic sensor; and
wherein determining the target collection position information corresponding to the subsequent frame of the environmental image based on the first collection position information, the second collection position information and the third collection position information comprises:
obtaining the target collection position information corresponding to the subsequent frame of the environmental image by fusing the first collection position information, the second collection position information and the third collection position information based on the target weight ratio.

39. The method according to claim 31, wherein the target feature matching result comprises matched target structure boundary points in the two adjacent frames of the environmental images; and
wherein determining the target depth information of the target structure boundary point in the target structure information in the target space based on the target feature matching result and the target collection position information corresponding to the pool cleaning robot comprises:
estimating the target depth information of the target structure boundary point in the target space based on positions of the target structure boundary point in the two adjacent frames of the environmental images and the target collection position information corresponding to the pool cleaning robot.

40. The method according to claim 31, wherein before constructing the target environment map of the target space based on the target structure information and the target depth information corresponding to the target structure boundary point, the method further comprises:
moving along a target mapping path, and collecting the environmental image within a preset visual range at a preset frequency during the movement; and
wherein constructing the target environment map of the target space based on the target structure information and the target depth information corresponding to the target structure boundary point comprises:
after completing the step of moving along the target mapping path, constructing the target environment map of the target space based on pieces of target structure information corresponding to a plurality of environmental images on the target mapping path and pieces of the target depth information corresponding to the target structure boundary points in the plurality of environmental images.

41. The method according to claim 31, wherein the target structure information comprises target space constituent element information and target space auxiliary element information in the target space; the target space constituent element information comprises structure boundary information of constituent elements corresponding to the target space, the constituent elements comprise at least one of: a bottom surface, a wall surface, a step tread, or a step riser; the target space auxiliary element information comprises structure boundary information of an auxiliary element corresponding to the target space, the auxiliary element comprises at least one of the following auxiliary devices: a wall lamp, a floor lamp, a water inlet, or a water outlet.

42. The method according to claim 1, wherein obtaining the visual information collected by the pool cleaning robot comprises:
in a case that the pool cleaning robot performs inspection in a region to be cleaned, obtaining a first target detection result corresponding to a first environmental image and a second target detection result corresponding to a second environmental image within a visual detection range of the pool cleaning robot, wherein the second environmental image is a next frame image of the first environmental image; and
wherein processing the visual information in the preset manner comprises:
in a case that first detection information of a target to be cleaned exists in the first target detection result, generating target prediction information corresponding to the second environmental image based on the first environmental image and actual motion information of the pool cleaning robot; and
determining, according to a trajectory association strategy corresponding to a category to which the target to be cleaned belongs, a trajectory association between the first environmental image and the second environmental image based on the second target detection result and the target prediction information.

43. The method according to claim 42, wherein the pool cleaning robot comprises a motion sensor;
before generating the target prediction information corresponding to the second environmental image based on the first environmental image and the actual motion information of the pool cleaning robot, the method further comprises:
estimating first motion information of the pool cleaning robot within a target time period by image registration based on the first environmental image and the second environmental image, wherein the target time period is a time period between a first collection time corresponding to the first environmental image and a second collection time corresponding to the second environmental image;
obtaining second motion information of the pool cleaning robot within the target time period by the motion sensor; and
obtaining the actual motion information corresponding to the pool cleaning robot by fusing the first motion information and the second motion information.

44. The method according to claim 42, wherein generating the target prediction information corresponding to the second environmental image based on the first environmental image and the actual motion information of the pool cleaning robot comprises:
generating initial prediction information corresponding to the second environmental image based on the first environmental image via a Kalman filter or a variant of the Kalman filter; and
obtaining the target prediction information corresponding to the second environmental image by correcting the initial prediction information based on the actual motion information of the pool cleaning robot.

45. The method according to claim 42, wherein the second target detection result comprises a detection region corresponding to the target to be cleaned in the second environmental image; the target prediction information comprises a prediction region corresponding to the target to be cleaned in the second environmental image;
wherein determining, according to the trajectory association strategy corresponding to the category to which the target to be cleaned belongs, the trajectory association between the first environmental image and the second environmental image based on the second target detection result and the target prediction information comprises:
calculating a first intersection over union (IoU) between the detection region and the prediction region;
in a case that the target to be cleaned is a rigid target, determining the trajectory association between the first environmental image and the second environmental image based on the first IoU;
in a case that the target to be cleaned is a non-rigid target, determining a feature association degree of the target to be cleaned between the first environmental image and the second environmental image based on a first feature corresponding to the target to be cleaned in the first environmental image and a second feature corresponding to the target to be cleaned in the second environmental image, and determining the trajectory association between the first environmental image and the second environmental image based on the feature association degree and the first IoU;
in a case that the target to be cleaned is a small target, determining the trajectory association between the first environmental image and the second environmental image based on the first IoU and a first IoU coefficient corresponding to the first IoU, wherein the small target indicates a target to be cleaned with an imaging area in the first environmental image less than a preset value or a short side size less than a preset size, and the first IoU coefficient is greater than or equal to 1.

46. The method according to claim 45, wherein before determining the trajectory association between the first environmental image and the second environmental image based on the first IoU and the first IoU coefficient corresponding to the first IoU, the method further comprises:
in a case that the target to be cleaned is the small target, determining the first IoU coefficient corresponding to the first IoU based on a proportional relationship between a prediction area of the prediction region and a detection area of the detection region.

47. The method according to claim 42, wherein the pool cleaning robot comprises an image capture device;
wherein obtaining the first target detection result corresponding to the first environmental image and the second target detection result corresponding to the second environmental image within the visual detection range of the pool cleaning robot comprises:
obtaining, by the image capture device, the first environmental image and the second environmental image within the visual detection range of the pool cleaning robot;
inputting the first environmental image into a target detection model, and outputting the first target detection result corresponding to the first environmental image, wherein the target detection model is obtained by training based on a sample training set; the sample training set comprises a plurality of target sample images for known sample cleaning targets corresponding to target true information; and
inputting the second environmental image into the target detection model, and outputting the second target detection result corresponding to the second environmental image.

48. The method according to claim 47, wherein the target true information comprises a category to which the sample cleaning target in the target sample image belongs, and a true position and a true area of a true region corresponding to the sample cleaning target;
before inputting the first environmental image into the target detection model and outputting the first target detection result corresponding to the first environmental image, the method further comprises:
obtaining the sample training set;
generating a candidate region corresponding to the sample cleaning target based on the target sample image via an initial detection model;
determining a target determination parameter corresponding to the target sample image based on a second intersection over union (IoU) between the true region and the candidate region;
judging whether the target sample image is a positive target sample image based on the target determination parameter, wherein the positive target sample image indicates a target sample image in the sample training set with the target determination parameter greater than a target determination threshold; and
in a case that the target sample image is the positive target sample image, obtaining the target detection model by training the initial detection model based on the positive target sample images in the sample training set.

49. The method according to claim 48, wherein determining the target determination parameter corresponding to the target sample image based on the second IoU between the true region and the candidate region comprises:
in a case that the true area of the true region is less than a preset area, determining a second IoU coefficient corresponding to the second IoU based on a ratio of a mean true area to the true area of the true region, wherein the mean true area indicates an average value of true areas of true regions of the sample cleaning targets corresponding to the target sample images in the sample training set; the second IoU coefficient is greater than 1; and
determining the target determination parameter corresponding to the target sample image based on the second IoU and the second IoU coefficient corresponding to the second IoU.

50. The method according to claim 49, wherein the second IoU coefficient is: $t = min \left(\sqrt{\frac{{s}_{mean}}{s}}\times IOU\left({b}_{i}^{gt}, {b}_{i}\right),m\times IOU\left({b}_{i}^{gt}, {b}_{i}\right)\right) ;$ wherein t is the second IoU coefficient; *sₘₑₐₙ* is the mean true area; *s* is a true area of a true region *bᵢ^{gt}* of a sample cleaning target corresponding to an i-th target sample image in the sample training set; $IOU \left({b}_{i}^{gt}, {b}_{i}\right)$ is the second IoU between the true region ${b}_{i}^{gt}$ and the candidate region *bᵢ* corresponding to the i-th target sample image; and *m* is a second IoU coefficient threshold corresponding to the second IoU.

51. The method according to claim 42, wherein in a case that the first detection information of the target to be cleaned exists in the first target detection result, the method further comprises:
controlling the pool cleaning robot to move toward the target to be cleaned based on the first detection information, to track and clean the target to be cleaned.

52. The method according to claim 51, wherein after tracking and cleaning the target to be cleaned, the method further comprises:
in a case that the target to be cleaned remains uncleaned after the number of cleaning attempts by the pool cleaning robot reaches a target value, determining that the target to be cleaned is a stubborn stain;
optimizing a target inspection cleaning path of the pool cleaning robot in the region to be cleaned based on a target position of the stubborn stain in the region to be cleaned; and/or optimizing a target detection model corresponding to the pool cleaning robot based on the first environmental image corresponding to the stubborn stain; and/or during mapping or positioning of the pool cleaning robot in the region to be cleaned, performing loop closure detection based on the target position of the stubborn stain, to eliminate an accumulated error of an odometer of the pool cleaning robot.

53. The method according to claim 42, wherein after determining, according to the trajectory association strategy corresponding to the category to which the target to be cleaned belongs, the trajectory association between the first environmental image and the second environmental image based on the second target detection result and the target prediction information, the method further comprises:
determining a target cleaning trajectory corresponding to the target to be cleaned based on the trajectory association;
obtaining a to-be-inspected cleaning path corresponding to the pool cleaning robot by performing path planning based on the target cleaning trajectory; and
controlling the pool cleaning robot to continue inspection cleaning in the region to be cleaned based on the to-be-inspected cleaning path.

54. The method according to claim 53, wherein after determining the target cleaning trajectory corresponding to the target to be cleaned based on the trajectory association, and before obtaining the to-be-inspected cleaning path corresponding to the pool cleaning robot by performing path planning based on the target cleaning trajectory, the method further comprises:
in a case that a computing power of the pool cleaning robot is greater than a preset computing power, optimizing the target cleaning trajectory via an interpolation algorithm; and
wherein obtaining the to-be-inspected cleaning path corresponding to the pool cleaning robot by performing path planning based on the target cleaning trajectory comprises:
obtaining the to-be-inspected cleaning path corresponding to the pool cleaning robot by performing path planning based on the optimized target cleaning trajectory and the inspected cleaning path of the pool cleaning robot.

55. The method according to claim 42, wherein after determining, according to the trajectory association strategy corresponding to the category to which the target to be cleaned belongs, the trajectory association between the first environmental image and the second environmental image based on the second target detection result and the target prediction information, the method further comprises:
in a case that the trajectory association is less than an association threshold and the target to be cleaned belongs to a designated category, when trajectory associations between N frames of the environmental image corresponding to the designated category following the first environmental image and the first environmental image are all less than the association threshold, initializing cleaning trajectories corresponding to the N frames of the environmental image as new cleaning trajectories corresponding to the pool cleaning robot, wherein N is a positive integer greater than 1;
in a case that the trajectory association is less than the association threshold and the target to be cleaned belongs to a non-designated category, when a target to be cleaned appears in a third environmental image, determining a new cleaning trajectory corresponding to the pool cleaning robot based on a cleaning position corresponding to the third environmental image, wherein the third environmental image is an environmental image collected following the first environmental image; and
the target to be cleaned belonging to the designated category indicates a target to be cleaned that is able to be cleaned by the pool cleaning robot in one cleaning operation.

56. An apparatus for utilizing visual information, comprising:
a visual information obtaining module, configured to obtain visual information collected by a pool cleaning robot; and
a utilizing module, configured to control the pool cleaning robot based on the visual information, or process the visual information in a preset manner.

57. A pool cleaning robot, comprising a robot controller, wherein the robot controller comprises one or more processors and one or more memories, the one or more memories store at least one computer program, the at least one computer program is loaded and executed by the one or more processors to implement the method according to any one of claims 1 to 55.
